# EUROPEAN PATENT SPECIFICATION

(11) **EP 1 577 583 B1**
(45) Date of publication and mention of the grant of the patent: **12.06.2013**
(21) Application number: 03768376.0
(22) Date of filing: 26.12.2003
(51) Int. Cl.: F16H 3/66

(54) **AUTOMATIC TRANSMISSION**
AUTOMATISCHES GETRIEBE
BOITE DE VITESSES AUTOMATIQUE

(30) Priority: 27.12.2002 JP 2002382531
(43) Date of publication of application: 21.09.2005
(73) Proprietor: AISIN AW CO., LTD., Anjo-shi Aichi 444-1192 (JP)
(72) Inventor: KAYAMA, Kazumichi, Anjo-shi, Aichi 444-1192 (JP); SUGIURA, Nobutada, Anjo-shi, Aichi 444-1192 (JP); YAMAGUCHI, Shundou, Anjo-shi, Aichi 444-1192 (JP); OZAKI, Kazuhisa, Anjo-shi, Aichi 444-1192 (JP); INAGAKI, Tomochika, Anjo-shi, Aichi 444-1192 (JP)
(74) Representative: Vossius & Partner
(86) International application number: PCT/JP2003/017069
(87) International publication number: WO 2004/061332

(56) References cited:
- EP-A2- 1 211 436
- JP-A- 2000 046 129
- JP-A- 2002 242 956
- US-A- 5 106 352
- US-A- 5 525 117
- US-A1- 2002 091 032
- US-A1- 2002 142 880
- US-B1- 6 176 802

## Description

### Technical Field

The present invention relates to an automatic transmission incorporated in a vehicle, and more specifically, it relates to the placement construction of an automatic transmission that can shift multiple speeds by being capable of input of reduced rotation to one of the rotation components of a planetary gear unit.

### Background Art

Generally, there is known an automatic transmission incorporated in a vehicle or the like which comprises a planetary gear unit with two rows of linked planetary gears, and planetary gears that can output the reduced rotation wherein the rotation speed of the input shaft is reduced (for example, see Japanese Unexamined Patent application Publication No. 4-125345 and Japanese Unexamined Patent application Publication No. 2000-274498). These achieve, for example, six forward speed levels and one reverse speed level, by being capable of input of reduced rotation from the planetary gear via a clutch to, for example, one rotation component of a planetary gear unit that has four rotation components.

Now, in recent years, multi-staging of automatic transmissions has been desired from the perspective of improved fuel efficiency, due to environmental problems and so forth. However, in general, multi-staging results in a larger automatic transmission due to the increased number of parts, but from the perspective of ability to mount on a vehicle, a compact automatic transmission is desired.

The above-described automatic transmission comprises two clutches for inputting the rotation of the input shaft into the rotation component of the planetary gear unit, and a planetary gear for outputting reduced rotation into the rotation component of the planetary gear unit; however, in the event that the two clutches or an oil pressure servo that controls the engaging of the clutches is configured between the planetary gear unit and the planetary gear, the unit for transmitting the reduced rotation of the planetary gear to the rotation component of the planetary gear unit becomes elongated in the axial direction.

An elongated member transmitting the reduced rotations means that the member transmitting a large torque is elongated, and providing an elongated member that can withstand such large torque requires providing a relatively thick material that is elongated, which prevents providing a compact automatic transmission. Further, the weight of such a unit would be heavier, and not only would a lightweight automatic transmission be prevented, but inertia (force of inertia) would increase, decreasing the controllability of the automatic transmission and the shock of speed change would occur more easily.

Further, for example, in order to engage or disengage the reduced rotation output to the planetary gear unit from the planetary gear, a clutch or brake must be provided. In the case that a clutch is provided, this clutch and the above-described two clutches, in other words three clutches, are necessary. In general, a clutch has a drum-shaped member (clutch drum) that transmits the input rotation to the friction plates, and therefore, with a problem such as relative rotation for example, supply of oil pressure to the oil chamber of the oil pressure servo of the clutch must be made from the mid-section of the automatic transmission.

However, if those three clutches are configured on one side in the axial direction of the planetary gear unit for example, oil lines for supplying oil pressure to three oil pressure servos are constructed in triplicate in the mid-section of the automatic transmission for example, and the configuration of the oil lines become complicated.

EP 12 11 436 A2, which is considered as being the closest prior art, relates to an automatic transmission with a planetary gear set. The transmission comprises a reduction planetary gear, an input shaft, first and third clutches and a second clutch which is able to engage/disengage for connecting the input shaft to a non-decelerated rotation input element.

US 5,106,352 A discloses a multispeed automatic transmission which includes two parallel gearsets and of constant-mesh gearwheels providing two fixed speed ratios. Further, the transmission includes a double planetary gearset, a first control brake and a second control brake.

Accordingly, the object of the present invention is to provide an automatic transmission that achieves multi-staging, and realizes reduction in size by placement configuration.

Further, another object of the present invention is to provide an automatic transmission wherein reduced rotation output means and a first clutch are configured on one side in the axial direction of the planetary gear unit, and the second clutch is configured on the other side in the axial direction of the planetary gear unit, so as to provide solutions to the above-mentioned problems.

### Disclosure of Invention

The present invention relates to an automatic transmission according to claims 1 and 2, where the dependent claims 2-27 define further preferred variants. In the following, the word "embodiment" does not necessarily concern claimed subject-matter.

Accordingly, the reduced rotation output means and planetary gear unit can be disposed closer to each other in comparison with a case wherein the first clutch and second clutch for example are configured between the reduced rotation output means and the planetary gear unit, while enabling realizing at least five speed levels forward and one speed level reverse, and the linking member for transmitting the reduced rotations can be made relatively short, thereby enabling forming the automatic transmission in a compact manner.

Further, because the linking member for transmitting the reduced rotation can be made relatively short, this can be more lightweight, and further, because the inertia (force of inertia) can be smaller, the controllability of the automatic transmission can be improved, and the occurrence of speed change shock can be reduced.

Further, for example in the case that the reduced rotation output means has a clutch, three clutches are configured, but compared to the case wherein the three clutches are configured on one side of the planetary gear unit, the construction of the oil lines supplying the oil pressure servos of those clutches is easier, and the manufacturing process can be simplified and the costs reduced.

The present invention according to Claim 3 is configured further comprising a linking member for linking the reduced rotation output means and the planetary gear unit, wherein the first clutch is configured on the inner circumference side of the linking member.

The present invention is configured with the reduced rotation output means further comprising an input rotation component for inputting rotations of the input shaft at all times, a fixing component for fixing rotations at all times, a speed reduction planetary gear that has a reduced rotation component that rotates at the reduced rotation, and a third clutch that can link the linking member between the reduced rotation component and the first rotation component in a manner capable of disengaging; wherein the reduced rotation is transmitted to the first rotation component by the third clutch engaging.

The present invention according to Claim 4 has the first clutch configured on the inner circumference side of the third clutch.

Accordingly, the third clutch, which must transmit a relatively large torque to transmit the reduced rotation, can be configured on the outer circumference side, and this third clutch and the oil pressure servo thereof can have a larger diameter. Particularly, the pressure area of the oil chamber of the oil pressure servo can be increased, and the capacity for torque transmission of this third clutch can be increased. However, by configuring the first clutch, which can have a small capacity for torque transmission compared to the third clutch, on the inner circumference side, the automatic transmission can be formed more compact.

The present invention according to Claim 5 is configured with the third clutch comprising a drum unit and a hub unit that link with the friction member, wherein; the hub unit links with the reduced rotation component; the drum unit forms an oil pressure servo with a piston sealed in an oil-tight manner, and links with the first rotation component; and the first clutch is configured on the inner circumference side of the drum unit.

The present invention according to Claim 6 is configured with the friction member of the third clutch located on the outer circumference side of the speed reduction planetary gear. According to the present invention, an oil pressure servo of the third clutch is disposed adjoining the speed reduction planetary gear on the opposite side of the planetary gear unit in the axial direction.

The present invention according to Claim 7 is configured with an oil pressure servo of a first brake for retaining the first rotating component of the planetary gear unit to which reduced rotation is input configured on the outer circumference of the oil pressure servo of the third clutch.

The present invention is configured with the reduced rotation output means further comprising an input rotation component capable of inputting rotations of the input shaft, a fixing component for fixing rotations at all times, a speed reduction planetary gear unit that has a reduced rotation component that links to the first rotation component at all times, and rotates at the reduced rotation, and a third clutch that can link the linking member between the input shaft and the input rotation component in a manner capable of disengaging; wherein the reduced rotation is transmitted to the first rotation component by the third clutch engaging.

The present invention according to Claim 9 is configured with a fixing component of the speed reduction planetary gear is fixed and configured on a first boss unit extending from one edge of a side wall of a case; an oil pressure servo of the third clutch is configured on the outside of the first boss unit; an oil pressure servo of the second clutch is configured on the outside of the second boss unit that extends from another edge of a side wall of the case; the first clutch is configured adjoined to the planetary gear and also comprises a friction member and an oil pressure servo for pressurizing the friction member, and a drum unit and hub unit configured integrally with the oil pressure servo; and the drum unit is linked with the input shaft.

The present invention is configured with the reduced rotation output means further comprising an input rotation component for inputting rotations of the input shaft, a fixing component for fixing rotations, a speed reduction planetary gear that has a reduced rotation component that links to the first rotation component at all times, and rotates at the reduced rotation, a third clutch that can link the linking member between the input shaft and the input rotation component in a manner capable of disengaging, and a third brake capable of fixing the rotations of the fixing component; wherein the reduced rotation is transmitted to the first rotation component by the third clutch and the third brake engaging.

The present invention according to Claim 9 is configured further comprising: a linking member is adapted for linking the reduced rotation output means and the planetary gear unit; wherein the third clutch is disposed on the inner circumference side of the linking member.

With the present invention according to Claim 10, the first clutch and the third clutch are configured adjacent in the axial direction, on the inner circumference side of the linking member.

The present invention according to Claim 11 is configured with the third clutch comprising a friction member and an oil pressure servo for pressurizing the friction member; wherein the oil pressure servo is configured on the opposite side in the axial direction of the speed reduction planetary gear as to the friction member; and wherein a drum unit that configures a cylinder of the oil pressure servo is linked with the input shaft.

With the present invention according to Claim 12, the oil pressure servo of the third clutch is configured adjoining the oil pressure servo of the first clutch, between the oil pressure servo of the first clutch and the friction material of the third clutch.

The present invention is configured further comprising: a linking member for linking the reduced rotation output means and the planetary gear unit; wherein the third brake is configured on the opposite side in the axial direction of the planetary gear unit as to the speed reduction planetary gear.

The present invention is configured with the oil pressure servo of the third brake provided in a case.

The present invention is configured with the third clutch comprising a friction member and an oil pressure servo for pressurizing the friction member; wherein the oil pressure servo is configured on the opposite side in the axial direction of the speed reduction planetary gear as to the friction member; and wherein a drum unit that configures a cylinder of the oil pressure servo is linked with the input shaft.

The present invention is configured with the reduced rotation output means further comprising an input rotation component for inputting rotations of the input shaft, a fixing component for fixing rotations, a speed reduction planetary gear that has a reduced rotation component that rotates at the reduced rotation and that is connected to the first rotating component at all times, and a third brake capable of fixing the rotations of the fixing component; wherein the reduced rotation is transmitted to the first rotation component by the third brake engaging.

With the present invention, the third brake is configured on the opposite side in the axial direction of the planetary gear unit as to the speed reduction planetary gear;
wherein the oil pressure servo of the third brake is provided in a case.

The present invention is configured such that six forward speed levels and one reverse speed level can be achieved, and in the case of the fourth forward speed level the first clutch and the second clutch are engaged.

This achieves six forward speeds and one reverse speed, and at fourth speed forward the first and second clutches are engaged together, that is to say directly coupled at fourth speed forward. Therefore, at fifth speed forward and sixth speed forward, the gear ratio can be specified to a high ratio, and particularly when mounted on a vehicle, in the event that the vehicle is running at a high speed, the engine revolutions can be lowered, and this contributes to the quietness of the vehicle while running at a high speed.

The present invention according to Claim 3 is configured such that, in a speed line chart illustrating the revolutions of the first, second, third, and fourth rotation components with the vertical axis, and the gear ratio of the first, second, third, and fourth rotation components with the horizontal axis in a corresponding manner; the first rotation component to which the reduced rotation is input is positioned at the farthest edge in the horizontal direction, with the third rotation component, the fourth rotation component linked to the output member, and the second rotation component, corresponding in that order.

With the present invention according to Claim 14, the planetary gear unit is a multiple type planetary gear, comprising a first sun gear, a long pinion which meshes with the first sun gear, a short pinion which meshes with the long pinion, a carrier for rotationally supporting the long pinion and the short pinion, a second sun gear meshing with the short pinion, and a ring gear meshing with the long pinion; wherein the first rotation component is the first sun gear capable of inputting the reduced rotation of the reduced rotation output means, and which is capable of being fixed by the retaining of the first brake; and wherein the second rotation component is the second sun gear capable of inputting rotations of the input shaft by the engaging of the first clutch; and wherein the third rotation component is the carrier capable of inputting the rotations of the input shaft by the engaging of the second clutch, and which is capable of being fixed by the retaining of the second brake; and wherein the fourth rotation component is the ring gear linked to the output member.

The present invention according to Claim 15 comprises a pair of the planetary gear units each comprising a first sun gear, a second sun gear linked to the first sun gear, a first carrier meshing with the first sun gear, a second carrier meshing with the second sun gear, a first ring gear linked to the second carrier, and a second ring gear meshing with the second carrier; wherein the first rotation component is the second ring gear capable of inputting the reduced rotation of the reduced rotation output means, and which is capable of being fixed by the retaining of the first brake; and wherein the second rotation component is the first sun gear and the second sun rage capable of inputting the rotations of the input shaft by the engaging of the first clutch; and wherein the third rotation component is the second carrier and the first ring gear capable of inputting the rotations of the input shaft by the engaging of the second clutch, and also capable of being fixed by the retaining of the second brake; and wherein the fourth rotation component is a first carrier linked to the output member.

The present invention according to Claim 16 is configured wherein, in the first speed forward, the first clutch is engaged and the second brake is retained; and wherein, in the second speed forward, the first clutch is engaged and the first brake is retained; and wherein, in the third speed forward, reduced rotation is input to the first rotation component from the reduced rotation output means, and the first clutch is engaged; and wherein, in the fourth speed forward, the first clutch and the second clutch are both engaged; and wherein, in the fifth speed forward, reduced rotation is input to the first rotation component from the reduced rotation output means, and the second clutch is engaged; and wherein, in the sixth speed forward, the second clutch is engaged and the first brake is retained; and wherein, in the first speed reverse, reduced rotation is input to the first rotation component from the reduced rotation output means, and the second brake is retained; whereby six forward speed levels and one reverse speed level can be achieved.

With the present invention, six forward speed levels and one reverse speed level can be achieved, and in the case of the fifth forward speed level the first clutch and the second clutch are engaged.

Accordingly, this achieves six forward speeds and one reverse speed, and at fifth speed forward the first and second clutches are engaged together, that is to say directly coupled at fifth speed forward. Therefore, between first speed forward and fourth speed forward, the width of the gear ratios can be specified in detail, and particularly when mounted on a vehicle, in the event that the vehicle is running at a low to moderate speed, the engine can be utilized with better revolutions, and fuel cost can be improved with the vehicle running at a low to moderate speed.

The present invention according to Claim 17 is configured such that, in a speed line chart illustrating the revolutions of the first, second, third, and fourth rotation components with the vertical axis, and the gear ratio of the first, second, third, and fourth rotation components with the horizontal axis in a corresponding manner; the first rotation component to which the reduced rotation is input is positioned at the farthest edge in the horizontal direction, with the fourth rotation component linked to the output member, the third rotation component, and the second rotation component, corresponding in that order.

With the present invention according to Claim 18, the planetary gear unit is a multiple type planetary gear, comprising a first sun gear, a long pinion which meshes with the first sun gear, a short pinion which meshes with the long pinion, a carrier for rotationally supporting the long pinion and the short pinion, a second sun gear meshing with the short pinion, and a ring gear meshing with the long pinion; wherein the first rotation component is the second sun gear capable of inputting the reduced rotation of the reduced rotation output means; and wherein the rotation component is the carrier capable of inputting rotations of the input shaft by the engaging of the first clutch, and which is capable of being fixed by the retaining of the first brake; and wherein the third rotation component is the first sun gear capable of inputting the rotations of the input shaft by the engaging of the second clutch, and which is capable of being fixed by the retaining of the second brake; and wherein the fourth rotation component is the ring gear linked to the output member.

The present invention according to Claim 19 is configured such that, in the first speed forward, reduced rotation is input to the first rotation component from the reduced rotation output means, and the first brake is retained; and wherein, in the second speed forward, reduced rotation is input to the first rotation component from the reduced rotation output means, and the second brake is retained; and wherein, in the third speed forward, reduced rotation is input to the first rotation component from the reduced rotation output means, and the second clutch is engaged; and wherein, in the fourth speed forward, reduced rotation is input to the first rotation component from the reduced rotation output means, and the first clutch is engaged; and wherein, in the fifth speed forward, the first clutch and the second clutch are both engaged; and wherein, in the sixth speed forward, the first clutch is engaged and the second brake is retained; and wherein, in the first speed reverse, the second clutch is engaged and the first brake is retained; whereby six forward speed levels and one reverse speed level can be achieved.

The present invention according to Claim 20 is configured with the first clutch configured on the opposite side in the axial direction of the planetary gear unit as to the speed reduction planetary gear.

With the present invention according to Claim 21, the first clutch is a clutch which engages at a relatively low to medium speed level.

Accordingly, when this second clutch is disengaged at relatively high speed levels or at the reverse speed level, particularly the unit linking this second clutch and the third rotation component rotates at a relatively high speed or in the opposite direction. On the other hand, a case may occur wherein the linking member that transmits the reduced rotation from the reduced rotation output means rotates at reduced rotations or is engaged, and the difference in revolutions may be great. However, because this second clutch is located on the opposite side of the reduced rotation output means via the planetary gear unit, that is to say, the unit with a relatively high rotation or reverse rotation and the unit with reduced rotation of this reduced rotation output means (particularly the linking member) can be separated and configured. For example, compared to the case wherein those units are configured with a multiple axis construction and are in contact, decreased efficiency of the automatic transmission due to relative rotations between these units can be prevented.

With the present invention according to Claim 22, the second clutch is a clutch that engages at the reverse level.

Accordingly, when this second clutch is engaged in the reverse level, the reduced rotation unit (particularly the linking member) of the reduced rotation output means rotates in reverse direction. On the other hand, a case may occur wherein the unit linking this second clutch and the third rotation component becomes the rotation of the input shaft due to this second clutch being engaged, and the difference in revolutions may be great. However, because this second clutch is located on the opposite side of the reduced rotation output means via the planetary gear unit, that is to say, the unit with a reverse rotation (particularly the linking member) and the unit that takes on the rotation of the input shaft can be configured separated. For example, compared to the case wherein those units are configured with a multiple axis construction and are in contact, decreased efficiency of the automatic transmission due to relative rotations between these units can be prevented.

The present invention according to Claim 23, is configured with the first clutch comprising a friction plate of which the inner circumferential side is splined to a member linked to the second rotation component, a first drum member encompassing an oil pressure servo and which is splined to the outer circumferential side of the friction plate, a first piston member for pressing the friction plate, and a first oil pressure servo oil pressure chamber formed by sealing between the inner circumferential side of the first piston member and the first drum member so as to be liquid-tight; wherein the second clutch comprises a friction plate of which the inner circumferential side is splined to a member linked to the third rotation component, a second drum member encompassing an oil pressure servo and which is splined to the outer circumferential side of the friction plate, and is disposed in the inner circumference side of a member linked to the second rotation component, a second piston member for pressing the friction plate, and a second oil pressure servo oil pressure chamber formed by sealing between the inner circumferential side of the second piston member and the input shaft, and between the outer circumference side and the second drum member, so as to be liquid-tight.

The present invention according to Claim 24, is configured with the output member disposed between the planetary gear unit and the reduced rotation output means in the axial direction.

Accordingly, the output unit can be configured in approximately the center in the axial direction of the automatic transmission. For example, when the automatic transmission is mounted on the vehicle, enlarging towards one direction of the axis (particularly in the rear direction when the input side from the drive source is the front direction) can be prevented because the output member is mounted to match the drive wheel transmission device. Because of this, particularly in the case of an FF vehicle, the interference toward the front wheels is reduced, and the mountability on a vehicle can be improved, such as the steering angle being greatly increased, for example.

The present invention according to Claim 25 is configured with the output member disposed between the planetary gear unit and the second clutch in the axial direction.

Accordingly, the planetary gear unit and the reduced rotations output means can be disposed even closer together, and the linking member can be shortened.

The present invention according to Claim 26 is configured with the reduced rotation output means comprising a speed reduction planetary gear formed of a double pinion planetary gear; wherein the speed reduction planetary gear, the planetary gear unit, and the output member, are provided coaxially with the input shaft.

The present invention according to Claim 27 is configured further comprising a differential unit for outputting rotations to driving wheels, and a counter shaft unit for engaging the differential unit, wherein the output member is a counter gear meshing with the counter shaft unit.

### Brief Description of the Drawings

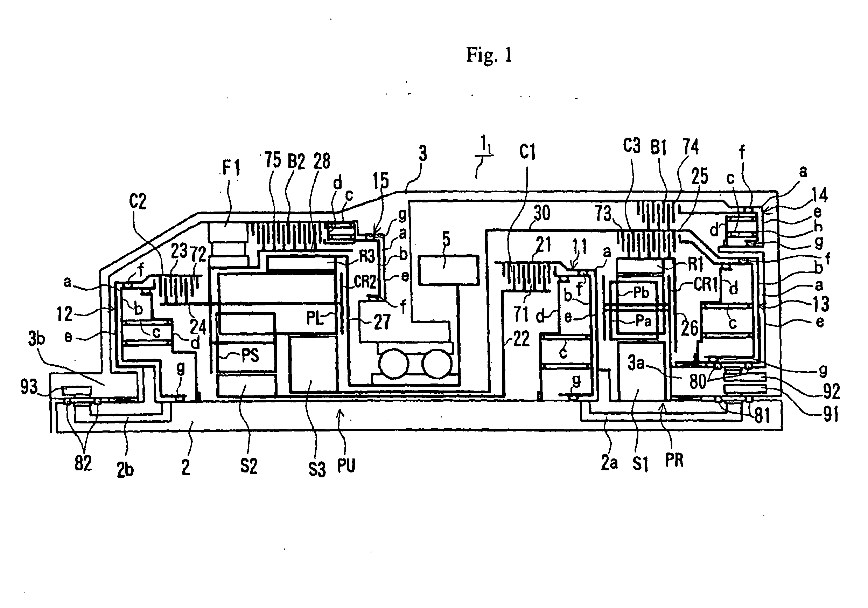

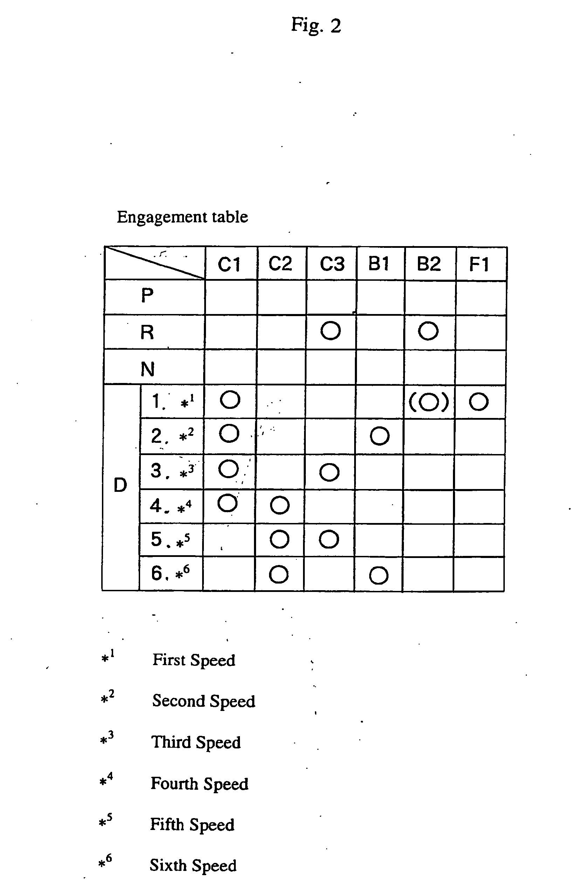

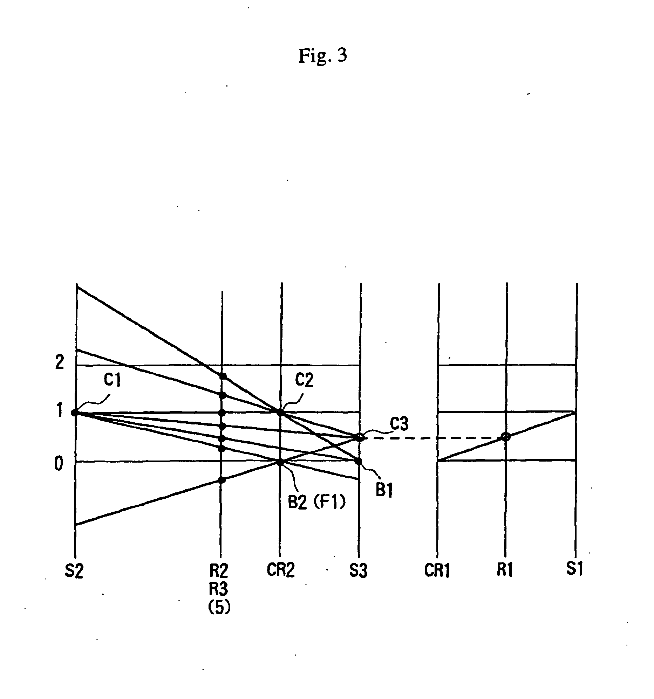

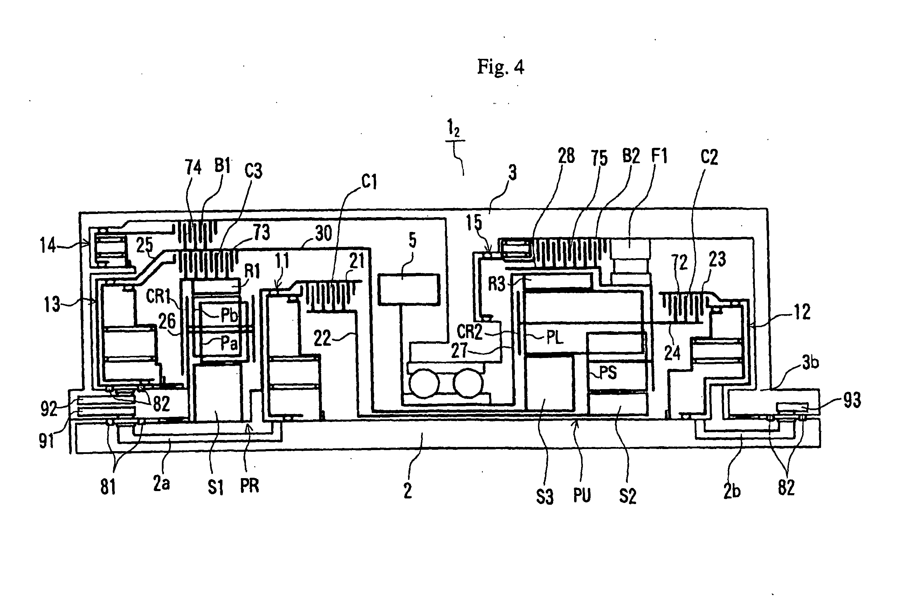

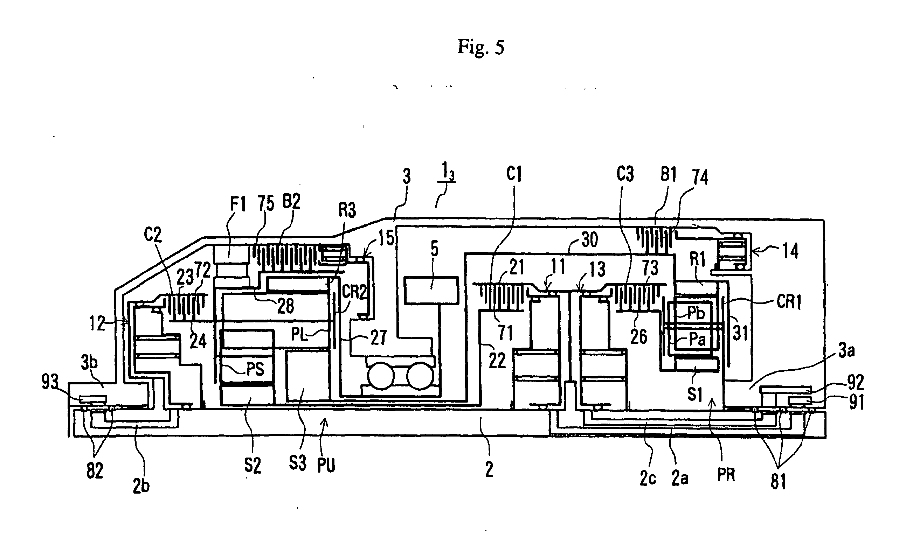

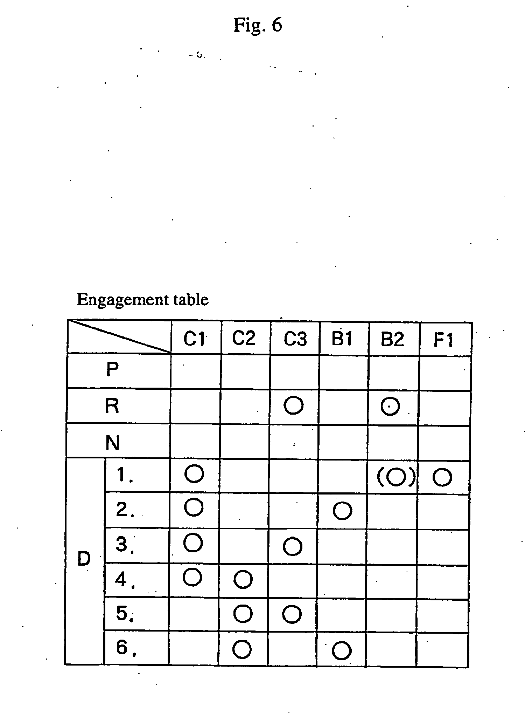

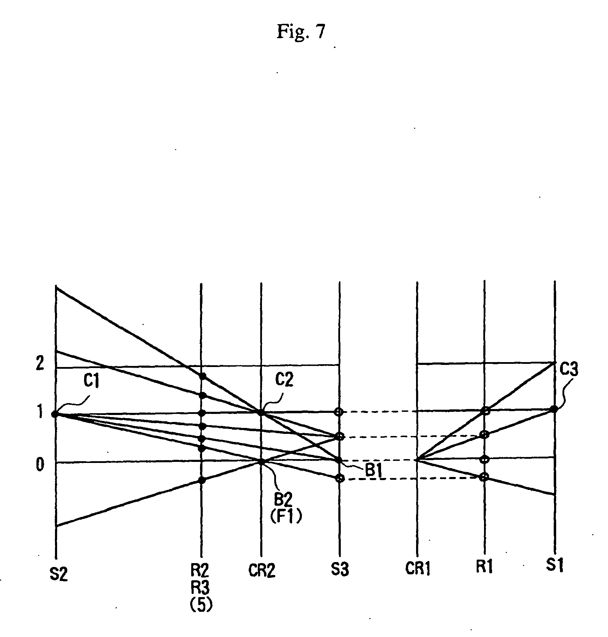

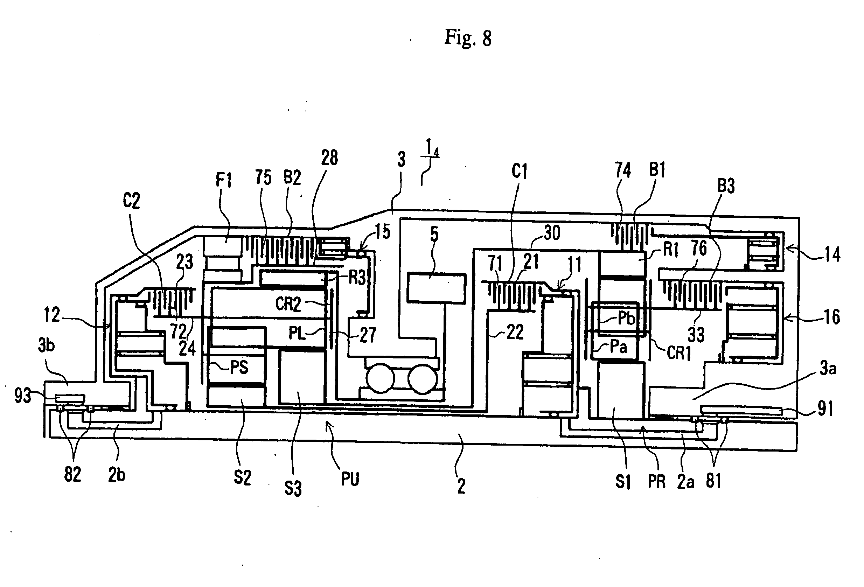

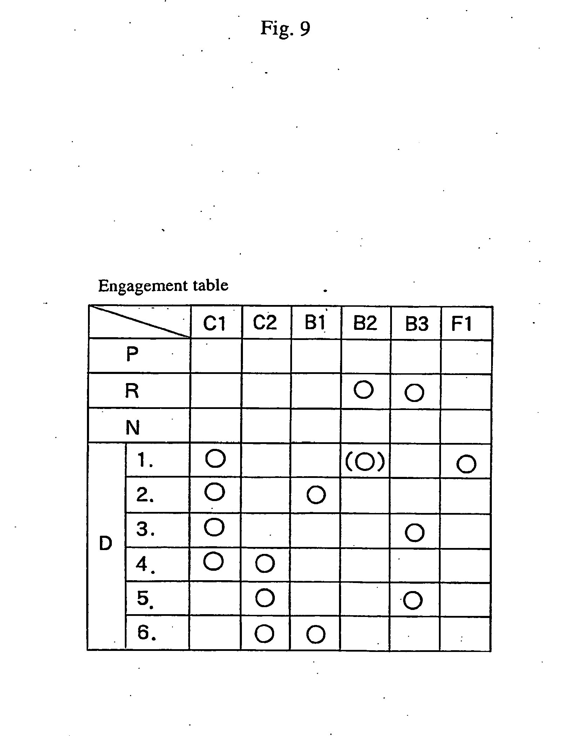

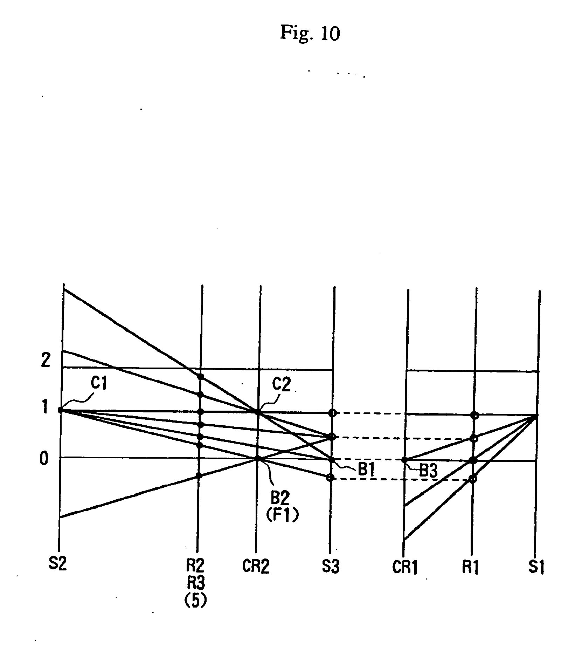

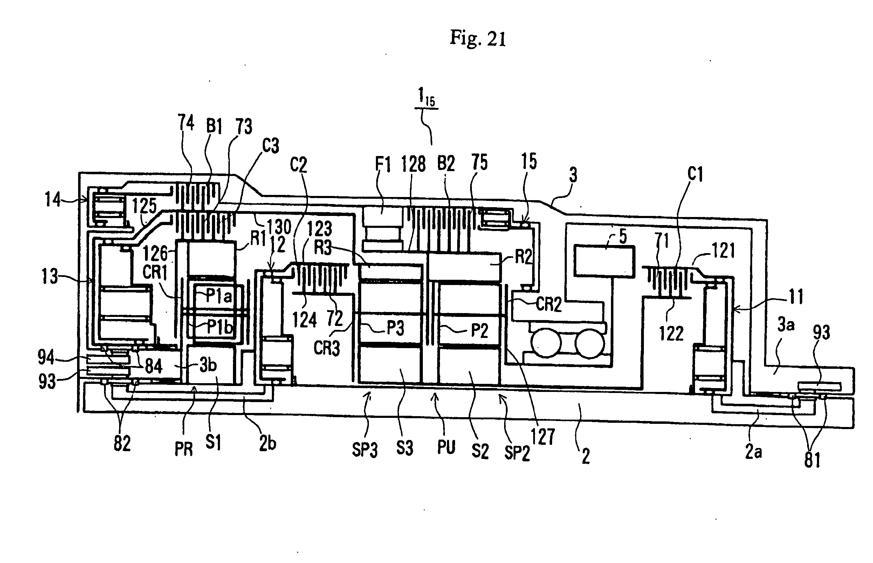

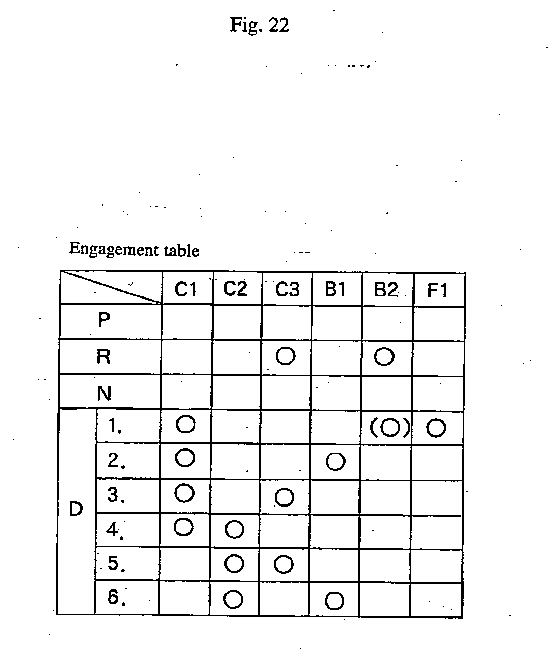

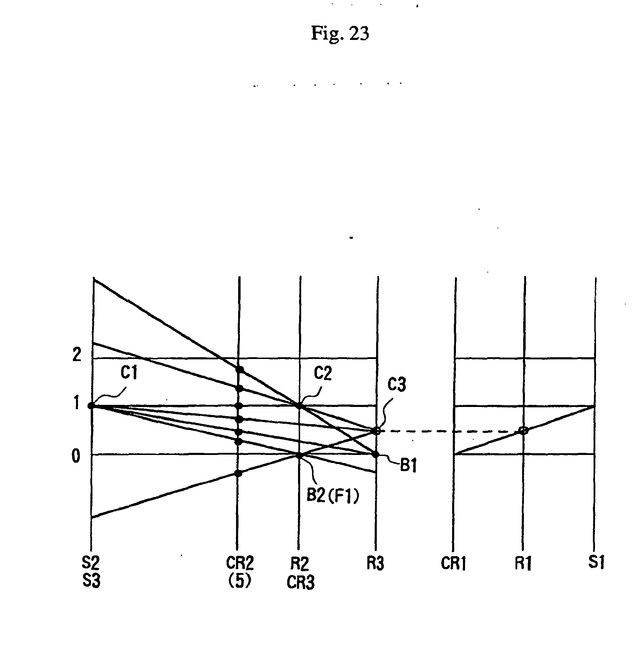

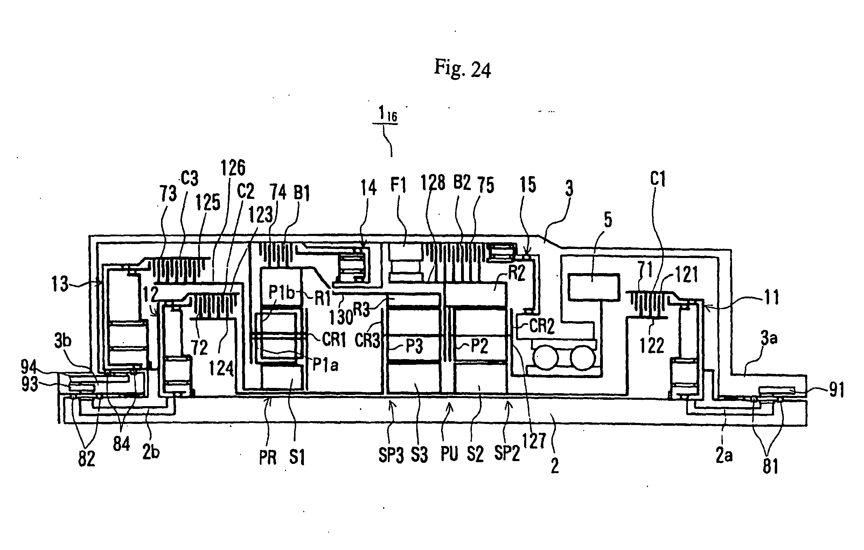

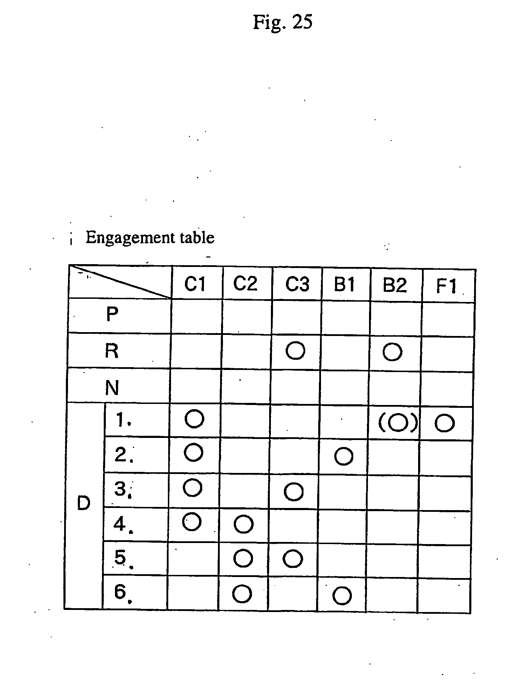

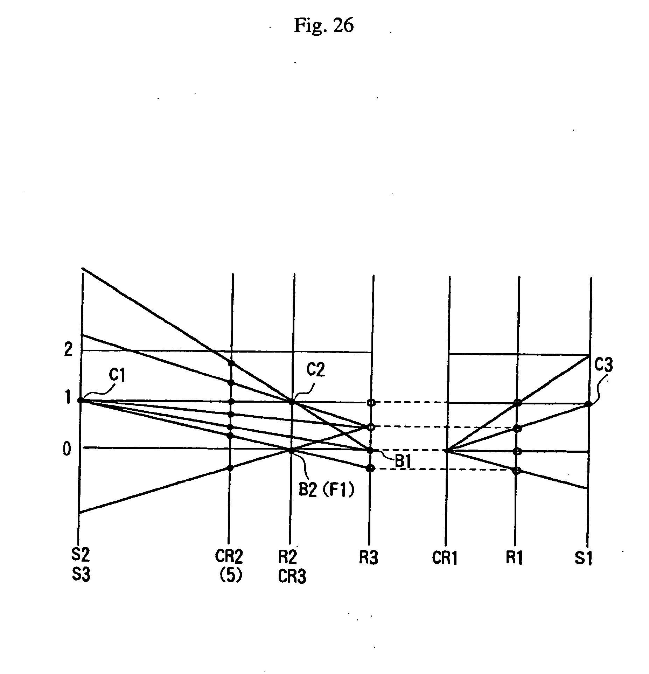

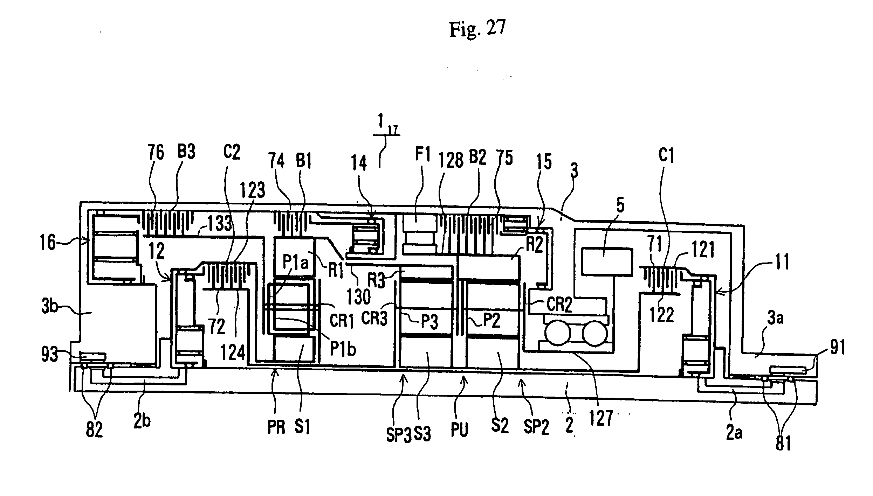

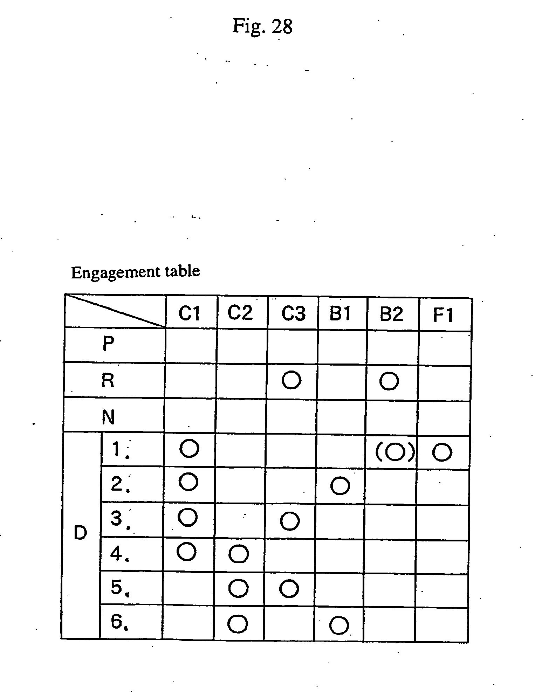

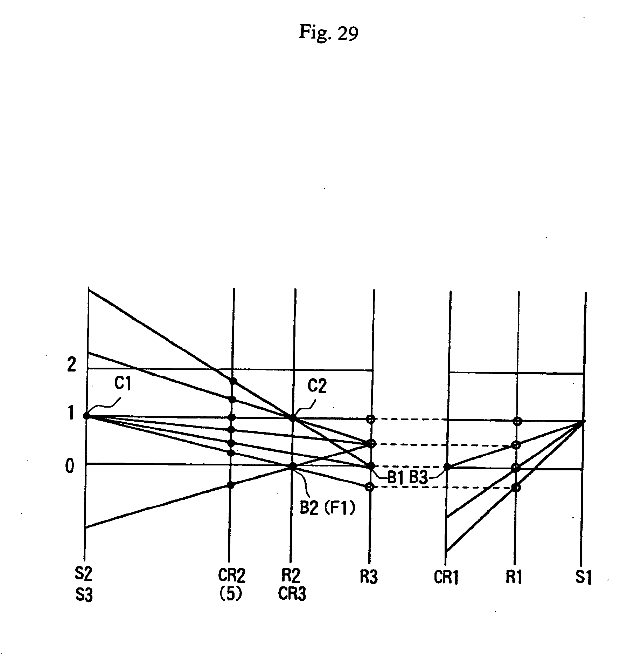

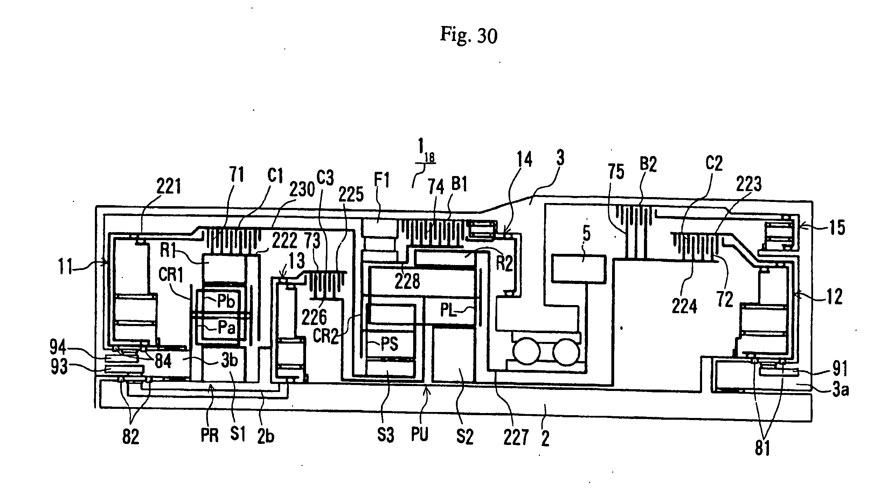

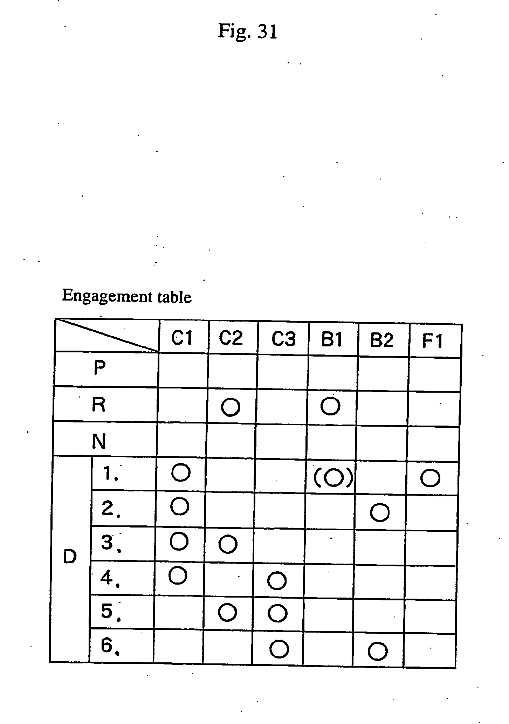

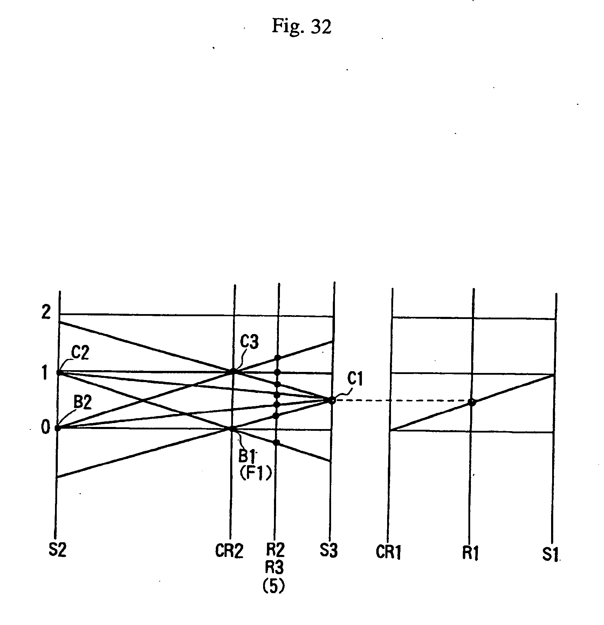

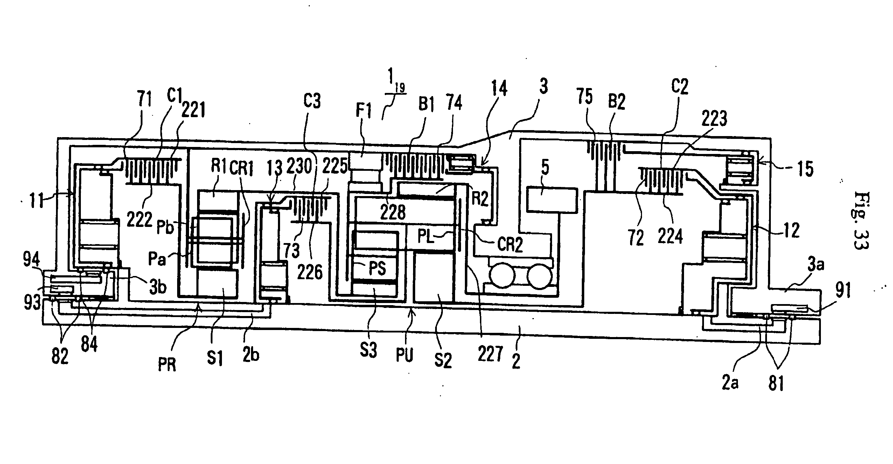

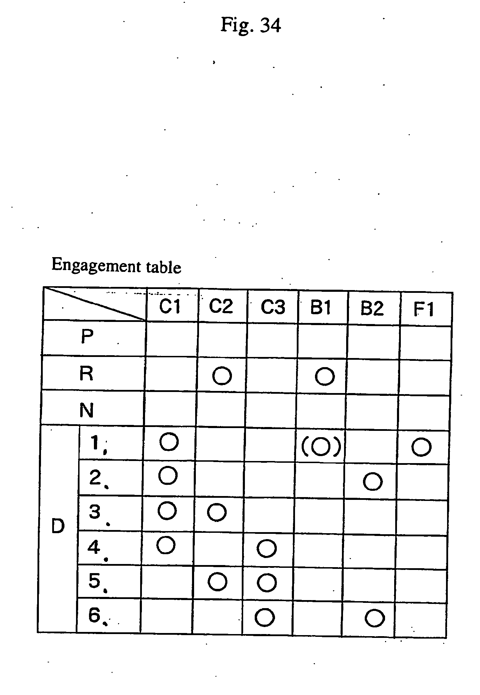

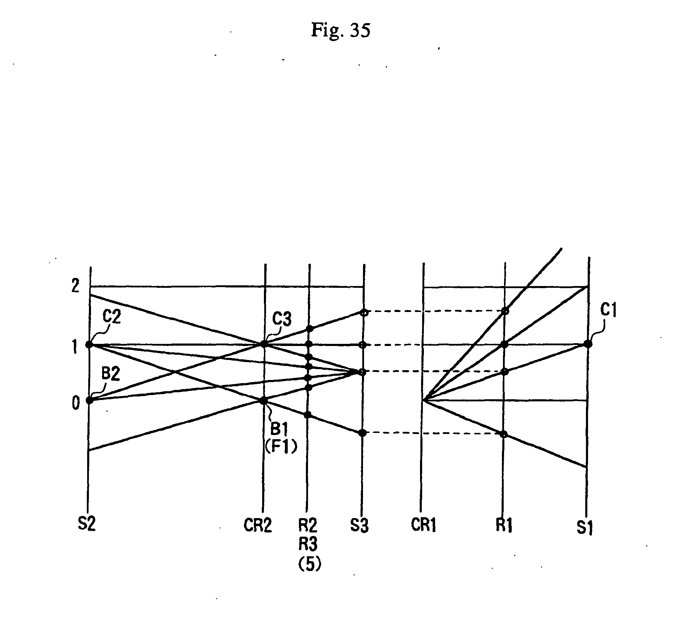

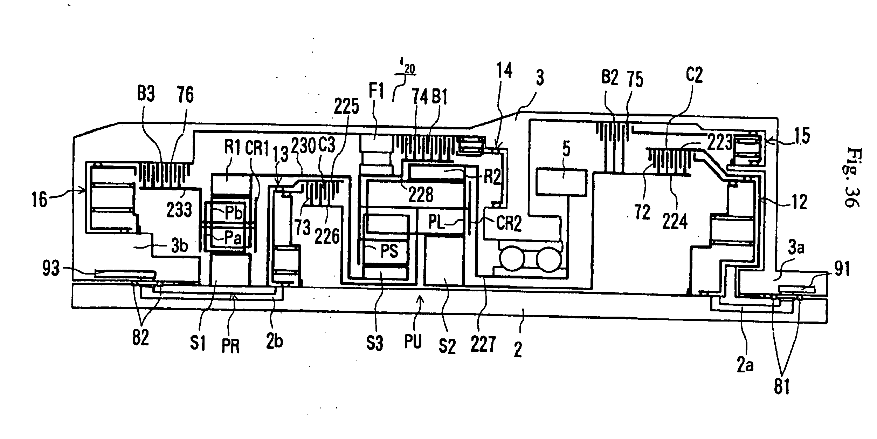

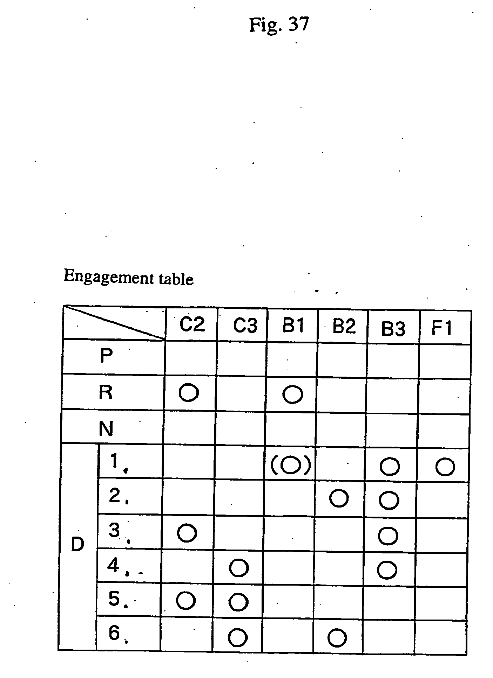

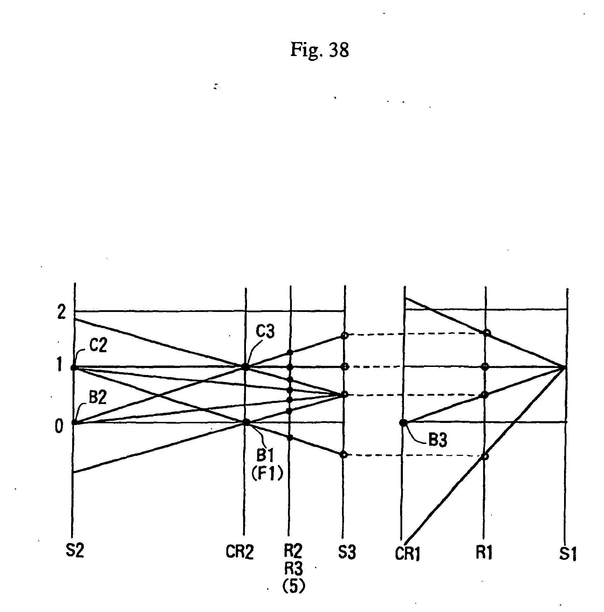

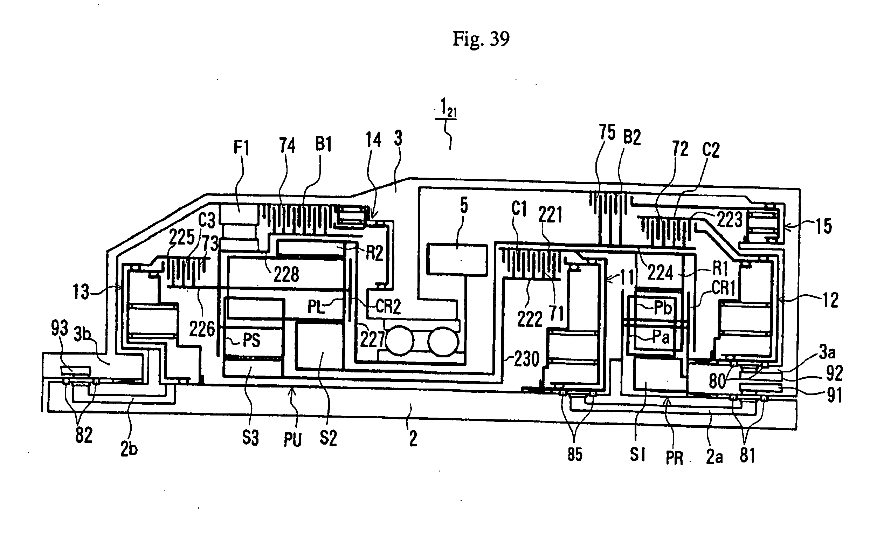

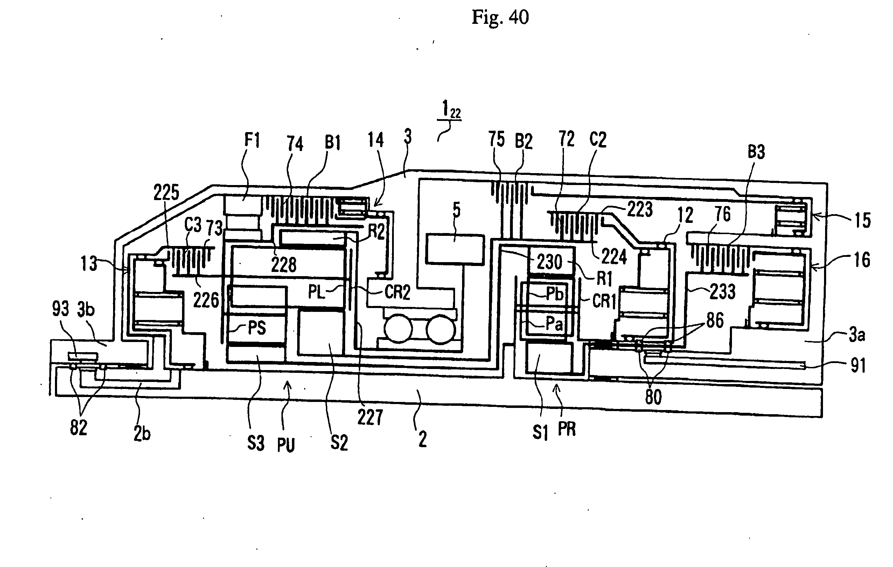

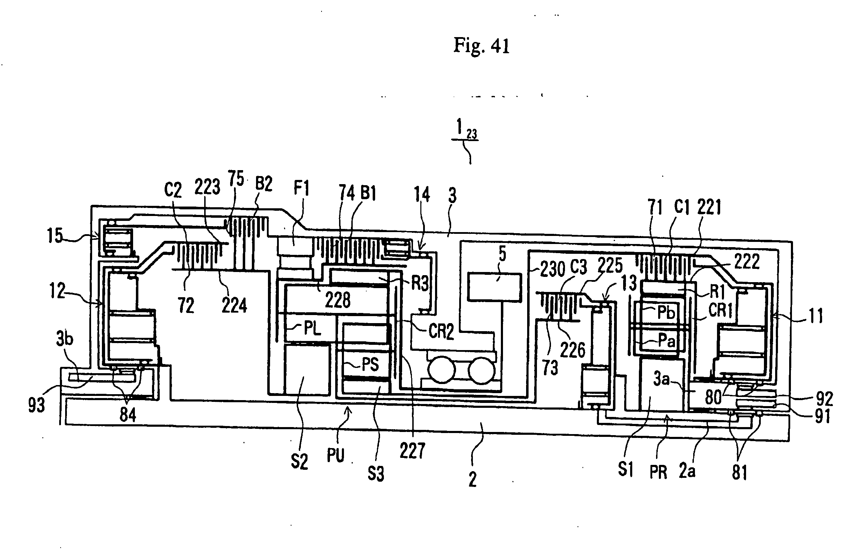

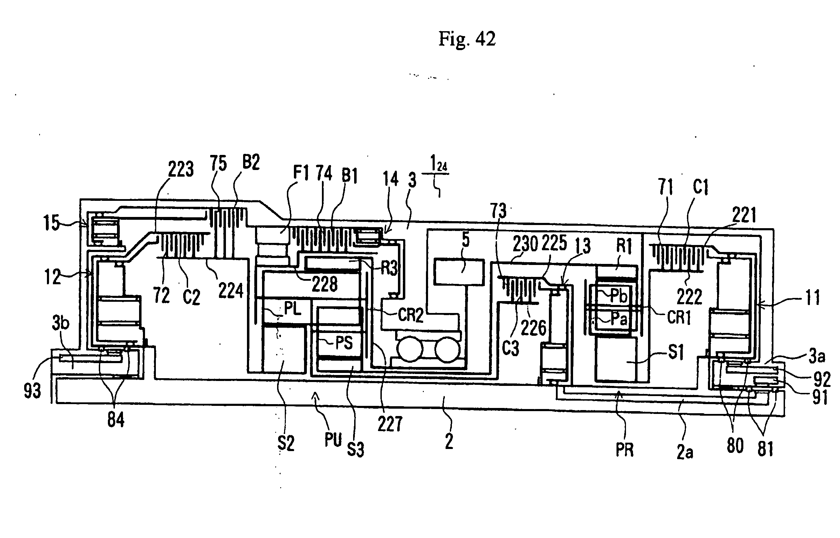

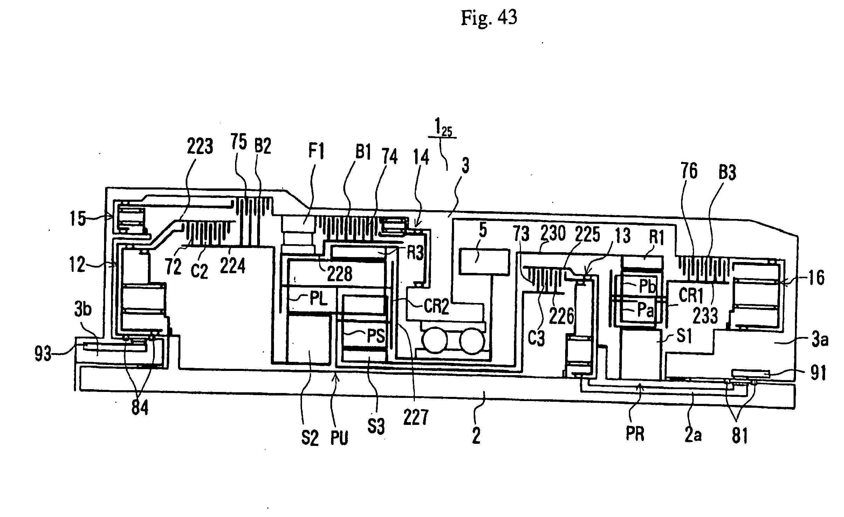

Fig. 1 is a schematic cross-sectional diagram illustrating an automatic transmission device of an automatic transmission relating to a first embodiment, Fig. 2 is an operational table of an automatic transmission relating to the first embodiment, Fig. 3 is a speed line diagram of an automatic transmission relating to the first embodiment, Fig. 4 is a schematic cross-sectional diagram illustrating an automatic transmission device of an automatic transmission relating to a second embodiment, Fig. 5 is a schematic cross-sectional diagram illustrating an automatic transmission device of an automatic transmission relating to a third embodiment, Fig. 6 is an operational table of an automatic transmission relating to the third embodiment, Fig. 7 is a speed line diagram of an automatic transmission relating to the third embodiment, Fig. 8 is a schematic cross-sectional diagram illustrating an automatic transmission device of an automatic transmission relating to a fourth embodiment, Fig. 9 is an operational table of an automatic transmission relating to the fourth embodiment, and Fig. 10 is a speed line diagram of an automatic transmission relating to the fourth embodiment.
Also, Fig. 11 is a schematic cross-sectional diagram illustrating an automatic transmission device of an automatic transmission relating to a fifth embodiment, Fig. 12 is a schematic cross-sectional diagram illustrating an automatic transmission device of an automatic transmission relating to a sixth embodiment, Fig. 13 is a schematic cross-sectional diagram illustrating an automatic transmission device of an automatic transmission relating to a seventh embodiment, Fig. 14 is a schematic cross-sectional diagram illustrating an automatic transmission device of an automatic transmission relating to an eighth embodiment, Fig. 15 is a schematic cross-sectional diagram illustrating an automatic transmission device of an automatic transmission relating to a ninth embodiment, Fig. 16 is a schematic cross-sectional diagram illustrating an automatic transmission device of an automatic transmission relating to a tenth embodiment, Fig. 17 is a schematic cross-sectional diagram illustrating an automatic transmission device of an automatic transmission relating to an eleventh embodiment, Fig. 18 is a schematic cross-sectional diagram illustrating an automatic transmission device of an automatic transmission relating to a twelfth embodiment, Fig. 19 is a schematic cross-sectional diagram illustrating an automatic transmission device of an automatic transmission relating to a thirteenth embodiment, and Fig. 20 is a schematic cross-sectional diagram illustrating an automatic transmission device of an automatic transmission relating to a fourteenth embodiment.
Also, Fig. 21 is a schematic cross-sectional diagram illustrating an automatic transmission device of an automatic transmission relating to a fifteenth embodiment, Fig. 22 is an operational table of an automatic transmission relating to the fifteenth embodiment, Fig. 23 is a speed line diagram of an automatic transmission relating to the fifteenth embodiment, Fig. 24 is a schematic cross-sectional diagram illustrating an automatic transmission device of an automatic transmission relating to a sixteenth embodiment, Fig. 25 is an operational table of an automatic transmission relating to the sixteenth embodiment, Fig. 26 is a speed line diagram of an automatic transmission relating to the sixteenth embodiment, Fig. 27 is a schematic cross-sectional diagram illustrating an automatic transmission device of an automatic transmission relating to a seventeenth embodiment, Fig. 28 is an operational table of an automatic transmission relating to the seventeenth embodiment, and Fig. 29 is a speed line diagram of an automatic transmission relating to the seventeenth embodiment.
Also, Fig. 30 is a schematic cross-sectional diagram illustrating an automatic transmission device of an automatic transmission relating to an eighteenth embodiment, Fig. 31 is an operational table of an automatic transmission relating to the eighteenth embodiment, Fig. 32 is a speed line diagram of an automatic transmission relating to the eighteenth embodiment, Fig. 33 is a schematic cross-sectional diagram illustrating an automatic transmission device of an automatic transmission relating to a nineteenth embodiment, Fig. 34 is an operational table of an automatic transmission relating to the nineteenth embodiment, Fig. 35 is a speed line diagram of an automatic transmission relating to the nineteenth embodiment, Fig. 36 is a schematic cross-sectional diagram illustrating an automatic transmission device of an automatic transmission relating to a twentieth embodiment, Fig. 37 is an operational table of an automatic transmission relating to the twentieth embodiment, and Fig. 38 is a speed line diagram of an automatic transmission relating to the twentieth embodiment.
Also, Fig. 39 is a schematic cross-sectional diagram illustrating an automatic transmission device of an automatic transmission relating to a twenty-first embodiment, Fig. 40 is a schematic cross-sectional diagram illustrating an automatic transmission device of an automatic transmission relating to a twenty-second embodiment, Fig. 41 is a schematic cross-sectional diagram illustrating an automatic transmission device of an automatic transmission relating to a twenty-third embodiment, Fig. 42 is a schematic cross-sectional diagram illustrating an automatic transmission device of an automatic transmission relating to a twenty-fourth embodiment, and Fig. 43 is a schematic cross-sectional diagram illustrating an automatic transmission device of an automatic transmission relating to a twenty-fifth embodiment.

### Best Mode for Carrying Out the Invention

### <First Embodiment>

The first embodiment relating to the present invention will be described, with reference to Fig. 1 through Fig. 3 below. Fig. 1 is a schematic cross-sectional diagram illustrating the automatic transmission device of an automatic transmission relating to the first embodiment, Fig. 2 is an operational table of an automatic transmission relating to the first embodiment, Fig. 3 is a speed line diagram of an automatic transmission relating to the first embodiment.

An automatic transmission relating to the first embodiment according to the present invention has an automatic transmission device 1₁ as illustrated in Fig. 1. This is particularly favorable for an FF (front engine, front wheel drive) vehicle, and has a case comprising a housing case, not illustrated, and a transmission case 3, and within this housing case is configured a torque converter, not illustrated, within this transmission case 3 is configured an automatic transmission device 1₁, a counter shaft unit (drive wheel transmission device), not illustrated, and a differential unit (drive wheel transmission device).

This torque converter is configured, for example, on the axis that is centered on an input shaft 2 of the automatic transmission device 1₁, which is on the same axis as the output shaft of the engine (not illustrated), and this automatic transmission device 1₁ is configured on the output shaft of this engine, in other words, the axis that is centered on an input shaft 2. Further, the above-mentioned counter shaft unit is configured on a counter shaft (not illustrated) on an axis that is parallel to the input shaft 2, and the above-mentioned differential unit is configured so as to have a lateral axle, not illustrated, on an axis that is parallel to this counter shaft.

Next, an automatic transmission device 1₁ of an automatic transmission relating to the first embodiment will be described, with reference to Fig. 1. As illustrated in Fig. 1, the input shaft 2 has a planetary gear unit PU and a planetary gear (reduced rotation output means) PR. This planetary gear unit PU is a multiple type planetary gear, which has a sun gear (the second rotation component) S2, a carrier (the third rotation component) CR2, a ring gear (the fourth rotation component) R3, and a sun gear (the first rotation component) S3, as the four rotation components; wherein the carrier CR2 has a long pinion PL that meshes with a sun gear S3 and a ring gear R3, and a short pinion PS that meshes with a sun gear S2, which are meshed to one another. Further, the above-mentioned planetary gear PR is a so-called double planetary gear that has a carrier CR1, wherein a pinion Pb meshes with a ring gear R1 and a pinion Pa meshes with a sun gear S1, which mesh one with another.

On the above-mentioned input shaft 2 is configured a multi-disc clutch (first clutch) C1, which comprises an oil pressure servo 11, a friction plate 71, a drum-shaped member 21 that forms a clutch drum, and a hub unit 22 liked to a sun gear S2 on the inner circumference side; and a multi-disc clutch (third clutch) C3, which has an oil pressure servo 13, a friction plate 73, a drum-shaped member 25 that forms a clutch drum on the outer circumference side. Further, on the outer circumference side of the drum-shaped member 25 is configured a multi-disc brake B1 (first brake) which has an oil pressure servo 14 and a friction plate 74.

This oil pressure servo 11 is constructed from a piston unit b for pressurizing the friction plate 71, a drum-shaped member 21 that has a cylinder unit e, an oil pressure servo oil chamber (hereafter, simply "oil chamber") "a" which is formed by sealing between this piston unit b and this cylinder unit e with seal rings f and g, a return spring c that presses this piston unit b towards this oil chamber "a", and a return plate d that absorbs the energy of this return spring c.

Now, for the following descriptions, each oil_pressure servo shall be considered as being constructed similarly from an oil chamber "a", a piston unit b, a return spring c, a return plate d, a cylinder unit e, and seal rings f and g, and as such, these descriptions will not be given.

The oil chamber "a" of this oil pressure servo 11 is connected to an oil line 2a which is formed on the above-mentioned input shaft 2, and this oil line 2a is provided along one edge of the case 3, and is connected to the oil line 91 of the boss unit 3a which is provided on the input shaft 2 in a sleeve form. Further, this oil line 91 is connected to an oil pressure control unit, not illustrated. In other words, due to the above-mentioned oil pressure servo 11 being configured on the input shaft 2, an oil line from the oil pressure control unit, not illustrated, to the oil chamber "a" of the oil pressure servo 11 is configured, simply by providing one set of seal rings 81 to seal between the boss unit 3a of the case 3 and the input shaft 2.

Further, the oil chamber "a" of the above-mentioned oil pressure servo 13 is connected to an oil line 92 of the above-mentioned boss unit 3a, and this oil line 92 is connected to an oil pressure control unit, not illustrated. In other words, for the above-mentioned oil pressure servo 13, an oil line from the oil pressure control unit, not illustrated, to the oil chamber "a" of the oil pressure servo 13 is configured, simply by providing one set of seal rings 80 to seal between the boss unit 3a of the case 3 and the drum-shaped member 25.

The above-mentioned input shaft 2 is connected to the above-mentioned drum-shaped member 21, and on the inner circumference side of this drum-shaped member 21 is configured in a splined manner the friction plate 71 of the clutch C1 which is capable of engaging due to the oil pressure servo 11 for the clutch C1, and is connected wherein the inner circumference side of the friction plate 71 of this clutch C1 is splined to the hub unit 22. Further, this hub unit 22 is connected to the above-mentioned sun gear S2.

Further, the above-mentioned drum-shaped member 25 is supported by the above-mentioned boss unit 3a so as to rotate, and on the outer circumference side of the front edge of this drum-shaped member 25 is splined the friction plate 74 of the brake B1 which can be retained by the oil pressure servo 14 for the above-mentioned brake B1. On the inner circumference side of the front edge of this drum-shaped member 25 is configured the friction plate 73 of the clutch C3 which is capable of engaging by the oil pressure servo 13 for the clutch C3, splined, and on the inner circumference side of the friction plate 73 of this clutch C3 the ring gear R1 is splined.

Further, the carrier CR1 has a pinion Pa and a pinion Pb, and this pinion Pb meshes with the above-mentioned ring gear R1, and this pinion Pa meshes with the sun gear S1 which Is connected to the input shaft 2. This carrier CR1 is secured to the boss unit 3a of the case 3 via a side plate, and this ring gear R1 is supported by a supporting unit 26 to the boss unit 3a so as to rotate.

Further, to the above-mentioned drum-shaped member 25 is connected a linking member (hereafter, also referred to as "transmitting member") 30 that transmits the rotation of the ring gear R1 when the clutch C3 is engaged, and further, to the other side of this transmitting member 30 is connected the sun gear S3 of the above-mentioned planetary gear unit PU.

On the other hand, on the other side of the input shaft 2 (left in diagram) is configured a multi-disc clutch (second clutch) C2 that has an oil pressure servo 12, a friction plate 72, a drum-shaped member 23 that forms a clutch drum, and a hub unit 24 linked to a carrier CR2.

The oil chamber "a" of this oil pressure servo 12 is connected to an oil line 2b which is formed on the above-mentioned input shaft 2, and this oil line 2b is provided along the edge of the case 3 that is the opposite side of that of the above-mentioned boss unit 3a, and is connected to the oil line 93 of the boss unit 3b which is provided on the input shaft 2 in a sleeve form. Further, this oil line 93 is connected to an oil pressure control unit, not illustrated. In other words, an oil line from the oil pressure control unit, not illustrated, to the oil chamber "a" of the oil pressure servo 12 is configured, simply by providing one set of seal rings 82 to seal between the input shaft 2 and the drum-shaped member 23.

Further, to the above-mentioned input shaft 2, within the left side of the diagram, a drum-shaped member 23 is connected, and on the inner circumference side of the front edge of this drum-shaped member 23 is splined the friction plate 72 of the clutch C2 which is capable of engaging by the oil pressure servo 12 for the clutch C2. The inner circumference side of the friction plate 72 of this clutch C2 is splined to the hub unit 24, and this hub unit 24 is connected to the side plate of the above-mentioned carrier CR2.

On the other hand, on the outer circumference side of the planetary gear unit PU is configured a multi-disc brake (second brake) B2 that has an oil pressure servo 15, a friction plate 75, and a hub unit 28. To the side plate of the carrier CR2 of this planetary gear unit PU is connected a hub unit 28 to which is splined the friction plate 75 of the above-mentioned brake B2, and further, this hub unit 28 is connected to the inner race of a one-way clutch F1. Further, the above-mentioned ring gear R3 meshes with the long pinion PL of this carrier CR2, a linking member 27 is connected to one edge of this ring gear R3, and this ring gear R3 is linked to the counter gear 5 via this linking member 27.

As described above, the planetary gear PR and the clutch C3 are configured on one side in the axial direction of the planetary gear unit PU, and also the clutch C1 is configured on one side in the axial direction, and the clutch C2 is configured on the other side in the axial direction, and the counter gear 5 is configured in between the planetary gear PR and the planetary gear unit PU. Further, the clutch C1 is disposed on the inner circumferential side of the clutch C3, and particularly of the transmitting member 30 that transmits the output thereof. Further, the brake B1 is configured on the outer circumference side of the planetary gear PR, and the brake B2 is configured on the outer circumference side of the planetary gear unit PU.

Continuing, based on the above-mentioned construction, the operations of an automatic transmission device 1₁ will be described, with reference to Fig. 1, Fig. 2, and Fig. 3 below. Now, the vertical axis of the speed line diagram illustrated in Fig. 3 indicate the revolutions of each rotation component, and the horizontal axis indicates the corresponding gear ratio of these rotation components. Further, regarding the planetary gear unit PU section of this speed line diagram, the vertical axis to the farthest horizontal edge (the right side of Fig. 3) corresponds to sun gear S3, and hereafter moving to the left direction within the diagram, the vertical axis corresponds to the carrier CR2, the ring gear R3, and the sun gear S2. Further, regarding the planetary gear PR section of this speed line diagram, the vertical axis to the farthest horizontal edge (the right side of Fig. 3) corresponds to sun gear S1, and hereafter moving to the left direction within the diagram, the vertical axis corresponds to the ring gear R1 and the carrier CR1. Further, the width between these vertical axes are proportional to the inverse of the number of teeth of each of the sun gears S1, S2, S3, and to the inverse of the number of teeth of each of the ring gears R1, R3. Also, the dotted line in the horizontal direction within the diagram illustrates that the rotation is transmitted from the transmitting member 30.

As illustrated in Fig. 1, the rotation of input shaft 2 is input to the above-mentioned sun gear S2, by engaging the clutch C1. The rotation of input shaft 2 is input to the above-mentioned carrier CR2, by engaging the clutch C2, and this carrier CR2 can fix the rotation by the retaining of brake B2, and further, the rotation in one direction is regulated by the one-way clutch F1. Further, the sun gear S3 can fix the rotation by the retaining of the brake B1.

On the other hand, the above-mentioned sun gear S1 is connected to the input shaft 2, and the rotation of this input shaft 2 is input, and further, the carrier CR1 is connected to the case 3 and its rotation is fixed, and therefore the ring gear R1 rotates at reduced rotations. Further, by engaging the clutch C3, the reduced rotations of this ring gear R1 is input to the sun gear S3.

Also, the rotation of the above-mentioned ring gear R3 is output to the above-mentioned counter gear 5, and is output to the drive wheel via this counter gear 5, a counter shaft unit not illustrated, and a differential unit.

At first speed forward within a D (drive) range, as illustrated in Fig. 2, the clutch C1 and the one-way clutch F1 are engaged. Then, as illustrated in Fig. 3, the rotation of input shaft 2 is input to the sun gear S2 via the clutch C1, and the rotation of the carrier CR2 is regulated in one direction (the forward rotation direction), in other words, the carrier CR2 is prevent from rotating in the opposite direction and becomes fixed. Further, the rotation of input shaft 2 that is input to the sun gear S2 is output to the ring gear R3 via the fixed carrier CR2, and the forward rotation for first speed forward is output from the counter gear 5. Now, when downshifting (when coasting), the brake B2 is retained and carrier CR2 is fixed; and the above-mentioned state of first speed forward is maintained while preventing the forward rotation of this carrier CR2. Further, at this first speed forward, the one-way clutch F1 prevents the carrier CR2 from rotation in the opposite direction and allows forward rotation, and therefore, switching from a non-driving range to a driving range and achieving the first speed forward can be accomplished more smoothly by the automatic engaging of the one-way clutch.

At second speed forward within the D (drive) range, as illustrated in Fig. 2, the clutch C1 is engaged and the brake B1 is retained. Then, as illustrated in Fig. 3, the rotation of input shaft 2 is input to the sun gear S2 via the clutch C1, and the sun gear S3 is fixed by retaining the brake B1. By doing so, the carrier CR2 slightly reduces rotation speed, and the rotation of input shaft 2 that was input in the sun gear S2 is output to the ring gear R3 via the carrier CR2 at this reduced rotation, and the forward rotation for second speed forward is output from the counter gear 5.

At third speed forward within the D (drive) range, as illustrated in Fig. 2, the clutch C1 and the clutch C3 are engaged. Then, as illustrated in Fig. 3, the rotation of input shaft 2 is input to the sun gear S2 via the clutch C1. Further, by the rotation of the input shaft 2 input to the sun gear S1 and the fixed carrier CR1, the ring gear R1 reduces rotation speed, and the speed reduction speed rotation of this ring gear R1 is output to the sun gear S3 via the clutch C3 and the transmitting member 30. Then, the carrier CR2 has a slightly greater reduced rotation compared to the reduced rotation of this sun gear S3 because of the rotation of the input shaft 2 input to the sun gear S2 and the reduced rotation of the sun gear S3. Further, the rotation of input shaft 2 that was input in the sun gear S2 is output to the ring gear R3 via the carrier CR2 at this reduced rotation, and the forward rotation for third speed forward is output from the counter gear 5. In this case, because the sun gear S3 and the ring gear R1 are at a reduced rotation, the above-mentioned transmitting member 30 performs a relatively large torque transmission.

At fourth speed forward within the D (drive) range, as illustrated in Fig. 2, the clutch C1 and the clutch C2 are engaged. Then, as illustrated in Fig. 3, the rotation of input shaft 2 is input to the sun gear S2 via the clutch C1, and into the carrier CR2 via the clutch C2. Therefore, by the rotation of the input shaft 2 input to the sun gear S2 and the rotation of input shat 2 input to the carrier CR2, in other words, in the state of directly coupled rotation the rotation of the input shaft 2 is output as is into the ring gear R3, and the forward rotation for fourth speed forward is output from the counter gear 5.

At fifth speed forward within the D (drive) range, as illustrated in Fig. 2, the clutch C2 and the clutch C3 are engaged. Then, as illustrated in Fig. 3, the rotation of input shaft 2 is input to the carrier CR2 via the clutch C2. Further, by the rotation of the input shaft 2 input to the sun gear S1 and the fixed carrier CR1, the ring gear R1 reduces rotation speed, and the speed reduction speed rotation of this ring gear R1 is output to the sun gear S3 via the clutch C3 and the above-mentioned transmitting member 30. Then, the overdrive rotation is output to the ring gear R3 from the reduced rotation of the sun gear S3 and the carrier CR2 wherein the rotation of the input shaft 2 is input, and the forward rotation for fifth speed forward is output from the counter gear 5. In this case, similar to the case of the above-mentioned third speed forward, due to the sun gear S3 and the ring gear R1 being at a reduced rotation, the above-mentioned transmitting member 30 performs a relatively large torque transmission.

At sixth speed forward within the D (drive) range, as illustrated in Fig. 2, the clutch C2 is engaged and the brake B1 is retained. Then, as illustrated in Fig. 3, the rotation of the input shaft 2 is input to the carrier CR2 via the clutch C2, and the sun gear S3 is fixed by retaining the brake B2. This causes an overdrive rotation (even greater than that of the above-mentioned fifth speed forward), from the rotation of the input shaft 2 input to the carrier CR2 and the fixed sun gear S3, and is output to the ring gear R3, and the forward rotation for sixth speed forward is output from the counter gear 5.

At the first speed reverse within an R (reverse) range, as illustrated in Fig. 2, the clutch C3 is engaged and the brake B2 is retained. Then, as illustrated in Fig. 3, the ring gear R1 rotates at reduced rotations from the rotation of input shaft 2 input to the sun gear S1 and the fixed carrier CR1, and the reduced rotation of this ring gear R1 this reduced rotation is output to the sun gear S3 via the clutch C3 and the above-mentioned transmitting member 30. Further, the carrier CR2 is fixed by retaining the brake B2. Then, the reduced rotation of the sun gear S3 and the fixed carrier CR2 is output to the ring gear R3 as an opposite direction rotation, and the opposite direction rotation for first speed reverse is output from the counter gear 5. In this case, similar to the case of the above-mentioned third speed forward or fifth speed forward, since the sun gear S3 and the ring gear R1 are at a reduced rotation, the above-mentioned transmitting member 30 performs a relatively large torque transmission.

At the P (parking) range and the N (neutral) range, particularly clutch C1, clutch C2, and clutch C3 are released, the transmission movement between the input shaft 2 and the counter gear 5 is disconnected, and the automatic transmission device 1₁ as a whole is in an idle state (neutral state).

As described above, according to the automatic transmission device 1₁ relating to the present invention, due to the planetary gear PR and the clutch C1 being configured on one side in the axial direction of the planetary gear unit PU, and the clutch C2 being configured on the other side in the axial direction of the planetary gear unit PU, the planetary gear PR and the planetary gear unit PU can be configured closely together, compared to the case wherein for example two clutches C1 and C2 are configured in between the planetary gear PR and planetary gear unit PU, and the transmitting member 30 for transmitting reduced rotation can be relatively shortened. By doing so, the automatic transmission can be made more compact and more lightweight. Further, because the inertia (force of inertia) can be reduced, the controllability of the automatic transmission can be increased, and the occurrence of speed change shock can be reduced. Further, compared to the case wherein three clutches C1, C2, C3 are configured on one side of the planetary gear unit PU, the oil lines (for example, 2a, 2b, 91, 92, 93) that supply the oil pressure servos 11, 12, and 13 of these clutches C1, C2, C3 can be constructed easily, and the manufacturing process can be simplified and the costs brought down.

Further, due to the oil pressure servos 11 and 12 being provided on the input shaft 2, one set of seal rings 81 and 82 seal the case 3 and supply oil to the oil lines 2a and 2b provided within input shaft 2, and therefore oil can be supplied to the oil chamber "a" of the oil pressure servos 11 and 12 without providing seal rings between, for example, the input shaft 2 and the oil pressure servos 11 and 12. Further, the oil pressure servo 13 can supply oil from the boss unit 3a provided from the case 3, without passing through other units for example, in other words, can supply oil by providing one set of seal rings 80. Therefore, oil can be supplied simply by providing one set of seal rings 81 and 82, 80 each for the oil pressure servos 11, 12, and 13, and sliding resistance from the seal rings can be minimized, and therefore the efficiency of the automatic transmission can be improved.

Further, since the clutch C1 is configured on the inner circumference side of the clutch C3, the clutch C3, which must transmit a relatively large torque in order to transmit the reduced rotation, can be configured on the outer circumference side, and this clutch C3 and the oil pressure servo 13 thereof can have an increased diameter. Particularly the pressure area of the oil chamber "a" of the oil pressure servo 13 can be enlarged, and the capacity capable of torque transmission of this clutch C3 can be increased. By configuring the clutch C1 which can have a smaller capacity for torque transmission compared to the clutch C3, the automatic transmission can be made more compact.

Further, because the counter gear 5 is configured in the axial direction between the planetary gear unit PU and the planetary gear PR, the counter gear 5 can be configured in approximately the center in the axial direction of the automatic transmission. For example, when the automatic transmission is mounted on the vehicle, enlarging towards one direction of the axis (particularly in the rear direction when the input side from the drive source is the front direction) can be prevented because the counter gear 5 is mounted to match the drive wheel transmission device. Because of this, particularly in the case of an FF vehicle, the interference toward the front wheels is reduced, and the mountability on a vehicle can be improved, such as the steering angle being greatly increased, for example.

Further, the automatic transmission device 1₁ according to the present embodiment is a transmission device that is directly coupled at fourth speed forward. Therefore, at fifth speed forward and sixth speed forward, the gear ratio can be specified to a high ratio, and particularly when mounted on a vehicle, in the event that the vehicle is running at a high speed, the engine revolutions can be lowered, and this contributes to the quietness of the vehicle while running at a high speed.

### <Second Embodiment>

A second embodiment, which is a partial modification of the first embodiment, will be described, with reference to Fig. 4. Fig. 4 is a schematic cross-sectional diagram illustrating the automatic transmission device of an automatic transmission relating to the second embodiment. Now, components of the second embodiment that are the same as the first embodiment will be denoted with the same reference numerals, and description thereof omitted, except for partial modifications.

As Fig. 4 illustrates, the automatic transmission device 1₂ of the automatic transmission relating to the second embodiment has the input side and output side backwards from that of the automatic transmission device 1₁ of the automatic transmission of the first embodiment. Further, the actions of the first speed forward through the sixth speed forward and the first speed reverse is similar (see Fig. 2 and Fig. 3).

Similar to the first embodiment, according to the automatic transmission device 1₂ relating to the present invention, due to the planetary gear PR and the clutch C1 being configured on one side in the axial direction of the planetary gear unit PU, and the clutch C2 being configured on the other side in the axial direction of the planetary gear unit PU, the planetary gear PR and the planetary gear unit PU can be configured closely together, compared to the case wherein, for example, two clutches C1 and C2 are configured in between the planetary gear PR and planetary gear unit PU, so the transmitting member 30 for transmitting reduced rotation can be relatively shortened. By doing so, the automatic transmission can be made more compact and more lightweight. Further, because the inertia (force of inertia) can be reduced, the controllability of the automatic transmission can be increased, and the occurrence of speed change shock can be reduced. Further, compared to the case wherein three clutches C1, C2, C3 are configured on one side of the planetary gear unit PU, the oil lines (for example, 2a, 2b, 91, 92, 93) that supply the oil pressure servos 11, 12, and 13 of these clutches C1, C2, C3 can be constructed easily, and the manufacturing process can be simplified and the costs brought down.

Further, since the oil pressure servos 11 and 12 are provided on the input shaft 2, one set of seal rings 81 and 82 seal the case 3 and supply oil to the oil lines 2a and 2b provided within input shaft 2, and therefore oil can be supplied to the oil chamber "a" of the oil pressure servos 11 and 12 without providing seal rings between, for example, the input shaft 2 and the oil pressure servos 11 and 12. Further, oil pressure servo 13 can supply oil from the boss unit 3a provided from the case 3, without passing through other units for example, in other words, can supply oil by providing one set of seal rings 80. Therefore, oil can be supplied simply by providing one set of seal rings 81 and 82, 80 each for the oil pressure servos 11, 12, and 13, and sliding resistance from the seal rings can be minimized, accordingly, the efficiency of the automatic transmission can be improved.

Further, due to the clutch C1 being configured on the inner circumference side of the clutch C3, the clutch C3, which must transmit a relatively large torque in order to transmit the reduced rotation, can be configured on the outer circumference side, and this clutch C3 and the oil pressure servo 13 thereof can have an increased diameter. Particularly, the pressure area of the oil chamber of the oil pressure servo 13 can be enlarged, and the capacity capable of torque transmission of this clutch C3 can be increased. By configuring the clutch C1 which can have a smaller capacity for torque transmission compared to the clutch C3, the automatic transmission can be made more compact.

Further, because the counter gear 5 is configured in the axial direction between the planetary gear unit PU and the planetary gear PR, the counter gear 5 can be configured in approximately the center in the axial direction of the automatic transmission. For example, when the automatic transmission is mounted on the vehicle, enlarging towards one direction of the axis (particularly in the rear direction when the input side from the drive source is the front direction) can be prevented because the counter gear 5 is mounted to match the drive wheel transmission device. Because of this, particularly in the case of an FF vehicle, the interference toward the front wheels is reduced, and the mountability on a vehicle can be improved, such as the steering angle being greatly increased, for example.

Further, the automatic transmission device 1 2 according to the present embodiment is a transmission device that is directly coupled at fourth speed forward. Therefore, at fifth speed forward and sixth speed forward, the gear ratio can be specified to a high ratio, and particularly when mounted on a vehicle, in the event that the vehicle is running at a high speed, the engine revolutions can be lowered, and this contributes to the quietness of the vehicle while running at a high speed.

### <Third Embodiment>

A third embodiment partially modified from the first embodiment will be described, with reference to Fig. 5 through Fig. 7. Fig. 5 is a schematic cross-sectional diagram illustrating the automatic transmission device of an automatic transmission relating to the third embodiment, Fig. 6 is an operational table of an automatic transmission relating to the third embodiment, and Fig. 7 is a speed line diagram of an automatic transmission relating to the third embodiment. Now, components of the third embodiment that are the same as the first embodiment will be denoted with the same reference numerals, and description thereof omitted, except for partial modifications.

As Fig. 5 illustrates, the automatic transmission device 1₃ of the automatic transmission relating to the third embodiment is a modification of the configuration of the planetary gear PR and the clutch C3 from that of the automatic transmission device 1₁ of the automatic transmission of the first embodiment (see Fig. 1).

The clutch C3 is configured on the planetary gear unit PU side (left side of diagram) of the planetary gear PR within this automatic transmission device 1₃. The inner circumference side of the front edge of the drum-shaped member 25 of this clutch C3 is splined to the friction plate 73, and the inner circumference side of this friction plate 73 is splined to the hub unit 26. Further, the drum-shaped member 25 is connected to the input shaft 2, and the hub unit 26 is connected to the sun gear S1.

Further, the side plate of the carrier CR1 is fixed and supported by the case 3. Also, the ring gear R1 is connected to the transmitting member 30, and the outer circumference side of this transmitting member 30 is splined to the friction plate 74 of the brake B1, and this transmitting member 30 is connected to the sun gear S3.

The oil chamber of this oil pressure servo 13 for the clutch C3 is connected to an oil line 2c which is formed with a double structure with oil line 2a on the above-mentioned input shaft 2, and this oil line 2c is connected to the oil line 92 of the boss unit 3a of the case 3. Further, this oil line 92 is connected to an oil pressure control unit, not illustrated. In other words, due to the above-mentioned oil pressure servo 11 and the oil pressure servo 13 being configured on input shaft 2, an oil line from the oil pressure control unit, not illustrated, to the oil chamber of the oil pressure servo 11 and the oil pressure servo 13 is configured, simply by providing seal ring 81 to seal between the boss unit 3a of the case 3 and the input shaft 2.

Continuing, based on the above-described construction, the operations of the automatic transmission device 1₃ will be described below, with reference to Fig. 5, Fig. 6, and Fig. 7. Now, similar to the above first embodiment, the vertical axis of the speed line diagram illustrated in Fig. 7 indicate the revolutions of each rotation component, and the horizontal axis indicates the corresponding gear ratio of these rotation components. Further, regarding the planetary gear unit PU section of this speed line diagram, the vertical axis to the farthest horizontal edge (the right side of Fig. 7) corresponds to the sun gear S3, and hereafter moving to the left direction within the diagram, the vertical axis corresponds to the carrier CR2, the ring gear R3, and the sun gear S2. Further, regarding the planetary gear PR section of this speed line diagram, the vertical axis to the farthest horizontal edge (the right side of Fig. 7) corresponds to the sun gear S1, and hereafter moving to the left direction within the diagram, the vertical axis corresponds to the ring gear R1 and the carrier CR1. Further, the width between these vertical axes are proportional to the inverse of the number of teeth of each of the sun gears S1, S2, S3, and to the inverse of the number of teeth of each of the ring gears R1, R3. Also, the dotted line in the horizontal direction in the diagram illustrate that the rotation is transmitted from the transmitting member 30.

As Fig. 5 illustrates, the rotation of input shaft 2 is input to the above-mentioned sun gear S1 by engaging the clutch C3. Further, the rotation of the above-mentioned carrier CR1 is fixed as to the case 3, and the above-mentioned ring gear R1 rotates at reduced rotations based on the rotation of input shaft 2 which is input to this sun gear S1. In other words, by engaging the clutch C3 the reduced rotation of the ring gear R1 is input to the sun gear S3 via the transmitting member 30.

By doing so, as Fig. 6 and Fig. 7 illustrate, regarding the planetary gear PR, at third speed forward, fifth speed forward, and first speed reverse, the rotation of the input shaft 2 is input to the sun gear S1 by engaging the clutch C3, and the reduced rotation is output to the ring gear R3 by the fixed carrier CR1, and the reduced rotation is input to the sun gear S3 via the transmitting member 30. In this case, the ring gear R1 and the sun gear S3 are rotating at reduced speed, therefore the above-mentioned transmitting member 30 performs a relatively large torque transmission. On the other hand, at first speed forward, second speed forward, fourth speed forward, and sixth speed forward, the rotation of the sun gear S3 is input to the ring gear R1 via the transmitting member 30, and further, because the clutch C3 is released, as Fig. 7 illustrates, the sun gear S1 rotates based on each the rotation within the speed level of this ring gear R1 and the fixed carrier CR1.

Now, the actions other than those of the above-mentioned planetary gear PR are similar to those of the above-described first embodiment (see Fig. 2 and Fig. 3), and accordingly description thereof will be omitted.

As described above, according to the automatic transmission device 1₃ relating to the present invention, due to the planetary gear PR and the clutch C1 being configured on one side in the axial direction of the planetary gear unit PU, and the clutch C2 being configured on the other side in the axial direction of the planetary gear unit PU, the planetary gear PR and the planetary gear unit PU can be configured closely together, compared to the case wherein for example two clutches C1 and C2 are configured in between the planetary gear PR and planetary gear unit PU, and the transmitting member 30 for transmitting reduced rotation can be relatively shortened. By doing so, the automatic transmission can be made more compact and more lightweight. Further, because the inertia (force of inertia) can be reduced, the controllability of the automatic transmission can be increased, and the occurrence of speed change shock can be reduced. Further, compared to the case wherein three clutches C1, C2, C3 are configured on one side of the planetary gear unit PU, the oil lines (for example, 2a, 2b, 91, 92, 93) that supply the oil pressure servos 11, 12, and 13 of these clutches C1, C2, C3 can be constructed easily, and the manufacturing process can be simplified and the costs brought down.

Further, due to the oil pressure servos 11, 12, and 13 are provided on the input shaft 2, the seal rings 81 and 82 seal the case 3 and supply oil to the oil lines 2a and 2b, 2c provided within input shaft 2, and therefore oil can be supplied to the oil chamber of oil pressure servos 11, 12, and 13 without providing the seal rings between, for example, the input shaft 2 and the oil pressure servos 11, 12, and 13. Therefore, oil can be supplied simply by providing the seal rings 81 and 82 each for the oil pressure servos 11, 12, and 13, and sliding resistance from the seal rings can be minimized, and therefore the efficiency of the automatic transmission can be improved.

Further, because the counter gear 5 is configured in the axial direction between the planetary gear unit PU and the planetary gear PR, the counter gear 5 can be configured in approximately the center in the axial direction of the automatic transmission. For example, when the automatic transmission is mounted on the vehicle, enlarging towards one direction of the axis (particularly in the rear direction when the input side from the drive source is the front direction) can be prevented because the counter gear 5 is mounted to match the drive wheel transmission device. Because of this, particularly in the case of an FF vehicle, the interference toward the front wheels is reduced, and the mountability on a vehicle can be improved, such as the steering angle being greatly increased, for example.

Further, in the event that the clutch C3 is placed between the ring gear R1 and the sun gear S3 for example, the reduced rotation must be engaged and disengaged, and becomes relatively large, but by placing between the input shaft 2 and the sun gear S1, the engaging and disengaging of the rotation of the input shaft 2 from this clutch C3 causes the reduced rotation output from the ring gear R1 of the planetary gear PR is to be engaged and disengaged, and the clutch C3 can be made more compact, and therefore the automatic transmission can be made more compact.

Further, the automatic transmission device 1₃ according to the present embodiment is a transmission device that is directly coupled at fourth speed forward. Therefore, at fifth speed forward and sixth speed forward, the gear ratio can be specified to a high ratio, and particularly when mounted on a vehicle, in the event that the vehicle is running at a high speed, the engine revolutions can be lowered, and this contributes to the quietness of the vehicle while running at a high speed.

### <Fourth Embodiment>

Below, the fourth embodiment, which is a partial modification of the first embodiment, will be described, with reference to Fig. 8 through Fig. 10. Fig. 8 is a schematic cross-sectional diagram illustrating the automatic transmission device of an automatic transmission relating to the fourth embodiment, Fig. 9 is an operational table of an automatic transmission relating to the fourth embodiment, and Fig. 10 is a speed line diagram of an automatic transmission relating to the fourth embodiment. Now, components of the fourth embodiment which are the same as those of the first embodiment will be denoted with the same reference numerals, and description thereof omitted, except for partial modifications.

As Fig. 8 illustrates, the automatic transmission device 1₄ of the automatic transmission relating to the fourth embodiment comprises a brake (third brake) B3 instead of the clutch C3, and the carrier CR1 of the planetary gear PR is can be fixed by the brake B3, in comparison with that of the automatic transmission device 1₁ of the automatic transmission of the first embodiment (see Fig. 1).

The brake B3 is configured on the opposite side of the planetary gear unit PU (right side of diagram) of the planetary gear PR within this automatic transmission device 1₄. This brake B3 has an oil pressure servo 16, a friction plate 76, and a hub unit 33.

The hub unit 33 of this brake B3 is connected on one side plate of the carrier CR1, and this carrier CR1 is supported by the boss unit 3a or the input shaft 2, so as to be capable of rotation. Further, the sun gear S1 is connected to the input shaft 2. Further, the friction plate 74 of the brake B1 is splined to the outer circumference side of the ring gear R1, this ring gear R1 is connected to the transmitting member 30, and the sun gear S3 is connected via this transmitting member 30.

Continuing, based on the above-mentioned construction, the operations of an automatic transmission device 1₄ will be described, with reference to Fig. 8, Fig. 9, and Fig. 10 below. Now, as with the above-mentioned first embodiment, the vertical axis of the speed line diagram illustrated in Fig. 10 indicate the revolutions of each rotation component, and the horizontal axis indicates the corresponding gear ratio of these rotation components. Further, regarding the planetary gear unit PU section of this speed line diagram, the vertical axis to the farthest horizontal edge (the right side of Fig. 10) corresponds to sun gear S3, and hereafter moving to the left direction within the diagram, the vertical axis corresponds to the carrier CR2, the ring gear R2, and the sun gear S2. Further, regarding the planetary gear PR section of this speed line diagram, the vertical axis to the farthest horizontal edge (the right side of Fig. 10) corresponds to sun gear S1, and hereafter moving to the left direction within the diagram, the vertical axis corresponds to the ring gear R1 and the carrier CR1. Further, the width between these vertical axes are proportional to the inverse of the number of teeth of each of the sun gears S1, S2, S3, and to the inverse of the number of teeth of each of the ring gears R1, R3. Also, the dotted line in the horizontal direction in the diagram illustrate that the rotation is transmitted from the transmitting member 30.

As Fig. 8 illustrates, the above-mentioned carrier CR1 is fixed to the case 3 by retaining with the brake B3. Further, the rotation of the input shaft 2 is input to the sun gear S1, and the above-mentioned ring gear R1 rotates at reduced rotations based on the rotation of input shaft 2 which is input to this sun gear S1, because the carrier CR1 is fixed. In other words, by engaging the brake B3, the reduced rotation of the ring gear R1 is input to the sun gear S3 via the transmitting member 30.

By doing so, as Fig. 9 and Fig. 10 illustrate, regarding the planetary gear PR, at third speed forward, fifth speed forward, and first speed reverse, the rotation of the input shaft 2 is input to the sun gear S1 by retaining with the brake B3, the carrier CR1 is fixed, and the reduced rotation is output to the ring gear R3 by the rotation of the sun gear S1 wherein the rotation of the input shaft 2 is input, and the reduced rotation is input to the sun gear S3 via the transmitting member 30. In this case, the ring gear R1 and the sun gear S3 are rotating at reduced speed, and therefore the above-mentioned transmitting member 30 performs a relatively large torque transmission. On the other hand, at first speed forward, second speed forward, fourth speed forward, and sixth speed forward, the rotation of the sun gear S3 is input to the ring gear R1 via the transmitting member 30, and further, because the brake B3 is released, as Fig. 10 illustrates, the carrier CR1 rotates based on each the rotation within the speed level of this ring gear R1 and the sun gear S1 of the rotation of the input shaft 2.

Now, the actions other than those of the above-mentioned planetary gear PR are similar to those of the above-described first embodiment (see Fig. 2 and Fig. 3), and accordingly description thereof will be omitted.

As described above, according to the automatic transmission device 1₃ relating to the present invention, due to the planetary gear PR and the clutch C1 being configured on one side in the axial direction of the planetary gear unit PU, and the clutch C2 being configured on the other side in the axial direction of the planetary gear unit PU, the planetary gear PR and the planetary gear unit PU can be configured closely together, compared to the case wherein for example two clutches C1 and C2 are configured in between the planetary gear PR and planetary gear unit PU, and the transmitting member 30 for transmitting reduced rotation can be relatively shortened. By doing so, the automatic transmission can be made more compact and more lightweight. Further, because the inertia (force of inertia) can be reduced, the controllability of the automatic transmission can be increased, and the occurrence of speed change shock can be reduced.

Further, since the oil pressure servos 11 and 12 are provided on the input shaft 2, the seal rings 81 and 82 seal the case 3 and supply oil to the oil lines 2a and 2b provided within input shaft 2, and therefore oil can be supplied to the oil chamber of oil pressure servos 11 and 12 without providing seal rings between, for example, the input shaft 2 and the oil pressure servos 11 and 12. Therefore, oil can be supplied simply by providing the seal rings 81 and 82 each for the oil pressure servos 11 and 12, and sliding resistance from the seal rings can be minimized, and therefore the efficiency of the automatic transmission can be improved.

Further, because the counter gear 5 is configured in the axial direction between the planetary gear unit PU and the planetary gear PR, the counter gear 5 can be configured in approximately the center in the axial direction of the automatic transmission. For example, when the automatic transmission is mounted on the vehicle, enlarging towards one direction of the axis (particularly in the rear direction when the input side from the drive source is the front direction) can be prevented because the counter gear 5 is mounted to match the drive wheel transmission device. Because of this, particularly in the case of an FF vehicle, the interference toward the front wheels is reduced, and the mountability on a vehicle can be improved, such as the steering angle being greatly increased, for example.

Further, because the reduced rotation output to the planetary gear unit PU from the planetary gear PR is engaged and disengaged by the brake B3, the number of parts (for example, drum-shaped members and so forth) can be reduced compared to the case wherein, for example, a clutch C3 is provided. Further, the brake B3 can configure an oil line directly from the case 3, and therefore the configuration of the oil line can be simplified as compared to the case wherein, for example, a clutch C3 is provided.

Further, the automatic transmission device 1₄ according to the present embodiment is a transmission device that is directly coupled at fourth speed forward. Therefore, at fifth speed forward and sixth speed forward, the gear ratio can be specified to a high ratio, and particularly when mounted on a vehicle, in the event that the vehicle is running at a high speed, the engine revolutions can be lowered, and this contributes to the quietness of the vehicle while running at a high speed.

### <Fifth Embodiment>

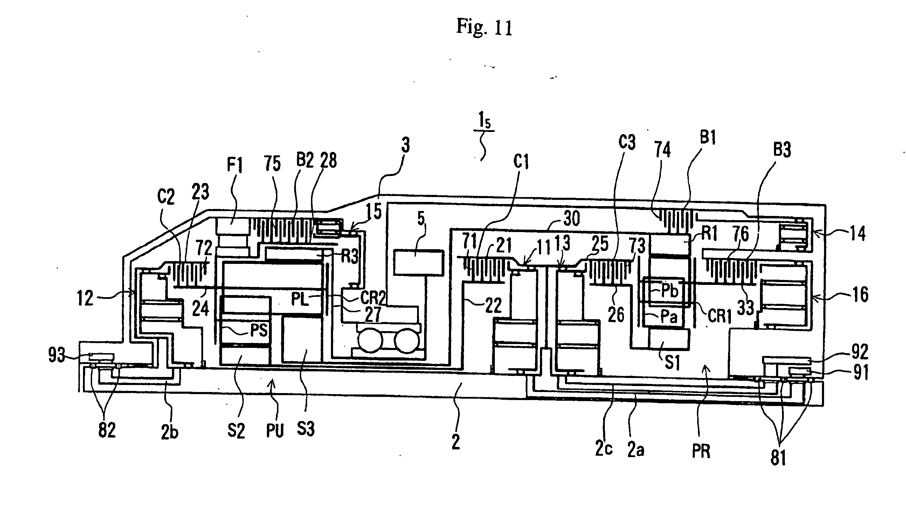

Below, the fifth embodiment, which is a partial modification of the first embodiment, will be described, with reference to Fig. 11. Fig. 11 is a schematic cross-sectional diagram illustrating the automatic transmission device of an automatic transmission relating to the fifth embodiment. Now, the fifth embodiment will be described in an abbreviated manner, using the same reference numerals for parts that are the same as the first embodiment, except for partial modifications.

As Fig. 11 illustrates, the automatic transmission device 1₅ of the automatic transmission relating to the third embodiment is a modification of the configuration of the planetary gear PR and the clutch C3 from that of the automatic transmission device 1₁ of the automatic transmission of the first embodiment (see Fig. 1), and further, a brake B3 is configured, and the carrier CR1 of the planetary gear PR can be fixed by the brake B3.

The clutch C3 is configured on the planetary gear unit PU side (left side of diagram) of the planetary gear PR within this automatic transmission device 1₅, and the brake B3 is configured on the planetary gear PR on the opposite side from the planetary gear unit PU. The inner circumference side of the front edge of the drum-shaped member 25 of this clutch C3 is splined to the friction plate 73, and the inner circumference side of this friction plate 73 is splined to the hub unit 26. Further, the drum-shaped member 25 is connected to the input shaft 2, and the hub unit 26 is connected to the sun gear S1.

The brake B3 is configured on the opposite side of the planetary gear unit PU (right side of diagram) of the planetary gear PR. This brake B3 comprises an oil pressure servo 16, a friction plate 76, and a hub unit 33. The friction plate 76 is splined on the outer circumference side of the hub unit 33 of this brake B3, and the hub unit 33 is connected to one side plate of the carrier CR1, and this carrier CR1 is supported by the input shaft 2 or the boss unit 3a so as to rotate. Also, the friction plate 74 of the brake B1 is splined on the outer circumference side of the ring gear R1, and this ring gear R1 is connected to the transmitting member 30, and the sun gear S3 is connected via this transmitting member 30.

The oil chamber of this oil pressure servo 13 for the clutch C3 is connected to an oil line 2c which is formed as a doubled construction with oil line 2a on the above-mentioned input shaft 2, and this oil line 2c is connected to the oil line 92 of the boss unit 3a of the case 3. Further, this oil line 92 is connected to an oil pressure control unit, not illustrated. In other words, because the above-mentioned oil pressure servo 11 and the oil pressure servo 13 are configured on input shaft 2, an oil line from the oil pressure control unit, not illustrated, to the oil chamber of the oil pressure servo 11 and the oil pressure servo 13 is configured, simply by providing seal ring 81 to seal between the boss unit 3a of the case 3 and the input shaft 2.

Continuing, based on the above-mentioned construction, the operations of the automatic transmission device 1₅ will be described, with reference to Fig. 11, Fig. 2, and Fig. 3 below. Now, the present fifth embodiment is similar to the first embodiment, and therefore will be described based on the engagement chart and the speed line diagram described in the first embodiment (see Fig. 2 and Fig. 3).

As Fig. 11 illustrates, the rotation of input shaft 2 is input to the above-mentioned sun gear S1 by engaging the clutch C3. Further, the rotation of the above-mentioned carrier CR1 is fixed to the case 3, by the brake B3 retaining. Therefore, upon the clutch C3 engaging and the brake B3 retaining, the above-mentioned ring gear R1 rotates at reduced rotations based on the rotation of input shaft 2 which is input to this sun gear S1. In other words, by engaging the clutch C3 and retaining the brake B3, the reduced rotation of the ring gear R1 is input to the sun gear S3 via the transmitting member 30.

By doing so, as Fig. 2 and Fig. 3 illustrate, regarding the planetary gear PR, at third speed forward, fifth speed forward, and first speed reverse, the rotation of the input shaft 2 is input to the sun gear S1 by engaging the clutch C3, and further, the carrier CR1 is fixed by retaining the brake B3, and therefore the reduced rotation is output to the ring gear R3 by the fixed carrier CR1, and the reduced rotation is input to the sun gear S3 via the transmitting member 30. In this case, the ring gear R1 and the sun gear S3 are rotating at reduced speed, therefore the above-mentioned transmitting member 30 performs a relatively large torque transmission. On the other hand, at first speed forward, second speed forward, fourth speed forward, and sixth speed forward, the rotation of the sun gear S3 is input to the ring gear R1 via the transmitting member 30, but because the clutch C3 and the brake B3 are released, the carrier CR1 and the sun gear S1 are freely rotating.

Now, the actions other than those of the above-mentioned planetary gear PR are similar to those of the above-described first embodiment (see Fig. 2 and Fig. 3), and accordingly description thereof will be omitted.

As described above, according to the automatic transmission device 1₅ relating to the present invention, due to the planetary gear PR and the clutch C1 being configured on one side in the axial direction of the planetary gear unit PU, and the clutch C2 being configured on the other side in the axial direction of the planetary gear unit PU, the planetary gear PR and the planetary gear unit PU can be configured closely together, compared to the case wherein for example two clutches C1 and C2 are configured in between the planetary gear PR and planetary gear unit PU, and the transmitting member 30 for transmitting reduced rotation can be relatively shortened. By doing so, the automatic transmission can be made more compact and more lightweight. Further, because the inertia (force of inertia) can be reduced, the controllability of the automatic transmission can be increased, and the occurrence of speed change shock can be reduced. Further, compared to the case wherein three clutches C1, C2, C3 are configured on one side of the planetary gear unit PU, the oil lines (for example, 2a, 2b, 91, 92, 93) that supply the oil pressure servos 11, 12, and 13 of these clutches C1, C2, C3 can be constructed easily, and the manufacturing process can be simplified and the costs brought down.

Further, since the oil pressure servos 11, 12, and 13 are provided on the input shaft 2, the seal rings 81 and 82 seal the case 3 and supply oil to the oil lines 2a and 2b, 2c provided within input shaft 2, and therefore oil can be supplied to the oil chamber of oil pressure servos 11, 12, and 13 without providing the seal rings between, for example, the input shaft 2 and the oil pressure servos 11, 12, and 13. Therefore, oil can be supplied simply by providing the seal rings 81 and 82 each for the oil pressure servos 11, 12, and 13, and sliding resistance from the seal rings can be minimized, and therefore the efficiency of the automatic transmission can be improved.

Further, due to the counter gear 5 being configured in the axial direction between the planetary gear unit PU and the planetary gear PR, the counter gear 5 can be configured in approximately the center in the axial direction of the automatic transmission. For example, when the automatic transmission is mounted on the vehicle, enlarging towards one direction of the axis (particularly in the rear direction when the input side from the drive source is the front direction) can be prevented because the counter gear 5 is mounted to match the drive wheel transmission device. Because of this, particularly in the case of an FF vehicle, the interference toward the front wheels is reduced, and the mountability on a vehicle can be improved, such as the steering angle being greatly increased, for example.

Further, in the event that the clutch C3 is placed between the ring gear R1 and the sun gear S3 for example, the reduced rotation must be engaged and disengaged, and becomes relatively large, but by placing between the input shaft 2 and the sun gear S1, the engaging and disengaging of the rotation of the input shaft 2 from this clutch C3 causes the reduced rotation output from the ring gear R1 of the planetary gear PR to be engaged and disengaged, and the clutch C3 can be made more compact, and therefore the automatic transmission can be made more compact.

Further, the automatic transmission device 1₅ according to the present embodiment is a transmission device that is directly coupled at fourth speed forward. Therefore, at fifth speed forward and sixth speed forward, the gear ratio can be specified to a high ratio, and particularly when mounted on a vehicle, in the event that the vehicle is running at a high speed, the engine revolutions can be lowered, and this contributes to the quietness of the vehicle while running at a high speed.

### <Sixth Embodiment>

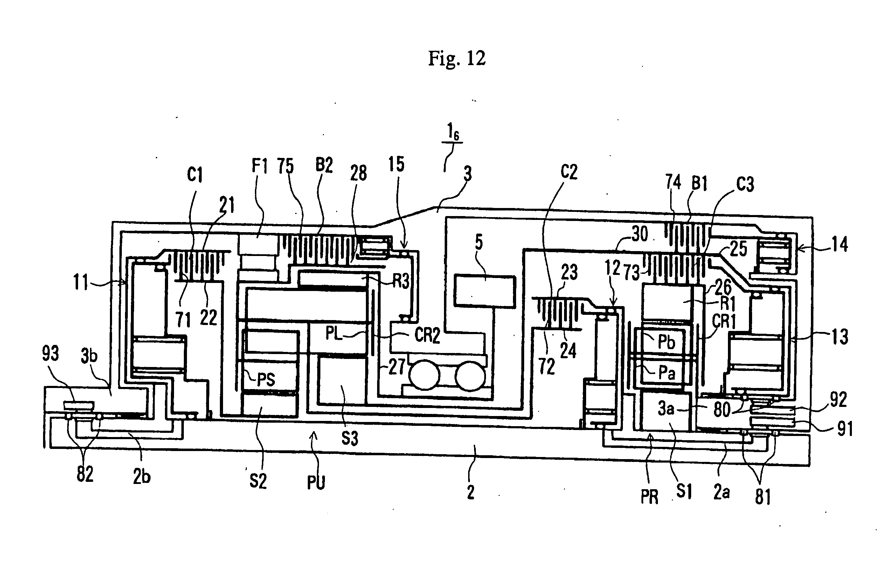

Below, the sixth embodiment, which is a partial modification of the first embodiment, will be described, with reference to Fig. 12. Fig. 12 is a schematic cross-sectional diagram illustrating the automatic transmission device of an automatic transmission relating to the sixth embodiment. Now, components of the sixth embodiment which are the same as those of the first embodiment will be denoted with the same reference numerals, and description thereof omitted, except for partial modifications.

As Fig. 12 illustrates, the automatic transmission device 1₆ of the automatic transmission relating to the sixth embodiment configures the clutch C2 on one side in the axial direction wherein the planetary gear PR of the planetary gear unit PU is configured, and the clutch C2 is configured on the other side in the axial direction, in other words, the configuration is such that the positions where the clutch C1 and the clutch C2 are disposed are switched as compared to that of the automatic transmission device 1₁ of the automatic transmission of the first embodiment (see Fig. 1).

This automatic transmission device 1₆ comprises a multi-disc clutch C2 comprising an oil pressure servo 12, a friction plate 72, a drum-shaped member 23 that forms a clutch drum, a hub unit 24 linked to a sun gear S2 on the inner circumference side of the above-mentioned input shaft 2, and a multi-disc clutch C3 comprising an oil pressure servo 13, a friction plate 73, a drum-shaped member 25 that forms a clutch drum, a hub unit 24 linked to a sun gear S2 on the outer circumference side. Further, a multi-disc brake B1 comprising an oil pressure servo 14 and a friction plate 74.

The above drum-shaped member 23 is connected to the above input shaft 2, and on the inner circumference side of the front edge of this drum-shaped member 23 is configured by splining to the friction plate 72 of the clutch C2 which can be engaged by the oil pressure servo 12 of the clutch C2, and the inner circumference side of the friction plate 72 of this clutch C2 is connected to the hub unit 24 by splining. Further, this hub unit 24 is connected to the above-mentioned carrier CR2.

On the other hand, on the other edge of the input shaft 2 (left of the diagram) is configured a multi-disc clutch C1 comprising an oil pressure servo 11, a friction plate 71, a drum-shaped member 21 that forms a clutch drum, a hub unit 22 linked to a sun gear S2.

Further, on the above-mentioned input shaft 2, as in the left side of the diagram, the drum-shaped member 21 is connected, on the inner circumference side of the front edge of this drum-shaped member 21 is configured by means of splining the friction plate 71 of the clutch C1 that can engage by the oil pressure servo 11 for the clutch C1. On the inner circumference side of the friction plate 71 of this clutch C1 the hub unit 22 is splined, and this hub unit 22 is connected to the above-mentioned sun gear S2.

The operations of the automatic transmission device 1₆, based on the above construction, are similar to those of the above-mentioned first embodiment (see Fig. 2 and Fig. 3), and accordingly description thereof will be omitted.

As described above, according to the automatic transmission device 1₆ relating to the present invention, due to the planetary gear PR and the clutch C2 being configured on one side in the axial direction of the planetary gear unit PU, and the clutch C1 being configured on the other side in the axial direction of the planetary gear unit PU, the planetary gear PR and the planetary gear unit PU can be configured closely together, compared to the case wherein for example two clutches C1 and C2 are configured in between the planetary gear PR and planetary gear unit PU, and the transmitting member 30 for transmitting reduced rotation can be relatively shortened. By doing so, the automatic transmission can be made more compact and more lightweight. Further, because the inertia (force of inertia) can be reduced, the controllability of the automatic transmission can be increased, and the occurrence of speed change shock can be reduced. Further, compared to the case wherein three clutches C1, C2, C3 are configured on one side of the planetary gear unit PU, the oil lines (for example, 2a, 2b, 91, 92, 93) that supply the oil pressure servos 11, 12, and 13 of these clutches C1, C2, C3 can be constructed easily, and the manufacturing process can be simplified and the costs brought down.

Further, since the oil pressure servos 11 and 12 are provided on the input shaft 2, one set of seal rings 81 and 82 seal the case 3 and supply oil to the oil lines 2a and 2b provided within input shaft 2, and therefore oil can be supplied to the oil chamber of oil pressure servos 11 and 12 without providing the seal rings between, for example, the input shaft 2 and the oil pressure servos 11 and 12. Further, the oil pressure servo 13 can supply oil from the boss unit 3a extended from the case 3, without passing through other parts for example, and therefore can supply oil by providing one set of seal rings 80. Therefore, oil can be supplied simply by providing one set of seal rings 81 and 82 each for the oil pressure servos 11 and 12, and sliding resistance from the seal rings can be minimized, and therefore the efficiency of the automatic transmission can be improved.

Further, since the clutch C2 is configured on the inner circumference side of the clutch C3, the clutch C3, which must transmit a relatively large torque in order to transmit the reduced rotation, can be configured on the outer circumference side, and this clutch C3 and the oil pressure servo 13 thereof can have an increased diameter. Particularly the pressure area of the oil chamber of the oil pressure servo 13 can be enlarged, and the capacity capable of torque transmission of this clutch C3 can be increased. By configuring the clutch C2 which can have a smaller capacity for torque transmission compared to the clutch C3, the automatic transmission can be made more compact.

Further, because the counter gear 5 is configured in the axial direction between the planetary gear unit PU and the planetary gear PR, the counter gear 5 can be configured in approximately the center in the axial direction of the automatic transmission. For example, when the automatic transmission is mounted on the vehicle, enlarging towards one direction of the axis (particularly in the rear direction when the input side from the drive source is the front direction) can be prevented because the counter gear 5 is mounted to match the drive wheel transmission device. Because of this, particularly in the case of an FF vehicle, the interference toward the front wheels is reduced, and the mountability on a vehicle can be improved, such as the steering angle being greatly increased, for example.

Further, the clutch C1 is a clutch which engages at the relatively slow to medium speed levels of first speed forward, second speed forward, third speed forward, and fourth speed forward, and therefore when this clutch C1 is released at the relatively high speed levels of fifth speed forward, sixth speed forward, or first speed reverse, particularly the hub unit 22 that connects this clutch C1, and the sun gear S2 rotates at a relatively high revolution or revolves in reverse (see Fig. 7). On the other hand, at the fifth speed forward or first speed reverse the transmitting member 30 reduces rotation speed, and at the sixth speed forward the transmitting member 30 may be fixed in some cases, and difference in revolutions between the hub unit 22 and the transmitting member 30 can occur. However, because this clutch C1 is located on the opposite side of the planetary gear PR via the planetary gear unit PU, the hub unit 22 and the transmitting member 30 can be configured apart from one another. Compared with a case wherein these units are in contact due to a multi-axial configuration for example, decreased efficiency of the automatic transmission resulting from friction and so forth from the relative rotation of those units can be prevented.

Further, the automatic transmission device 1₆ according to the present embodiment is a transmission device that is directly coupled at fourth speed forward. Therefore, at fifth speed forward and sixth speed forward, the gear ratio can be specified to a high ratio, and particularly when mounted on a vehicle, in the event that the vehicle is running at a high speed, the engine revolutions can be lowered, and this contributes to the quietness of the vehicle while running at a high speed.

Now, the linking member (in particular the transmitting member) for linking the planetary gear PR and the planetary gear unit PU requires rigidity to withstand the reduced speed torque that is input. For example, in the case of configuring a clutch that engages at a slow to medium speed or a clutch that engages and disengages reduced rotations on the inner circumference side of the linking member, the clutches must have a large capacity, therefore an appropriate diameter to correspond with this capacity becomes necessary. Therefore, in the event that the linking member is the type that passes on the outer circumference side of this type of clutch, even a larger diameter than the necessary diameter measurement of those clutches becomes necessary, and the diameter measurement of the linking member is enlarged more than necessary, and the automatic transmission as a whole becomes greater in the radial direction. Accordingly, it is an object of this embodiment to reduce the enlargement of the diameter measurement, and provide a compact automatic transmission.

According to the present embodiment, all clutches can be configured without enlarging the diameter measurement of the linking member, by configuring a clutch C2 with a small capacity on the linking member, particularly on the inner circumference side of the transmitting member 30.

### <Seventh Embodiment>

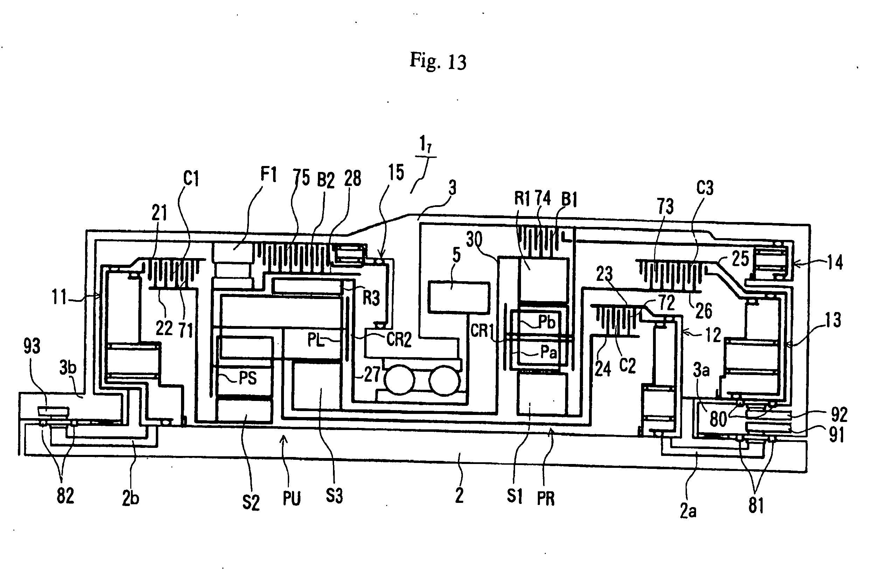

The seventh embodiment partially modified from the sixth embodiment will be described now, with reference to Fig. 13. Fig. 13 is a schematic cross-sectional diagram illustrating the automatic transmission device of an automatic transmission relating to the seventh embodiment. Now, components of the seventh embodiment which are the same as those of the sixth embodiment will be denoted with the same reference numerals, and description thereof omitted, except for partial modifications.

As Fig. 13 illustrates, the automatic transmission device 1₇ of the automatic transmission relating to the seventh embodiment is a modification of the configuration of the planetary gear PR and the clutch C2 and the clutch C3, compared to that of the automatic transmission device 1₆ of the automatic transmission of the sixth embodiment (see Fig. 12).

The clutch C2 and the clutch C3 is configured on the opposite side of the planetary gear unit PU (right side of diagram) of the planetary gear PR within this automatic transmission device 1₇. The inner circumference side of the front edge of the drum-shaped member 25 of this clutch C3 is splined to the friction plate 73, and the inner circumference side of this friction plate 73 is splined to the hub unit 26. The drum-shaped member 25 is connected to the input shaft 2, and the hub unit 26 is connected to the sun gear S1 of the planetary gear PR. Further, the clutch C2 comprising a oil pressure servo 12, a friction plate 72, a drum-shaped member 23, and a hub unit 24 is configured on the inner circumference side of the above-mentioned clutch C3, that is to say, is enclosed within the hub unit 26.

On the other hand, on the outer circumference side of the planetary gear PR is configured a multi-disc brake B1 that comprises an oil pressure servo 14 and a friction plate 74. the side plate of the carrier CR1 of this planetary gear PR is fixed and supported by the case 3. Further, the ring gear R1 is connected to the transmitting member 30, and the friction plate 74 of the brake B1 is splined to the outer circumference side of this transmitting member 30, and this transmitting member 30 is connected to the sun gear S3.

The operations of the automatic transmission device 1₇, based on the above construction, are similar to those of the third embodiment (see Fig. 6 and Fig. 7), and accordingly description thereof will be omitted.

As described above, according to the automatic transmission device 1₇ relating to the present invention, due to the planetary gear PR and the clutch C2 being configured on one side in the axial direction of the planetary gear unit PU, and the clutch C1 being configured on the other side in the axial direction of the planetary gear unit PU, the planetary gear PR and the planetary gear unit PU can be configured closely together, compared to the case wherein for example two clutches C1 and C2 are configured in between the planetary gear PR and planetary gear unit PU, and the transmitting member 30 for transmitting reduced rotation can be relatively shortened. By doing so, the automatic transmission can be made more compact and more lightweight. Further, because the inertia (force of inertia) can be reduced, the controllability of the automatic transmission can be increased, and the occurrence of speed change shock can be reduced. Further, compared to the case wherein three clutches C1, C2, C3 are configured on one side of the planetary gear unit PU, the oil lines (for example, 2a, 2b, 91, 92, 93) that supply the oil pressure servos 11, 12, and 13 of these clutches C1, C2, C3 can be constructed easily, and the manufacturing process can be simplified and the costs brought down.

Further, since the oil pressure servos 11 and 12 are provided on the input shaft 2, one set of seal rings 81 and 82 seal the case 3 and supply oil to the oil lines 2a and 2b provided within input shaft 2, and therefore oil can be supplied to the oil chamber of oil pressure servos 11 and 12 without providing the seal rings between, for example, the input shaft 2 and the oil pressure servos 11 and 12. Further, the oil pressure servo 13 can supply oil from the boss unit 3a extended from the case 3, without passing through other parts for example, and therefore can supply oil by providing one set of seal rings 80. Therefore, oil can be supplied simply by providing one set of seal rings 81, 82, and 80 each for the oil pressure servos 11, 12, and 13, and sliding resistance from the seal rings can be minimized, and therefore the efficiency of the automatic transmission can be improved.

Further, since the counter gear 5 is configured in the axial direction between the planetary gear unit PU and the planetary gear PR, the counter gear 5 can be configured in approximately the center in the axial direction of the automatic transmission. For example, when the automatic transmission is mounted on the vehicle, enlarging towards one direction of the axis (particularly in the rear direction when the input side from the drive source is the front direction) can be prevented because the counter gear 5 is mounted to match the drive wheel transmission device. Because of this, particularly in the case of an FF vehicle, the interference toward the front wheels is reduced, and the mountability on a vehicle can be improved, such as the steering angle being greatly increased, for example.

Further, the clutch C1 is a clutch which engages at the relatively slow to medium speed levels of first speed forward, second speed forward, third speed forward, and fourth speed forward, and therefore when this clutch C1 is released at the relatively high speed levels of fifth speed forward, sixth speed forward, or first speed reverse, particularly the hub unit 22 that connects this clutch C1 and the sun gear S2 rotates at a relatively high revolution or revolves in reverse (see Fig. 7). On the other hand, at a fifth speed forward or first speed reverse the transmitting member 30 reduces rotation speed, and at a sixth speed forward the transmitting member 30 can engage, and difference in revolutions between the hub unit 22 and the transmitting member 30 can occur. However, because this clutch C1 is located on the opposite side of the planetary gear PR via the planetary gear unit PU, the hub unit 22 and the transmitting member 30 can be configured apart from one another. In comparison with the case wherein, for example, these members are in contact due to a multi-axial configuration, decreased efficiency of the automatic transmission resulting from friction and so forth from the relative rotation of those units can be prevented.

Further, in the event that the clutch C3 is placed between the ring gear R1 and the sun gear S3 for example, the reduced rotation must be engaged and disengaged, and becomes relatively large, but by placing between the input shaft 2 and the sun gear S1, the engaging and disengaging of the rotation of the input shaft 2 from this clutch C3 causes the reduced rotation output from the ring gear R1 of the planetary gear PR to be engaged and disengaged, and the clutch C3 can be made more compact, and therefore the automatic transmission can be made more compact.

Further, the automatic transmission device 1₇ according to the present embodiment is a transmission device that is directly coupled at fourth speed forward. Therefore, at fifth speed forward and sixth speed forward, the gear ratio can be specified to a high ratio, and particularly when mounted on a vehicle, in the event that the vehicle is running at a high speed, the engine revolutions can be lowered, and this contributes to the quietness of the vehicle while running at a high speed.

Now, when a clutch is configured in between the planetary gear PR and the planetary gear unit PU for example, the length of the linking member (particularly the transmitting member) that links the planetary gear PR and the planetary gear unit PU becomes longer in the axial direction, and because this linking member is for transmitting the reduced rotation, the thickness of the unit must be increased so as to withstand this, and therefore the weight also increases. Therefore an object of the present invention is to provide an automatic transmission that can shorten the distance between the speed reduction planetary gear and the planetary gear unit, and reduce the increase in weight.

With the present embodiment, in particular, the clutch C2 is disposed on the opposite side in the axial direction of the planetary gear unit PU from the planetary gear PR, and therefore, providing a clutch between the planetary gear PR and the planetary gear unit PU is not necessary, and the length of the linking member, particularly the transmitting member 30 can be made that much shorter. Therefore, increase in weight of the automatic transmission as a whole can be prevented.

### <Eighth Embodiment>

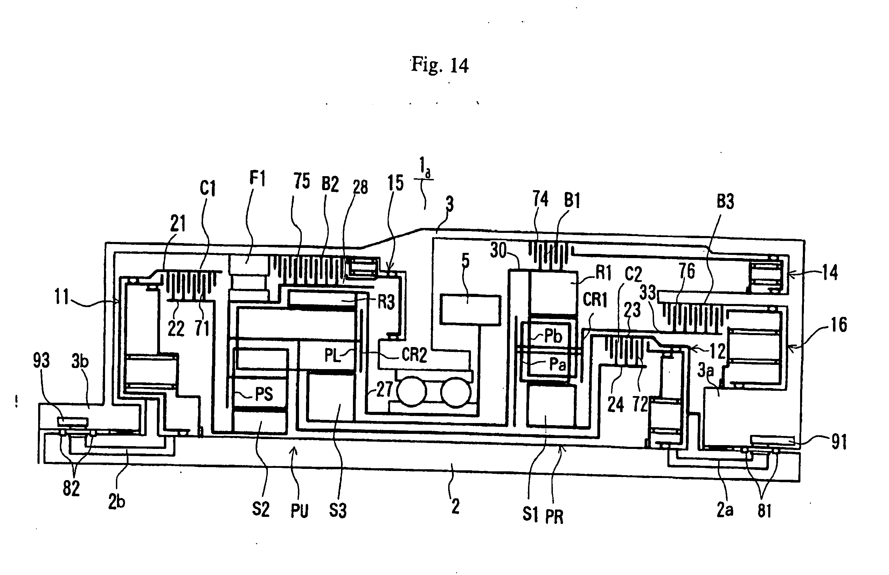

Now, the eighth embodiment which is a partial modification of the sixth embodiment will be described, with reference to Fig. 14. Fig. 14 is a schematic cross-sectional diagram illustrating the automatic transmission device of an automatic transmission relating to the eighth embodiment. Now, components of the eighth embodiment which are the same as those of the sixth embodiment will be denoted with the same reference numerals, and description thereof omitted, except for partial modifications.

As Fig. 14 illustrates, the automatic transmission device 1₈ of the automatic transmission relating to the eighth embodiment is a modification of the configuration of the clutch C2, and further, configures a brake B3 instead of a clutch C3, and enables the carrier CR1 of planetary gear PR to be fixed by the brake B3, as compared with that of the automatic transmission device 1₆ of the automatic transmission of the first embodiment (see Fig. 12).

Within the automatic transmission device 1₈, the brake B3 is configured on the planetary gear PR, on the opposite (right side on the diagram) from the planetary gear unit PU. This brake B3 comprises an oil pressure servo 16, a friction plate 76, and a hub unit 33. Further, the clutch C2, comprising an oil pressure servo 12, a friction plate 72, a drum-shaped member 23, and a hub unit 24, is configured on the inner circumference side of above-mentioned brake B3, that is to say, is enclosed within the hub unit 33. The hub unit 33 of this brake B3 is connected to the side plate of one side of the carrier CR1, and the side plate of the other side of this carrier CR1 is supported by the input shaft 2 so as to be capable of rotating. Further, the sun gear S1 is connected to the input shaft 2 via the drum-shaped member 24 of the clutch C2. Also, the friction plate 74 of the brake B1 is splined with the outer circumference side of the ring gear R1, and this ring gear R1 is connected to the transmitting member 30, and is connected to the sun gear S3 via this transmitting member 30.

The operations of the automatic transmission device 1₈, based on the above construction, are similar to those of the fourth embodiment (see Fig. 9 and Fig. 10), and accordingly description thereof will be omitted.

As described above, according to the automatic transmission device 1₈ relating to the present invention, due to the planetary gear PR and the clutch C2 being configured on one side in the axial direction of the planetary gear unit PU, and the clutch C1 being configured on the other side in the axial direction of the planetary gear unit PU, the planetary gear PR and the planetary gear unit PU can be configured closely together, compared to the case wherein for example two clutches C1 and C2 are configured in between the planetary gear PR and planetary gear unit PU, and the transmitting member 30 for transmitting reduced rotation can be relatively shortened. By doing so, the automatic transmission can be made more compact and more lightweight. Further, because the inertia (force of inertia) can be reduced, the controllability of the automatic transmission can be increased, and the occurrence of speed change shock can be reduced.

Further, since the oil pressure servos 11 and 12 are provided on the input shaft 2, the seal rings 81 and 82 seal the case 3 and supply oil to the oil lines 2a and 2b provided within input shaft 2, and therefore oil can be supplied to the oil chamber of oil pressure servos 11 and 12 without providing the seal rings between, for example, the input shaft 2 and the oil pressure servos 11 and 12. Therefore, oil can be supplied simply by providing the seal rings 81 and 82 each for the oil pressure servos 11 and 12, and sliding resistance from the seal rings can be minimized, and therefore the efficiency of the automatic transmission can be improved.

Further, since the counter gear 5 is configured in the axial direction between the planetary gear unit PU and the planetary gear PR, the counter gear 5 can be configured in approximately the center in the axial direction of the automatic transmission. For example, when the automatic transmission is mounted on the vehicle, enlarging towards one direction of the axis (particularly in the rear direction when the input side from the drive source is the front direction) can be prevented because the counter gear 5 is mounted to match the drive wheel transmission device. Because of this, particularly in the case of an FF vehicle, the interference toward the front wheels is reduced, and the mountability on a vehicle can be improved, such as the steering angle being greatly increased, for example.

Further, the clutch C1 is a clutch which engages at the relatively slow to medium speed levels of first speed forward, second speed forward, third speed forward, and fourth speed forward, and therefore when this clutch C1 is released at the relatively high speed levels of fifth speed forward, sixth speed forward, or first speed reverse, particularly the hub unit 22 that connects this clutch C1 and the sun gear S2 rotates at a relatively high revolution or revolves in reverse (see Fig. 10). On the other hand, at the fifth speed forward or first speed reverse the transmitting member 30 reduces rotation speed, and at a sixth speed forward the transmitting member 30 may be fixed in some cases, and difference in revolutions between the hub unit 22 and the transmitting member 30 can occur. However, because this clutch C1 is located on the opposite side of the planetary gear PR via the planetary gear unit PU, the hub unit 22 and the transmitting member 30 can be configured apart from one another. In comparison with the case wherein, for example, these members are in contact due to a multi-axial configuration, decreased efficiency of the automatic transmission resulting from friction and so forth from the relative rotation of those units can be prevented.

Further, because the reduced rotation output to the planetary gear unit PU from the planetary gear PR is made to be engaged and disengaged by the brake B3, the number of parts (for example drum-shaped members and so forth) can be reduced as compared to the case wherein, for example, a clutch C3 is provided. Further, the brake B3 can configure an oil line directly from the case 3, and therefore the configuration of the oil line can be simplified as compared to the case wherein, for example, a clutch C3 is provided.

Further, the automatic transmission device 1₈ according to the present embodiment is a transmission device that is directly coupled at fourth speed forward. Therefore, at fifth speed forward and sixth speed forward, the gear ratio can be specified to a high ratio, and particularly when mounted on a vehicle, in the event that the vehicle is running at a high speed, the engine revolutions can be lowered, and this contributes to the quietness of the vehicle while running at a high speed.

Now, when a clutch is configured in between the planetary gear PR and the planetary gear unit PU for example, the length of the linking member (particularly the transmitting member) that links the planetary gear PR and the planetary gear unit PU becomes longer in the axial direction, and since this linking member is for transmitting the reduced rotation, the thickness of the member must be increased so as to withstand this, and therefore the weight also increases. Therefore an object of the present invention is to provide an automatic transmission that can shorten the distance between the speed reduction planetary gear and the planetary gear unit, and reduce the increase in weight.

With the present embodiment, in particular, the clutch C2 is disposed on the opposite side in the axial direction of the planetary gear unit PU from the planetary gear PR, and therefore, providing a clutch between the planetary gear PR and the planetary gear unit PU is not necessary, and the length of the linking member, particularly the transmitting member 30 can be made that much shorter. Therefore, an increase in weight of the automatic transmission as a whole can be prevented.

### <Ninth Embodiment>

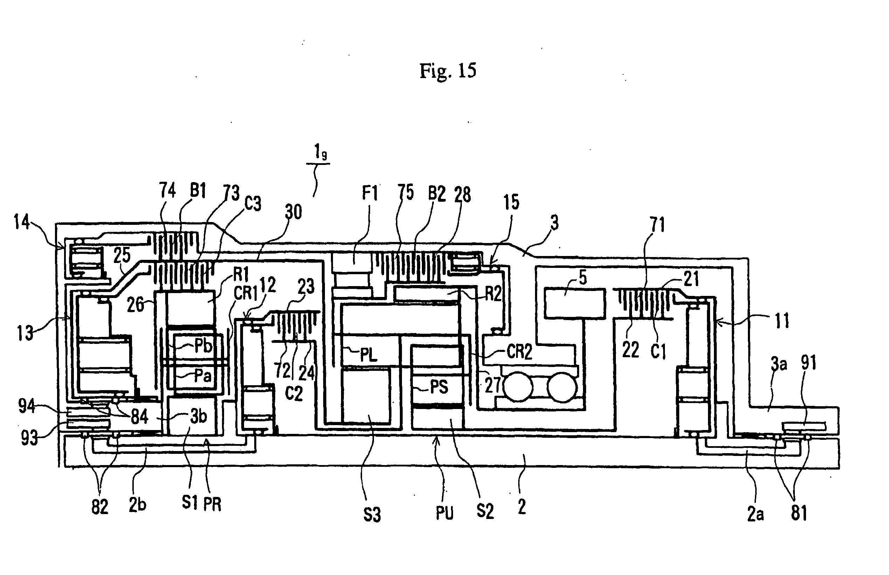

Below, the ninth embodiment, which is a partial modification of the first embodiment, will be described, with reference to Fig. 15. Fig. 15 is a schematic cross-sectional diagram illustrating the automatic transmission device of an automatic transmission relating to the ninth embodiment. Now, components of the ninth embodiment which are the same as those of the first embodiment will be denoted with the same reference numerals, and description thereof omitted, except for partial modifications.

As Fig. 15 illustrates, the automatic transmission device 1₉ of the automatic transmission relating to the ninth embodiment configures a clutch C2 on one side in the axial direction wherein the planetary gear PR of the planetary gear unit PU is configured, and configures the clutch C1 and the counter gear 5 on the other side in the axial direction, that is to say, interchanges the location of the clutch C1 and the clutch C2, and further, the planetary gear PR, the clutch C3, and the brake B1 are configured on the opposite side of the counter gear 5 of the planetary gear unit PU, as compared to that of the automatic transmission device 1₁ of the automatic transmission of the first embodiment (see Fig. 1).

Within the automatic transmission device 1₉, on the above-mentioned input shaft 2 is configured a multi-disc clutch C1, which comprises an oil pressure servo 11, a friction plate 71, a drum-shaped member 21 that forms a clutch drum, and a hub unit 22 liked to a sun gear S2 on the inner circumference side.

The oil chamber of this oil pressure servo 11 is connected to an oil line 2a which is formed on the above-mentioned input shaft 2, and this oil line 2a is provided along one edge of the case 3, and is connected to the oil line 91 of the boss unit 3a which is provided on the input shaft 2 in a sleeve form. Further, this oil line 91 is connected to an oil pressure control unit, not illustrated. In other words, since the above-mentioned oil pressure servo 11 is configured on input shaft 2, an oil line from the oil pressure control unit, not illustrated, to the oil chamber of the oil pressure servo 11 is configured, simply by providing one set of seal rings 81 to seal between the boss unit 3a of the case 3 and the input shaft 2.

The above-mentioned input shaft 2 is connected to the above-mentioned drum-shaped member 21, and on the inner circumference side of this drum-shaped member 21 is configured the friction plate 71 of the clutch C1 which is capable of engaging by the oil pressure servo 11 for the clutch C1, splined, and is connected wherein the inner circumference side of the friction plate 71 of this clutch C1 is splined to the hub unit 22. Further, this hub unit 22 is connected to the above-mentioned sun gear S2.

On the other hand, on the other side of the input shaft 2 (left in diagram) is configured a multi-disc clutch C2 that has an oil pressure servo 12, a friction plate 72, a drum-shaped member 23 that forms a clutch drum, a hub unit 24 linked to a carrier CR2. On the outer circumference side is configured a multi-disc clutch C3 that comprises an oil pressure servo 13, a friction plate 73, and a drum unit 25 that forms a clutch drum. Further, on the outer circumference side of the drum-shaped member 25 is configured a multi-disc brake B1 that comprises on oil pressure servo 14 and a friction plate 74.

The oil chamber of this oil pressure servo 12 is connected to an oil line 2b which is formed on the above-mentioned input shaft 2, and this oil line 2b is provided along the edge of the case 3 that is the opposite side of that of the above-mentioned boss unit 3a, and is connected to the oil line 93 of the boss unit 3b which is provided on the input shaft 2 in a sleeve form. Therefore, an oil line from the oil pressure control unit, not illustrated, to the oil chamber of the oil pressure servo 12 is constructed on the above-mentioned oil pressure servo 12, simply by providing one set of seal rings 82 to seal between the boss unit 3a of the case 3 and the input shaft 2.

Further, the oil chamber of the above-mentioned oil pressure servo 13 is connected to an oil line 94 of the above-mentioned boss unit 3b, and this oil line 94 is connected to an oil pressure control unit, not illustrated. In other words, for the above-mentioned oil pressure servo 13, an oil line from the oil pressure control unit, not illustrated, to the oil chamber of the oil pressure servo 13 is constructed, by one set of seal rings 84 to seal between the boss unit 3b of the case 3 and the drum-shaped member 25.

Further, the above-mentioned input shaft 2 is connected to the above-mentioned drum-shaped member 23 on the left side of the diagram, and on the inner circumference side of this drum-shaped member 23 is configured the friction plate 72 of the clutch C2 which is capable of engaging by the oil pressure servo 12 for the clutch C2, splined, and is connected wherein the inner circumference side of the friction plate 72 of this clutch C2 is splined to the hub unit 24. Further, this hub unit 24 is connected to the above-mentioned carrier CR2.

Further, the above-mentioned drum-shaped member 25 is supported by the above-mentioned boss unit 3b so as to rotate, and on the outer circumference side of the front edge of this drum-shaped member 25 is configured the friction plate 74 of the brake B1 which is capable of retaining by the oil pressure servo 14 for the above-mentioned brake B1, splined. On the inner circumference side of the front edge of this drum-shaped member 25 is configured the friction plate 73 of the clutch C3 which is capable of engaging by the oil pressure servo 13 for the clutch C3, splined, and on the inner circumference side of the friction plate 73 of this clutch C3 the ring gear R1 is splined.

Further, carrier CR1 has a pinion Pa and a pinion Pb, and this pinion Pb meshes with the above-mentioned ring gear R1, and this pinion Pa meshes with to the sun gear S1 which Is connected to the input shaft 2. This carrier CR1 is secured to the boss unit 3b of the case 3 via a side plate, and this ring gear R1 is supported by a supporting unit 26 to the boss unit 3b so as to rotate.

Further, to the above-mentioned drum-shaped member 25 is connected a linking member 30 that transmits the rotation of the ring gear R1 when the clutch C3 is engaged, and further, to the other side of this transmitting member 30 is connected the sun gear S3 of the above-mentioned planetary gear unit PU.

The operations of the automatic transmission device 1₉, based on the above construction, are similar to those of the first embodiment (see Fig. 2 and Fig. 3), and accordingly description thereof will be omitted.

As described above, according to the automatic transmission device 1₉ relating to the present invention, due to the planetary gear PR and the clutch C2 being configured on one side in the axial direction of the planetary gear unit PU, and the clutch C1 being configured on the other side in the axial direction of the planetary gear unit PU, the planetary gear PR and the planetary gear unit PU can be configured closely together, as compared to the case wherein, for example, two clutches C1 and C2 are configured in between the planetary gear PR and planetary gear unit PU, and the transmitting member 30 for transmitting reduced rotation can be relatively shortened. By doing so, the automatic transmission can be made more compact and more lightweight. Further, because the inertia (force of inertia) can be reduced, the controllability of the automatic transmission can be increased, and the occurrence of speed change shock can be reduced. Further, compared to the case wherein three clutches C1, C2, C3 are configured on one side of the planetary gear unit PU, the oil lines (for example, 2a, 2b, 91, 93, 94) that supply the oil pressure servos 11, 12, and 13 of these clutches C1, C2, C3 can be constructed easily, and the manufacturing process can be simplified and the costs brought down.

Further, since the oil pressure servos 11 and 12 are provided on the input shaft 2, one set of seal rings 81 and 82 seal the case 3 and supply oil to the oil lines 2a and 2b provided within input shaft 2, and therefore oil can be supplied to the oil chamber of oil pressure servos 11 and 12 without providing the seal rings between, for example, the input shaft 2 and the oil pressure servos 11 and 12. Further, the oil pressure servo 13 can supply oil from the boss unit 3a extended from the case 3, without passing through other parts for example, and therefore can supply oil by providing one set of seal rings 80. Therefore, oil can be supplied simply by providing one set of seal rings 81 and 82, 84 each for the oil pressure servos 11, 12, and 13, and sliding resistance from the seal rings can be minimized, and therefore the efficiency of the automatic transmission can be improved.

Further, because the clutch C2 is configured on the inner circumference side of the clutch C3, the clutch C3, which must transmit a relatively large torque in order to transmit the reduced rotation, can be configured on the outer circumference side, and this clutch C3 and the oil pressure servo 13 thereof can have an increased diameter. Particularly the pressure area of the oil chamber of the oil pressure servo 13 can be enlarged, and the capacity capable of torque transmission of this clutch C3 can be increased. By configuring the clutch C2 which can have a smaller capacity for torque transmission compared to the clutch C3, the automatic transmission can be made more compact.

Further, the clutch C1 is a clutch which engages at the relatively slow to medium speed levels of first speed forward, second speed forward, third speed forward, and fourth speed forward, and therefore when this clutch C1 is released at the relatively high speed levels of fifth speed forward, sixth speed forward, or first speed reverse, particularly the hub unit 22 that connects this clutch C1 and the sun gear S2 rotates at a relatively high revolution or revolves in reverse (see Fig. 3). On the other hand, at the fifth speed forward or first speed reverse the transmitting member 30 reduces rotation speed, and at a sixth speed forward the transmitting member 30 may be fixed in some cases, and difference in revolutions between the hub unit 22 and the transmitting member 30 can occur. However, because this clutch C1 is located on the opposite side of the planetary gear PR via the planetary gear unit PU, the hub unit 22 and the transmitting member 30 can be configured apart from one another. In comparison with the case wherein, for example, these members are in contact due to a multi-axial configuration, decreased efficiency of the automatic transmission resulting from friction and so forth from the relative rotation of those units can be prevented.

Further, the automatic transmission device 1₉ according to the present embodiment is a transmission device that is directly coupled at fourth speed forward. Therefore, at fifth speed forward and sixth speed forward, the gear ratio can be specified to a high ratio, and particularly when mounted on a vehicle, in the event that the vehicle is running at a high speed, the engine revolutions can be lowered, and this contributes to the quietness of the vehicle while running at a high speed.

Now, the linking member (in particular the transmitting member) for linking the planetary gear PR and the planetary gear unit PU requires rigidity to withstand the reduced speed torque that is input. For example, in the case of configuring a clutch that engages at a slow to medium speed or a clutch that engages and disengages reduced rotations on the inner circumference side of the linking member, the clutches must have a large capacity, therefore an appropriate diameter to correspond with this capacity becomes necessary. Therefore, in the event that the linking member is the type that passes on the outer circumference side of this type of clutch, even a larger diameter than the necessary diameter measurement of those clutches becomes necessary, and the diameter measurement of the linking member is enlarged more than necessary, and the automatic transmission as a whole becomes greater in the direction of the diameter. Therefore an object of the present embodiment is to reduce the enlargement of the diameter measurement, and provide a compact automatic transmission.

According to the present embodiment, all clutches can be configured without enlarging the diameter measurement of the linking member, by configuring a clutch C2 with a small capacity on the linking member, particularly on the inner circumference side of the transmitting member 30.

### <Tenth Embodiment>

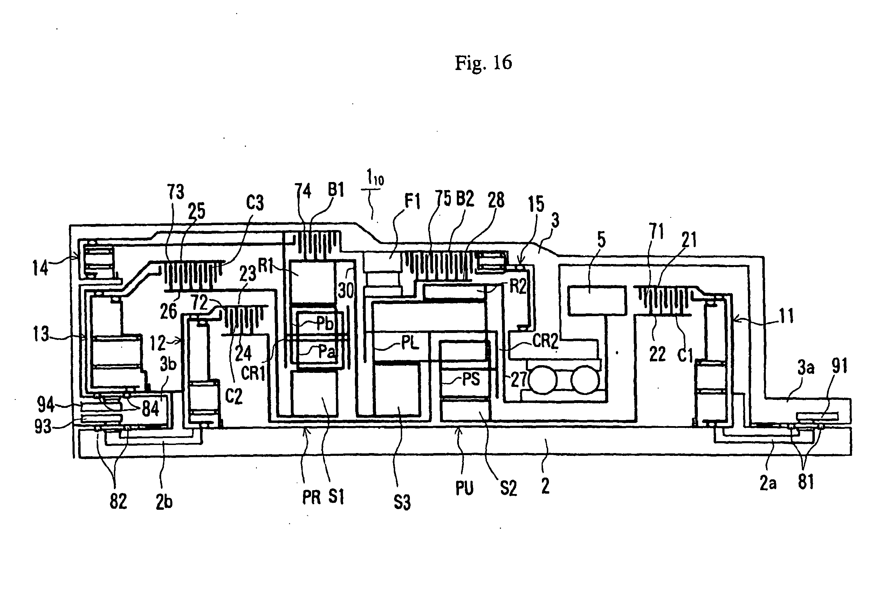

Now, the tenth embodiment which is a partial modification of the ninth embodiment will be described, with reference to Fig. 16. Fig. 16 is a schematic cross-sectional diagram illustrating the automatic transmission device of an automatic transmission relating to the tenth embodiment. Now, components of the tenth embodiment which are the same as those of the ninth embodiment will be denoted with the same reference numerals, and description thereof omitted, except for partial modifications.

As Fig. 16 illustrates, the automatic transmission device 1₁₀ of the automatic transmission relating to the tenth embodiment is a modification of the configuration of the planetary gear PR and the clutch C3, compared to that of the automatic transmission device 1₉ of the automatic transmission of the first embodiment (see Fig. 15).

The clutch C3 is configured on the opposite side of the planetary gear unit PU (left side of diagram) of the planetary gear PR within this automatic transmission device l₁₀. The inner circumference side of the front edge of the drum-shaped member 25 of this clutch C3 is splined to the friction plate 73, and the inner circumference side of this friction plate 73 is splined to the hub unit 26. The drum-shaped member 25 is connected to the input shaft 2, and the hub unit 26 is connected to the sun gear S1. Further, the clutch C2 comprising a oil pressure servo 12, a friction plate 72, a drum-shaped member 23, and a hub unit 24 is configured on the inner circumference side of the above-mentioned clutch C3, that is to say, is enclosed within the hub unit 26.

On the other hand, on the outer circumference side of the planetary gear unit PU is configured a multi-disc brake B1 that comprises an oil pressure servo 14 and a friction plate 74. The side plate of the carrier CR1 of this planetary gear PR is fixed and supported by the case 3. Further, the ring gear R1 is connected to the transmitting member 30, and the friction plate 74 of the brake B1 is splined with the outer circumference side of this transmitting member 30, and this transmitting member 30 is connected to the sun gear S3.

The operations of the automatic transmission device 1₁₀, based on the above construction, are similar to those of the third embodiment (see Fig. 6 and Fig. 7), and accordingly description thereof will be omitted.

As described above, according to the automatic transmission device 1₁₀ relating to the present invention, due to the planetary gear PR and the clutch C2 being configured on one side in the axial direction of the planetary gear unit PU, and the clutch C1 being configured on the other side in the axial direction of the planetary gear unit PU, the planetary gear PR and the planetary gear unit PU can be configured closely together, compared to the case wherein for example two clutches C1 and C2 are configured in between the planetary gear PR and planetary gear unit PU, and the transmitting member 30 for transmitting reduced rotation can be relatively shortened. By doing so, the automatic transmission can be made more compact and more lightweight. Further, because the inertia (force of inertia) can be reduced, the controllability of the automatic transmission can be increased, and the occurrence of speed change shock can be reduced. Further, compared to the case wherein three clutches C1, C2, C3 are configured on one side of the planetary gear unit PU, the oil lines (for example, 2a, 2b, 91, 93, 94) that supply the oil pressure servos 11, 12, and 13 of these clutches C1, C2, C3 can be constructed easily, and the manufacturing process can be simplified and the costs brought down.

Further, since the oil pressure servos 11 and 12 are provided on the input shaft 2, one set of seal rings 81 and 82 seal the case 3 and supply oil to the oil lines 2a and 2b provided within input shaft 2, and therefore oil can be supplied to the oil chamber of oil pressure servos 11 and 12 without providing the seal rings between, for example, the input shaft 2 and the oil pressure servos 11 and 12. Further, the oil pressure servo 13 can supply oil from the boss unit 3b extended from the case 3, without passing through other parts for example, and therefore can supply oil by providing one set of seal rings 84. Therefore, oil can be supplied simply by providing one set of seal rings 81 and 82, 84 each for the oil pressure servos 11, 12, and 13, and sliding resistance from the seal rings can be minimized, and therefore the efficiency of the automatic transmission can be improved.

Further, the clutch C1 is a clutch which engages at the relatively slow to medium speed levels of first speed forward, second speed forward, third speed forward, and fourth speed forward, and therefore when this clutch C1 is released at the relatively high speed levels of fifth speed forward, sixth speed forward, or first speed reverse, particularly the hub unit 22 that connects this clutch C1 and the sun gear S2 rotates at a relatively high revolution or revolves in reverse (see Fig. 7). On the other hand, at the fifth speed forward or first speed reverse the transmitting member 30 reduces rotation speed, and at a sixth speed forward the transmitting member 30 may be fixed in some cases, and difference in revolutions between the hub unit 22 and the transmitting member 30 can occur. However, because this clutch C1 is located on the opposite side of the planetary gear PR via the planetary gear unit PU, the hub unit 22'and the transmitting member 30 can be configured apart from one another. In comparison with the case wherein, for example, these members are in contact due to a multi-axial configuration, decreased efficiency of the automatic transmission resulting from friction and so forth from the relative rotation of those units can be prevented.

Further, in the event that the clutch C3 is placed between the ring gear R1 and the sun gear S3 for example, the reduced rotation must be engaged and disengaged, and becomes relatively large, but by placing between the input shaft 2 and the sun gear S1, the engaging and disengaging of the rotation of the input shaft 2 from this clutch C3 causes the reduced rotation output from the ring gear R1 of the planetary gear PR to be engaged and disengaged, and the clutch C3 can be made more compact, and therefore the automatic transmission can be made more compact.

Further, the automatic transmission device 1₁₀ according to the present embodiment is a transmission device that is directly coupled at fourth speed forward. Therefore, at fifth speed forward and sixth speed forward, the gear ratio can be specified to a high ratio, and particularly when mounted on a vehicle, in the event that the vehicle is running at a high speed, the engine revolutions can be lowered, and this contributes to the quietness of the vehicle while running at a high speed.

Now, in the event that a clutch is configured in between the planetary gear PR and the planetary gear unit PU for example, the length of the linking member (particularly the transmitting member) that links the planetary gear PR and the planetary gear unit PU becomes longer in the axial direction, and since this linking member is for transmitting the reduced rotation, the thickness of the member must be increased so as to withstand this, and therefore the weight also increases. Therefore an object of the present invention is to provide an automatic transmission that can shorten the distance between the speed reduction planetary gear and the planetary gear unit, and reduce the increase in weight.

With the present embodiment, in particular, the clutch C2 is disposed on the opposite side in the axial direction of the planetary gear unit PU from the planetary gear PR, and therefore, providing a clutch between the planetary gear PR and the planetary gear unit PU is not necessary, and the length of the linking member, particularly the transmitting member 30 can be made that much shorter. Therefore, an increase in weight of the automatic transmission as a whole can be prevented.

### <Eleventh Embodiment>

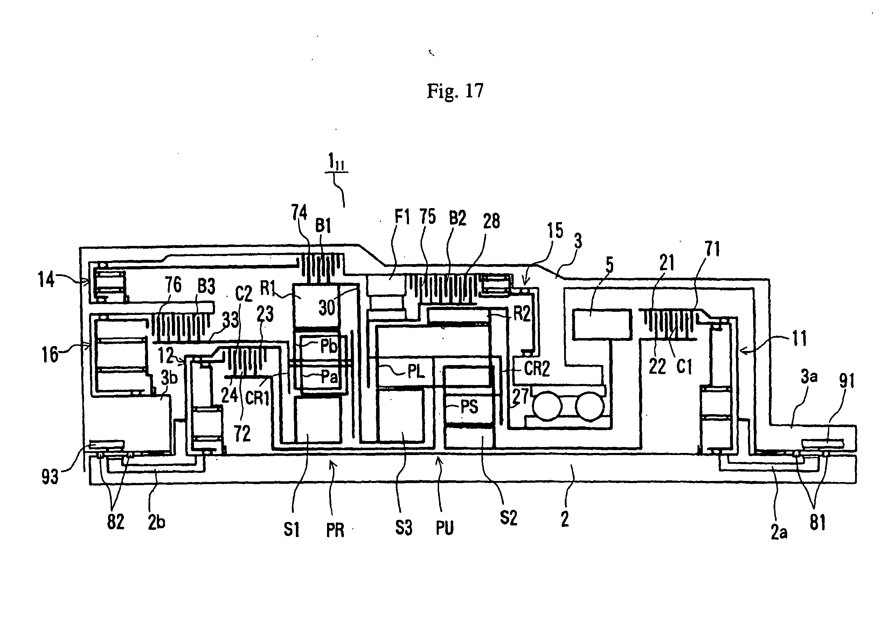

Now, the eleventh embodiment partially changed from the ninth embodiment will be described, with reference to Fig. 17. Fig. 17 is a schematic cross-sectional diagram illustrating the automatic transmission device of an automatic transmission relating to the eleventh embodiment. Now, components of the eleventh embodiment which are the same as those of the ninth embodiment will be denoted with the same reference numerals, and description thereof omitted, except for partial modifications.

As Fig. 17 illustrates, the automatic transmission device 1₁₁ of the automatic transmission relating to the eleventh embodiment is a modification of the configuration of the clutch C2, and further, configures a brake B3 instead of a clutch C3, and enables the carrier CR1 of the planetary gear PR to be fixed by the brake B3, compared to that of the automatic transmission device 1₉ of the automatic transmission of the ninth embodiment (see Fig. 15).

Within the automatic transmission device 1₁₁, the brake B3 is configured on the planetary gear PR, on the opposite (left side on the diagram) from the planetary gear unit PU. This brake B3 comprises an oil pressure servo 16, a friction plate 76, and a hub unit 33. Further, the clutch C2, comprising an oil pressure servo 12, a friction plate 72, a drum-shaped member 23, and a hub unit 24, is configured on the inner circumference side of above-mentioned brake B3, that is to say, is enclosed within the hub unit 33. The hub unit 33 of this brake B3 is connected to the side plate of one side of the carrier CR1, and the side plate of the other side of this carrier CR1 is supported by the input shaft 2 so as to be capable of rotating. Further, the sun gear S1 is connected to the input shaft 2 via the drum-shaped member 23 of the clutch C2. Also, the friction plate 74 of the brake B1 is splined with the outer circumference side of the ring gear R1, and this ring gear R1 is connected to the transmitting member 30, and is connected to the sun gear S3 via this transmitting member 30.

The operations of the automatic transmission device 1₁₁, based on the above construction, are similar to those of the fourth embodiment (see Fig. 9 and Fig. 10), and accordingly description thereof will be omitted.

As described above, according to the automatic transmission device 1₁₁ relating to the present invention, due to the planetary gear PR and the clutch C2 being configured on one side in the axial direction of the planetary gear unit PU, and the clutch C1 being configured on the other side in the axial direction of the planetary gear unit PU, the planetary gear PR and the planetary gear unit PU can be configured closely together, compared to the case wherein for example two clutches C1 and C2 are configured in between the planetary gear PR and planetary gear unit PU, and the transmitting member 30 for transmitting reduced rotation can be relatively shortened. By doing so, the automatic transmission can be made more compact and more lightweight. Further, because the inertia (force of inertia) can be reduced, the controllability of the automatic transmission can be increased, and the occurrence of speed change shock can be reduced.

Further, since the oil pressure servos 11 and 12 are provided on the input shaft 2, the seal rings 81 and 82 seal the case 3 and supply oil to the oil lines 2a and 2b provided within input shaft 2, and therefore oil can be supplied to the oil chamber of oil pressure servos 11 and 12 without providing the seal rings between, for example, the input shaft 2 and the oil pressure servos 11 and 12. Therefore, oil can be supplied simply by providing the seal rings 81 and 82 each for the oil pressure servos 11 and 12, and sliding resistance from the seal rings can be minimized, and therefore the efficiency of the automatic transmission can be improved.

Further, the clutch C1 is a clutch which engages at the relatively slow to medium speed levels of first speed forward, second speed forward, third speed forward, and fourth speed forward, and therefore when this clutch C1 is released at the relatively high speed levels of fifth speed forward, sixth speed forward, or first speed reverse, particularly the hub unit 22 that connects this clutch C1 and the sun gear S2 rotates at a relatively high revolution or revolves in reverse (see Fig. 10). On the other hand, at the fifth speed forward or first speed reverse the transmitting member 30 reduces rotation speed, and at a sixth speed forward the transmitting member 30 may be fixed in some cases, and difference in revolutions between the hub unit 22 and the transmitting member 30 can occur. However, because this clutch C1 is located on the opposite side of the planetary gear PR via the planetary gear unit PU, the hub unit 22 and the transmitting member 30 can be configured apart from one another. In comparison with the case wherein, for example, these members are in contact due to a multi-axial configuration, decreased efficiency of the automatic transmission resulting from friction and so forth from the relative rotation of those units can be prevented.

Further, since the reduced rotation output to the planetary gear unit PU from the planetary gear PR is made to be engaged and disengaged by the brake B3, the number of parts (for example drum-shaped members and so forth) can be reduced as compared to the case wherein, for example, a clutch C3 is provided. Further, the brake B3 can configure an oil line directly from the case 3, and therefore the configuration of the oil line can be simplified as compared to the case wherein, for example, a clutch C3 is provided.

Further, the automatic transmission device 1₁₁ according to the present embodiment is a transmission device that is directly coupled at fourth speed forward. Therefore, at fifth speed forward and sixth speed forward, the gear ratio can be specified to a high ratio, and particularly when mounted on a vehicle, in the event that the vehicle is running at a high speed, the engine revolutions can be lowered, and this contributes to the quietness of the vehicle while running at a high speed.

Now, in the event that a clutch is configured in between the planetary gear PR and the planetary gear unit PU for example, the length of the linking member (particularly the transmitting member) that links the planetary gear PR and the planetary gear unit PU becomes longer in the axial direction, and since this linking member is for transmitting the reduced rotation, the thickness of the member must be increased so as to withstand this, and therefore the weight also increases. Therefore an object of the present invention is to provide an automatic transmission that can shorten the distance between the speed reduction planetary gear and the planetary gear unit, and reduce the increase in weight.

With the present embodiment, in particular, the clutch C2 is disposed on the opposite side in the axial direction of the planetary gear unit PU from the planetary gear PR, and therefore, providing a clutch between the planetary gear PR and the planetary gear unit PU is not necessary, and the length of the linking member, particularly the transmitting member 30 can be made that much shorter. Therefore, an increase in weight of the automatic transmission as a whole can be prevented.

### <Twelfth Embodiment>

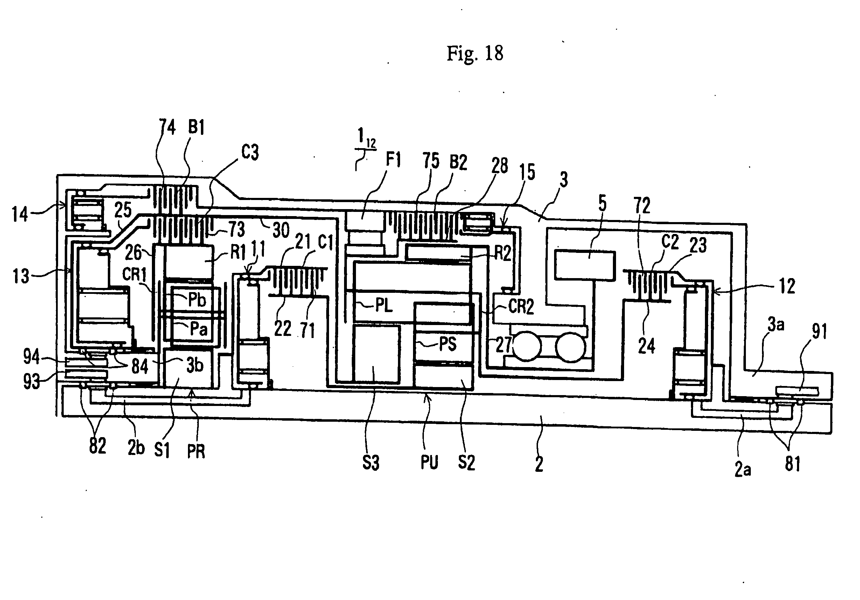

Below, the twelfth embodiment, which is a partial modification of the first embodiment, will be described, with reference to Fig. 18. Fig. 18 is a schematic cross-sectional diagram illustrating the automatic transmission device of an automatic transmission relating to the twelfth embodiment. Now, components of the twelfth embodiment which are the same as those of the first embodiment will be denoted with the same reference numerals, and description thereof omitted, except for partial modifications.

As Fig. 18 illustrates, the automatic transmission device 1₁₂ of the automatic transmission relating to the twelfth embodiment configures the planetary gear PR, the clutch C3, and the brake B1 are configured on the opposite side of the counter gear 5 of the planetary gear unit PU (left side in the drawing), compared to that of the automatic transmission device 1₁ of the automatic transmission of the first embodiment (see Fig. 1).

Within the automatic transmission device 1₁₂, on the above-mentioned input shaft 2 is configured a multi-disc clutch C2, which comprises an oil pressure servo 12, a friction plate 72, a drum-shaped member 23 that forms a clutch drum, and a hub unit 24 liked to a sun gear S2 on the inner circumference side.

The oil chamber of this oil pressure servo 12 is connected to an oil line 2a which is formed on the above-mentioned input shaft 2, and this oil line 2a is provided along one edge of the case 3, and is connected to the oil line 91 of the boss unit 3a which is provided on the input shaft 2 in a sleeve form. Further, this oil line 91 is connected to an oil pressure control unit, not illustrated. In other words, because the above-mentioned oil pressure servo 12 is configured on input shaft 2, an oil line from the oil pressure control unit, not illustrated, to the oil chamber of the oil pressure servo 12 is configured, simply by providing one set of seal rings 81 to seal between the boss unit 3a of the case 3 and the input shaft 2.

The above-mentioned input shaft 2 is connected to the above-mentioned drum-shaped member 23, and on the inner circumference side of this drum-shaped member 23 is configured the friction plate 72 of the clutch C2 which is capable of engaging by the oil pressure servo 12 for the clutch C2, splined, and is connected wherein the inner circumference side of the friction plate 72 of this clutch C2 is splined to the hub unit 24. Further, this hub unit 24 is connected to the above-mentioned carrier CR2.

On the other hand, on the other side of the input shaft 2 (left in diagram) is configured a multi-disc clutch C1 that has an oil pressure servo 11, a friction plate 71, a drum-shaped member 21 that forms a clutch drum, a hub unit 22 linked to a sun gear S2. On the outer circumference side is configured a multi-disc clutch C3 that comprises an oil pressure servo 13, a friction plate 73, and a drum unit 25 that forms a clutch drum. Further, on the outer circumference side of the drum-shaped member 25 is configured a multi-disc brake B1 that comprises on oil pressure servo 14 and a friction plate 74.

The oil chamber of this oil pressure servo 11 is connected to an oil line 2b which is formed on the above-mentioned input shaft 2, and this oil line 2b is provided along the edge of the case 3 that is the opposite side of that of the above-mentioned boss unit 3a, and is connected to the oil line 93 of the boss unit 3b which is provided on the input shaft 2 in a sleeve form. Therefore, an oil line from the oil pressure control unit, not illustrated, to the oil chamber of the oil pressure servo 11 is constructed on the above-mentioned oil pressure servo 11, simply by providing one set of seal rings 82 to seal between the boss unit 3b of the case 3 and the input shaft 2.

Further, the oil chamber of the above-mentioned oil pressure servo 13 is connected to an oil line 94 of the above-mentioned boss unit 3b, and this oil line 94 is connected to an oil pressure control unit, not illustrated. In other words, for the above-mentioned oil pressure servo 13, an oil line from the oil pressure control unit, not illustrated, to the oil chamber of the oil pressure servo 13 is constructed, by one set of seal rings 84 to seal between the boss unit 3b of the case 3 and the drum-shaped member 25.

Further, the above-mentioned input shaft 2 is connected to the above-mentioned drum-shaped member 21 on the left side of the diagram, and on the inner circumference side of this drum-shaped member 21 is configured the friction plate 71 of the clutch C1 which is capable of engaging by the oil pressure servo 11 for the clutch C1, splined, and is connected wherein the inner circumference side of the friction plate 71 of this clutch C1 is splined to the hub unit 22. Further, this hub unit 22 is connected to the above-mentioned sun gear S2.

Further, the above-mentioned drum-shaped member 25 is supported by the above-mentioned boss unit 3b so as to rotate, and on the outer circumference side of the front edge of this drum-shaped member 25 is configured the friction plate 74 of the brake B1 which is capable of retaining by the oil pressure servo 14 for the above-mentioned brake B1, splined. On the inner circumference side of the front edge of this drum-shaped member 25 is configured the friction plate 73 of the clutch C3 which is capable of engaging by the oil pressure servo 13 for the clutch C3, splined, and on the inner circumference side of the friction plate 73 of this clutch C3 the ring gear R1 is splined.

Further, carrier CR1 has a pinion Pa and a pinion Pb, and this pinion Pb meshes with the above-mentioned ring gear R1, and this pinion Pa meshes with the sun gear S1 which is connected to the input shaft 2. This carrier CR1 is secured to the boss unit 3b of the case 3 via a side plate, and this ring gear R1 is supported by a supporting unit 26 to the boss unit 3b so as to rotate.

Further, to the above-mentioned drum-shaped member 25 is connected a linking member 30 that transmits the rotation of the ring gear R1 when the clutch C3 is engaged, and further, to the other side of this transmitting member 30 is connected the sun gear S3 of the above-mentioned planetary gear unit PU.

The operations of the automatic transmission device 1₁₂, based on the above construction, are similar to those of the first embodiment (see Fig. 2 and Fig. 3), and accordingly description thereof will be omitted.

As described above, according to the automatic transmission device 1₁₂ relating to the present invention, due to the planetary gear PR and the clutch C1 being configured on one side in the axial direction of the planetary gear unit PU, and the clutch C2 being configured on the other side in the axial direction of the planetary gear unit PU, the planetary gear PR and the planetary gear unit PU can be configured closely together, compared to the case wherein for example two clutches C1 and C2 are configured in between the planetary gear PR and planetary gear unit PU, and the transmitting member 30 for transmitting reduced rotation can be relatively shortened. By doing so, the automatic transmission can be made more compact and more lightweight. Further, because the inertia (force of inertia) can be reduced, the controllability of the automatic transmission can be increased, and the occurrence of speed change shock can be reduced. Further, compared to the case wherein three clutches C1, C2, C3 are configured on one side of the planetary gear unit PU, the oil lines (for example, 2a, 2b, 91, 93, 94) that supply the oil pressure servos 11, 12, and 13 of these clutches C1, C2, C3 can be constructed easily, and the manufacturing process can be simplified and the costs brought down.

Further, since the oil pressure servos 11 and 12 are provided on the input shaft 2, one set of seal rings 81 and 82 seal the case 3 and supply oil to the oil lines 2a and 2b provided within input shaft 2, and therefore oil can be supplied to the oil chamber of oil pressure servos 11 and 12 without providing the seal rings between, for example, the input shaft 2 and the oil pressure servos 11 and 12. Further, the oil pressure servo 13 can supply oil from the boss unit 3a extended from the case 3, without passing through other parts for example, and therefore can supply oil by providing one set of seal rings 80. Therefore, oil can be supplied simply by providing one set of seal rings 81 and 82, 84 each for the oil pressure servos 11, 12, and 13, and sliding resistance from the seal rings can be minimized, and therefore the efficiency of the automatic transmission can be improved.

Further, due to the clutch C1 being configured on the inner circumference side of the clutch C3, the clutch C3, which must transmit a relatively large torque in order to transmit the reduced rotation, can be configured on the outer circumference side, and this clutch C3 and the oil pressure servo 13 thereof can have an increased diameter. Particularly the pressure area of the oil chamber of the oil pressure servo 13 can be enlarged, and the capacity capable of torque transmission of this clutch C3 can be increased. By configuring the clutch C1 which can have a smaller capacity for torque transmission compared to the clutch C3, the automatic transmission can be made more compact.

Further, the automatic transmission device 1₁₂ according to the present embodiment is a transmission device that is directly coupled at fourth speed forward. Therefore, at fifth speed forward and sixth speed forward, the gear ratio can be specified to a high ratio, and particularly when mounted on a vehicle, in the event that the vehicle is running at a high speed, the engine revolutions can be lowered, and this contributes to the quietness of the vehicle while running at a high speed.

### <Thirteenth Embodiment>

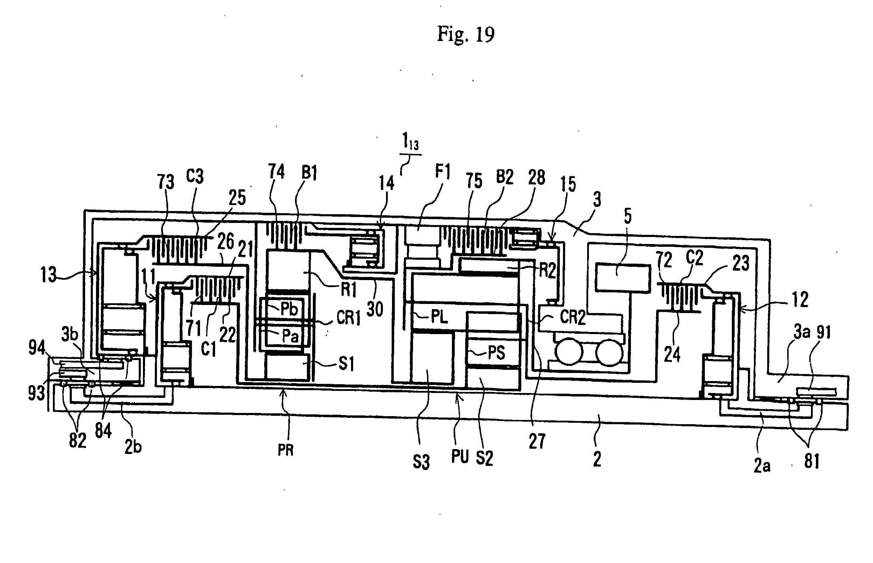

Below, the thirteenth embodiment, which is a partial modification of the twelfth embodiment will be described, with reference to Fig. 19. Fig. 19 is a schematic cross-sectional diagram illustrating the automatic transmission device of an automatic transmission relating to the thirteenth embodiment. Now, components of the thirteenth embodiment which are the same as those of the twelfth embodiment will be denoted with the same reference numerals, and description thereof omitted, except for partial modifications.

As Fig. 19 illustrates, the automatic transmission device 1₁₃ of the automatic transmission relating to the thirteenth embodiment is a modification of the configuration of the planetary gear PR, the clutch C1, and the clutch C1, compared to that of the automatic transmission device 1₁₂ of the automatic transmission of the twelfth embodiment (see Fig. 18).

The clutch C1 and the clutch C3 is configured on the planetary gear unit PU side (left side of diagram) of the planetary gear PR within this automatic transmission device 1₁₃. The inner circumference side of the front edge of the drum-shaped member 25 of this clutch C3 is splined to the friction plate 73, and the inner circumference side of this friction plate 73 is splined to the hub unit 26. The drum-shaped member 25 is connected to the input shaft 2, and the hub unit 26 is connected to the sun gear S1. Further, the clutch C1 comprising a oil pressure servo 12, a friction plate 71, a drum-shaped member 21, and a hub unit 22 is configured on the inner circumference side of the above-mentioned clutch C3, that is to say, is enclosed within the hub unit 26.

On the other hand, on the outer circumference side of the planetary gear PR is configured a multi-disc brake B1 that comprises an oil pressure servo 14 and a friction plate 74. the side plate of the carrier CR1 of this planetary gear PR is fixed and supported by the case 3. Further, the ring gear R1 is connected to the transmitting member 30, and the friction plate 74 of the brake B1 is splined with the outer circumference side of this transmitting member 30, and this transmitting member 30 is connected to the sun gear S3.

The operations of the automatic transmission device 1₁₀, based on the above construction, are similar to those of the third embodiment (see Fig. 6 and Fig. 7), and accordingly description thereof will be omitted.

As described above, according to the automatic transmission device 1₁₃ relating to the present invention, due to the planetary gear PR and the clutch C1 being configured on one side in the axial direction of the planetary gear unit PU, and the clutch C2 being configured on the other side in the axial direction of the planetary gear unit PU, the planetary gear PR and the planetary gear unit PU can be configured closely together, compared to the case wherein for example two clutches C1 and C2 are configured in between the planetary gear PR and planetary gear unit PU, and the transmitting member 30 for transmitting reduced rotation can be relatively shortened. By doing so, the automatic transmission can be made more compact and more lightweight. Further, because the inertia (force of inertia) can be reduced, the controllability of the automatic transmission can be increased, and the occurrence of speed change shock can be reduced. Further, compared to the case wherein three clutches C1, C2, C3 are configured on one side of the planetary gear unit PU, the oil lines (for example, 2a, 2b, 91, 93, 94) that supply the oil pressure servos 11, 12, and 13 of these clutches C1, C2, C3 can be constructed easily, and the manufacturing process can be simplified and the costs brought down.

Further, since the oil pressure servos 11 and 12 are provided on the input shaft 2, one set of seal rings 81 and 82 seal the case 3 and supply oil to the oil lines 2a and 2b provided within input shaft 2, and therefore oil can be supplied to the oil chamber of oil pressure servos 11 and 12 without providing the seal rings between, for example, the input shaft 2 and the oil pressure servos 11 and 12. Further, the oil pressure servo 13 can supply oil from the boss unit 3b extended from the case 3, without passing through other parts for example, and therefore can supply oil by providing one set of seal rings 84. Therefore, oil can be supplied simply by providing one set of seal rings 81 and 82, 84 each for the oil pressure servos 11, 12, and 13, and sliding resistance from the seal rings can be minimized, and therefore the efficiency of the automatic transmission can be improved.

Further, because the clutch C1 is configured on the inner circumference side of the clutch C3, the clutch C3, which must transmit a relatively large torque in order to transmit the reduced rotation, can be configured on the outer circumference side, and this clutch C3 and the oil pressure servo 13 thereof can have an increased diameter. Particularly the pressure area of the oil chamber of the oil pressure servo 13 can be enlarged, and the capacity capable of torque transmission of this clutch C3 can be increased. By configuring the clutch C1 which can have a smaller capacity for torque transmission compared to the clutch C3, the automatic transmission can be made more compact.

Further, for example if the clutch C3 is placed between the ring gear R1 and the sun gear S3, the reduced rotation must be engaged and disengaged, and becomes relatively large, but by placing between the input shaft 2 and the sun gear S1, the engaging and disengaging of the rotation of the input shaft 2 from this clutch C3 causes the reduced rotation output from the ring gear R1 of the planetary gear PR to be engaged and disengaged, and the clutch C3 can be made more compact, and therefore the automatic transmission can be made more compact.

Further, the automatic transmission device 1₁₃ according to the present embodiment is a transmission device that is directly coupled at fourth speed forward. Therefore, at fifth speed forward and sixth speed forward, the gear ratio can be specified to a high ratio, and particularly when mounted on a vehicle, in the event that the vehicle is running at a high speed, the engine revolutions can be lowered, and this contributes to the quietness of the vehicle while running at a high speed

Now, in the event that a clutch is configured in between the planetary gear PR and the planetary gear unit PU for example, the length of the linking member (particularly the transmitting member) that links the planetary gear PR and the planetary gear unit PU becomes longer in the axial direction, and since this linking member is for transmitting the reduced rotation, the thickness of the member must be increased so as to withstand this, and therefore the weight also increases. Therefore an object of the present invention is to provide an automatic transmission that can shorten the distance between the speed reduction planetary gear and the planetary gear unit, and reduce the increase in weight.

With the present embodiment, in particular, the clutch C1 is disposed on the opposite side in the axial direction of the planetary gear unit PU from the planetary gear PR, and therefore, providing a clutch between the planetary gear PR and the planetary gear unit PU is not necessary, and the length of the linking member, particularly the transmitting member 30 can be made that much shorter. Therefore, an increase in weight of the automatic transmission as a whole can be prevented.

### <Fourteenth Embodiment>

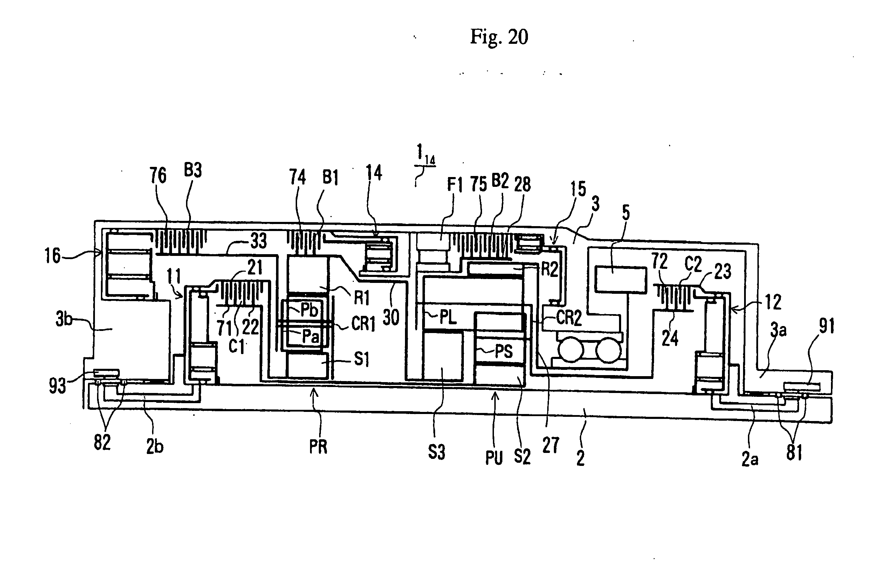

Below, the fourteenth embodiment, which is a partial modification of the twelfth embodiment will be described, with reference to Fig. 20. Fig. 20 is a schematic cross-sectional diagram illustrating the automatic transmission device of an automatic transmission relating to the fourteenth embodiment. Now, components of the fourteenth embodiment which are the same as those of the twelfth embodiment will be denoted with the same reference numerals, and description thereof omitted, except for partial modifications.

As Fig. 20 illustrates, the automatic transmission device 1₁₄ of the automatic transmission relating to the fourteenth embodiment is a modification of the configuration of the clutch C2, and further, configures a brake B3 instead of a clutch C3, and enables the carrier CR1 of the planetary gear PR to be fixed by the brake B3, compared to that of the automatic transmission device 1₁₂ of the automatic transmission of the twelfth embodiment (see Fig. 18).

Within the automatic transmission device 1₁₄, the brake B3 is configured on the planetary gear PR, on the opposite (left side on the diagram) from the planetary gear unit PU. This brake B3 comprises an oil pressure servo 16, a friction plate 76, and a hub unit 33. Further, the clutch C1, comprising an oil pressure servo 11, a friction plate 71, a drum-shaped member 21, and a hub unit 22, is configured on the inner circumference side of above-mentioned brake B3, that is to say, is enclosed within the hub unit 33. The hub unit 33 of this brake B3 is connected to the side plate of one side of the carrier CR1, and the side plate of the other side of this carrier CR1 is supported by the input shaft 2 so as to be capable of rotating. Further, the sun gear S1 is connected to the input shaft 2 via the drum-shaped member 21 of the clutch C1. Also, the friction plate 74 of the brake B1 is splined with the outer circumference side of the ring gear R1, and this ring gear R1 is connected to the transmitting member 30, and is connected to the sun gear S3 via this transmitting member 30.

The operations of the automatic transmission device 1₁₄, based on the above construction, are similar to those of the fourth embodiment (see Fig. 9 and Fig. 10), and accordingly description thereof will be omitted.

As described above, according to the automatic transmission device 1₁₄ relating to the present invention, due to the planetary gear PR and the clutch C1 being configured on one side in the axial direction of the planetary gear unit PU, and the clutch C2 being configured on the other side in the axial direction of the planetary gear unit PU, the planetary gear PR and the planetary gear unit PU can be configured closely together, compared to the case wherein for example two clutches C1 and C2 are configured in between the planetary gear PR and planetary gear unit PU, and the transmitting member 30 for transmitting reduced rotation can be relatively shortened. By doing so, the automatic transmission can be made more compact and more lightweight. Further, because the inertia (force of inertia) can be reduced, the controllability of the automatic transmission can be increased, and the occurrence of speed change shock can be reduced. Further, compared to the case wherein three clutches C1, C2, C3 are configured on one side of the planetary gear unit PU, the oil lines (for example, 2a, 2b, 91, 93) that supply the oil pressure servos 11 and 12, of these clutches C1, C2, can be constructed easily, and the manufacturing process can be simplified and the costs brought down.

Further, since the oil pressure servos 11 and 12 are provided on the input shaft 2, the seal rings 81 and 82 seal the case 3 and supply oil to the oil lines 2a and 2b provided within input shaft 2, and therefore oil can be supplied to the oil chamber of oil pressure servos 11 and 12 without providing the seal rings between, for example, the input shaft 2 and the oil pressure servos 11 and 12. Therefore, oil can be supplied simply by providing the seal rings 81 and 82 each for the oil pressure servos 11 and 12, and sliding resistance from the seal rings can be minimized, and therefore the efficiency of the automatic transmission can be improved.

Further, since the reduced rotation output to the planetary gear unit PU from the planetary gear PR is made to be engaged and disengaged by the brake B3, the number of parts (for example drum-shaped members and so forth) can be reduced as compared to the case wherein, for example, a clutch C3 is provided. Further, the brake B3 can configure an oil line directly from the case 3, and therefore the configuration of the oil line can be simplified as compared to the case wherein, for example, a clutch C3 is provided.

Further, the automatic transmission device 1₁₄ according to the present embodiment is a transmission device that is directly coupled at fourth speed forward. Therefore, at fifth speed forward and sixth speed forward, the gear ratio can be specified to a high ratio, and particularly when mounted on a vehicle, in the event that the vehicle is running at a high speed, the engine revolutions can be lowered, and this contributes to the quietness of the vehicle while running at a high speed.

Now, in the event that a clutch is configured in between the planetary gear PR and the planetary gear unit PU for example, the length of the linking member (particularly the transmitting member) that links the planetary gear PR and the planetary gear unit PU becomes longer in the axial direction, and since this linking member is for transmitting the reduced rotation, the thickness of the member must be increased so as to withstand this, and therefore the weight also increases. Therefore an object of the present invention is to provide an automatic transmission that can shorten the distance between the speed reduction planetary gear and the planetary gear unit, and reduce the increase in weight.

With the present embodiment, in particular, the clutch C1 is disposed on the opposite side in the axial direction of the planetary gear unit PU from the planetary gear PR, and therefore, providing a clutch between the planetary gear PR and the planetary gear unit PU is not necessary, and the length of the linking member, particularly the transmitting member 30 can be made that much shorter. Therefore, an increase in weight of the automatic transmission as a whole can be prevented.

### <Fifteenth Embodiment>

Below, the fifteenth embodiment, which is a partial modification of the first through fourteenth embodiments will be described, with reference to Fig. 21 through Fig. 23. Fig. 21 is a schematic cross-sectional diagram illustrating the automatic transmission device of an automatic transmission relating to the fifteenth embodiment, Fig. 22 is an operational table of an automatic transmission relating to the fifteenth embodiment, and Fig. 23 is a speed line diagram of an automatic transmission relating to the fifteenth embodiment. Now, components of the fifteenth embodiment which are the same as those of the first embodiment will be denoted with the same reference numerals, and description thereof omitted, except for partial modifications.

As illustrated in Fig. 21, an automatic transmission device 1₁₅ of an automatic transmission relating to the fifteenth embodiment comprises a planetary gear unit PU and a planetary gear PR on the input shaft 2, similar to that of an automatic transmission device 1₁ of an automatic transmission relating to the first embodiment. The planetary gear unit PU comprises a first simple planetary gear SP2 and a second simple planetary SP3, and is a Simpson-type planetary gear comprising a sun gear S2 and a sun gear S3 that are linked together, a carrier CR3 and a ring gear R2 that are linked together, a ring gear R3, and a carrier CR2, as the four rotation components. Further, the above-mentioned planetary gear PR is a double pinion planetary gear comprising a carrier CR1, wherein a pinion P1b is meshed with a ring gear R1 and a pinion P1a is meshed with a sun gear S1, which are meshed with one another.

On the above-mentioned input shaft 2 is configured a multi-disc clutch C1, which comprises an oil pressure servo 11, a friction plate 71, a drum-shaped member 121 that forms a clutch drum, and a hub unit 122. The oil chamber of this oil pressure servo 11 is connected to an oil line 91 of the boss unit 3a which is provided on the input shaft 2 in a sleeve form and is provided along one edge of the case 3, and this oil line 91 is connected to an oil pressure control unit, not illustrated. In other words, an oil line from the oil pressure control unit, not illustrated, to the oil chamber of the oil pressure servo 11 is configured, simply by providing one set of seal rings 81 to seal between the boss unit 3a of the case 3 and the drum-shaped member 121.

The above-mentioned input shaft 2 is connected to the above-mentioned drum-shaped member 121, and on the inner circumference side of this drum-shaped member 121 is configured the friction plate 71 of the clutch C1 which is capable of engaging by the oil pressure servo 11 for the clutch C1, splined, and is connected wherein the inner circumference side of the friction plate 71 of this clutch C1 is splined to the hub unit 122. Further, this hub unit 122 is connected to the above-mentioned sun gear S2.

On the other hand, on the other side (the left of the diagram) of the input shaft 2 is configured a multi-disc clutch C2, which comprises an oil pressure servo 12, a friction plate 72, a drum-shaped member 123 that forms a clutch drum, and a hub unit 124 liked to a carrier CR3. On the outer circumference side, a multi-disc clutch C3 is configured, which comprises an oil pressure servo 13, a friction plate 73, a drum-shaped member 125 that forms a clutch drum. Further, on the outer circumference side of the drum-shaped member 125 is configured a multi-disc brake B1 which comprises an oil pressure servo 14 and a friction plate 74.

The oil chamber of this oil pressure servo 12 is connected to an oil line 2b which is formed on the above-mentioned input shaft 2, and this oil line 2b is provided along the edge of the case 3 that is the opposite side of that of the above-mentioned boss unit 3a, and is connected to the oil line 93 of the boss unit 3b which is provided on the input shaft 2 in a sleeve form. Therefore, an oil line from the oil pressure control unit, not illustrated, to the oil chamber of the oil pressure servo 12, is constructed on the above-mentioned oil pressure servo 12, simply by providing one set of seal rings 82 to seal between the input shaft 2 and the drum-shaped member 23.

Further, the oil chamber of the above-mentioned oil pressure servo 13 is connected to an oil line 94 of the above-mentioned boss unit 3b, and this oil line 94 is connected to an oil pressure control unit, not illustrated. In other words, for the above-mentioned oil pressure servo 13, an oil line from the oil pressure control unit, not illustrated, to the oil chamber of the oil pressure servo 13 is constructed, by one set of seal rings 84 to seal between the boss unit 3b of the case 3 and the drum-shaped member 125.

Further, the above-mentioned input shaft 2 is connected to the above-mentioned drum-shaped member 123 on the left side of the diagram, and on the inner circumference side of this drum-shaped member 123 is configured the friction plate 72 of the clutch C2 which is capable of engaging by the oil pressure servo 12 for the clutch C2, splined, and is connected wherein the inner circumference side of the friction plate 72 of this clutch C2 is splined to the hub unit 124. Further, this hub unit 124 is connected to the above-mentioned carrier CR3.

Further, the above-mentioned drum-shaped member 125 is supported by the above-mentioned boss unit 3b so as to rotate, and on the outer circumference side of the front edge of this drum-shaped member 125 is configured the friction plate 74 of the brake B1 which is capable of retaining by the oil pressure servo 14 for the above-mentioned brake B1, splined. On the inner circumference side of the front edge of this drum-shaped member 125 is configured the friction plate 73 of the clutch C3 which is capable of engaging by the oil pressure servo 13 for the clutch C3, splined, and on the inner circumference side of the friction plate 73 of this clutch C3 the ring gear R1 is splined.

Further, the carrier CR1 comprises a pinion P1a and a pinion P1b, and this pinion P1b meshes with the above-mentioned ring gear R1, and this pinion Pa meshes with the sun gear S1 which is connected to the input shaft 2. This carrier CR1 is secured to the boss unit 3b of the case 3 via a side plate, and this ring gear R1 is supported by a supporting unit 126 to the boss unit 3b so as to rotate.

Further, to the above-mentioned drum-shaped member 125 is connected a linking member 130 that transmits the rotation of the ring gear R1 when the clutch C3 is engaged, and further, to the other side of this transmitting member 30 is connected the ring gear R3 of the second simple planetary gear SP3 of the above-mentioned planetary gear unit PU.

On the other hand, on the outer circumference side of the first simple planetary gear SP2 is configured a one-way clutch F1, and the inner race of this one-way clutch F1 is connected to the hub unit 128 which is connected to the ring gear R2 of the first simple planetary gear SP1. Further, on the outer circumference side of this ring gear R2 is configured a brake B2 comprising an oil pressure servo 15, and a friction plate 75. The inner circumference side of this friction plate 75 is splined to the ring gear R2 and the hub unit 128, and also the outer circumference side of this friction plate 75 is splined to the inner circumference side of the case 3, that is to say, this ring gear R2 is made capable of retaining by the brake B2.

Further, the carrier CR3 which has a pinion P3 supported by the side plate is meshed with the inner circumference side of the above-mentioned ring gear R3 via this pinion P3, and this carrier CR3 is meshed with the above-mentioned sun gear S3 via this pinion P3, and also is linked to the ring gear R2. Further, the carrier CR2 which has a pinion P2 supported by the side plate is meshed with the inner circumference side of the above-mentioned ring gear R2 via this pinion P2, and this carrier CR2 meshes with the above-mentioned sun gear S2 via this pinion P2. Also, this carrier CR2 is linked to the counter gear 5 via this side plate 127.

As described above, the planetary gear PR and the clutch C3 are configured on one side in the axial direction of the planetary gear unit PU, and also the clutch C2 is configured on one side in the axial direction, and the clutch C1 is configured on the other side in the axial direction, and the counter gear 5 is configured in the opposite direction (right side of the diagram) of the planetary gear unit PU of the planetary gear PR. Further, the clutch C2 is disposed on the inner circumferential side of the clutch C3, and particularly of the transmitting member 130 that transmits the output thereof. Further, the brake B1 is configured on the outer circumference side of the planetary gear PR, and the brake B2 is configured on the outer circumference side of the planetary gear unit PU.

Continuing, based on the above-mentioned construction, the operations of an automatic transmission device 1₁₅ will be described, with reference to Fig. 21, Fig. 22, and Fig. 23 below. Now, the vertical axis of the speed line diagram illustrated in Fig. 23 indicate the revolutions of each rotation component, and the horizontal axis indicates the corresponding gear ratio of these rotation components. Further, regarding the planetary gear unit PU section of this speed line diagram, the vertical axis to the farthest horizontal edge (the right side of Fig. 23) corresponds to ring gear R3, and hereafter moving to the left direction within the diagram, the vertical axis corresponds to the ring gear R2 and the carrier CR3, the carrier CR2, and the sun gear S2 and the sun gear S3. Further, regarding the planetary gear PR section of this speed line diagram, the vertical axis to the farthest horizontal edge (the right side of Fig. 23) corresponds to sun gear S1, and hereafter moving to the left direction within the diagram, the vertical axis corresponds to the ring gear R1 and the carrier CR1. Further, the width between these vertical axes are proportional to the inverse of the number of teeth of each of the sun gears S1, S2, S3, and to the inverse of the number of teeth of each of the ring gears R1, R3. Also, the dotted line in the horizontal direction in the diagram illustrate that the rotation is transmitted from the transmitting member 130.

As illustrated in Fig. 21, the rotation of input shaft 2 is input to the above-mentioned sun gear S2 and sun gear S3, by engaging the clutch C1. The rotation of input shaft 2 is input to the above-mentioned carrier CR3 and ring gear R2, by engaging the clutch C2, and this carrier CR3 and ring gear R2 can fix the rotation by the retaining of brake B2, and further, the rotation in one direction is regulated by the one-way clutch F1.

On the other hand, the rotation of the input shaft 2 is input to the above-mentioned sun gear S1, and the rotation of the above-mentioned carrier CR1 is fixed as to the case 3, and the above-mentioned ring gear R1 rotates with reduced rotations based on the rotation of the input shaft 2 which is input to this sun gear S1 via this carrier CR1. The reduced rotation of the ring gear R1 is input to the above-mentioned ring gear R3 via the transmitting member 130, by engaging the clutch C3. Further, the rotation of the this ring gear R3 may be fixed by retaining with the brake B1. Also, the rotation of the above-mentioned carrier CR2 is output to the above-mentioned counter gear 5, and is output to the drive wheel via this counter gear 5, a counter shaft unit not illustrated, and a differential unit.

At first speed forward within the D (drive) range, as illustrated in Fig. 22, the clutch C1 and the one-way clutch F1 are engaged. Then, as illustrated in Fig. 23, the rotation of input shaft 2 is input to the sun gear S2 and the sun gear S3 via the clutch C1, and the rotation of the carrier CR3 and the ring gear R2 is regulated in one direction (the forward rotation direction), in other words, the ring gear R2 is prevent from rotating in the opposite direction and is fixed. Further, the rotation of the input shaft 2 that is input to the sun gear S2 and the reduced rotation is output to the carrier CR2 via the fixed ring gear R2, and the forward rotation for first speed forward is output from the counter gear 5.

Now, at this time, within the planetary gear PR, the reduced rotation is output to the ring gear R3 via the sun gear S1 wherein the rotation of the input shaft 2 is input, and the fixed carrier CR1, however, the transmitting member 130 in particular does not transmit torque, because the clutch C3 is released. Further, when downshifting (when coasting), the brake B2 is retained and the ring gear R2 is fixed, and the above-mentioned state of first speed forward is maintained while preventing the forward rotation of this ring gear R2.

Further, in this first speed forward, the one-way clutch F1 prevents the ring gear R2 from rotation in the opposite direction and allows forward rotation, and therefore, switching from a non-driving range to a driving range and achieving the first speed forward can be accomplished more smoothly by the automatic engaging of the one-way clutch.

At second speed forward within a D (drive) range, as illustrated in Fig. 22, the clutch C1 brake B1 are engaged. Then, as illustrated in Fig. 23, the rotation of input shaft 2 is input to the sun gear S2 and the sun gear S3 via the clutch C1, and the rotations of the ring gear R3 are fixed. Also, reduced rotation is output to the carrier CR3 and the ring gear R2 via the rotation of the input shaft 2 that is input to the sun gear S3 and the fixed ring gear R3. A reduced rotation greater than that of the above-mentioned first speed forward is input to the carrier CR2, via the rotation of the input shaft 2 input to the sun gear S2 and the reduced rotation input to this ring gear R2, and the forward rotation for second speed forward is output from the counter gear 5.

Now, at this time, within the planetary gear PR, the reduced rotation is output to the ring gear R3 via the sun gear S1 wherein the rotation of the input shaft 2 is input, and the fixed carrier CR1, however, the transmitting member 130 in particular does not transmit torque, because the clutch C3 is released.

At third speed forward within the D (drive) range, as illustrated in Fig. 22, the clutch C1 and the clutch C3 are engaged. Then, as illustrated in Fig. 23, the rotation of input shaft 2 is input to the sun gear S1, and the ring gear R1 reduces rotation speed from the fixed carrier CR1. Further, the speed reduction speed rotation of this ring gear R1 is output to the ring gear R3 via the transmitting member 130, from the clutch C3 engaging. On the other hand, the rotation of the input shaft 2 is input to the sun gear S2, and a slightly greater reduced rotation is output to the carrier CR3 and the ring gear R2 from the rotation of the input shaft 2 input to this sun gear S3 and the reduced rotations of the ring gear R3. A reduced rotation greater than that of the above-mentioned second speed forward is output to the carrier CR2 from the rotation of the input shaft 2 input to the sun gear S2 and the slightly greater reduced rotation input to this ring gear R2, and the forward rotation for third speed forward is output from the counter gear 5. In this case, because the ring gear R1 and the ring gear R3 are at a reduced rotation, the above-mentioned transmitting member 130 performs a relatively large torque transmission.

At fourth speed forward within a D (drive) range, as illustrated in Fig. 22, the clutch C1 and the clutch C2 are engaged. Then, as illustrated in Fig. 23, the rotation of input shaft 2 is input to the sun gear S2 and the sun gear S3 via the clutch C1, and into the carrier CR3 and the ring gear R2 via the clutch C2. Therefore, by the rotation of the input shaft 2 input to the sun gear S2 and the rotation of input shaft 2 input to the ring gear R2, in other words, in the state of directly coupled rotation, the rotation of the input shaft 2 is output as is into the carrier CR2, and the forward rotation for fourth speed forward is output from the counter gear 5. Now, at this time, within the planetary gear PR, the reduced rotation is output to the ring gear R3 via the sun gear S1 wherein the rotation of the input shaft 2 is input, and the fixed carrier CR1, however, the transmitting member 130 in particular does not transmit torque, because the clutch C3 is released.

At the fifth speed forward within the D (drive) range, as illustrated in Fig. 22, the clutch C1 and the clutch C3 are engaged. Then, as illustrated in Fig. 23, the rotation of input shaft 2 is input to the sun gear S1, and the ring gear R1 reduces rotation speed from the fixed carrier CR1. Further, the speed reduction speed rotation of this ring gear R1 is output to the ring gear R3 via the transmitting member 130, from the clutch C3 engaging. On the other hand, the rotation of the input shaft 2 is input to the carrier CR3 and the ring gear R2, and an overdrive rotation is output to the sun gear S3 and the sun gear S3 from the rotation of the input shaft 2 input to this carrier CR3 and the reduced rotations of the ring gear R3. Also, an overdrive rotation is output to the carrier CR2 from the rotation of the input shaft 2 input to the ring gear R2 and the overdrive rotation input to this sun gear S2, and the forward rotation for fifth speed forward is output from the counter gear 5. In this case, because the ring gear R1 and the ring gear R3 are at a reduced rotation, the above-mentioned transmitting member 130 performs a relatively large torque transmission.

At sixth speed forward within the D (drive) range, as illustrated in Fig. 22, the clutch C2 is engaged and the brake B1 is retained. Then, as illustrated in Fig. 23, the rotation of the input shaft 2 is input to the carrier CR3 and the ring gear R2 via the clutch C2, and also the ring gear R3 is fixed by retaining the brake B1. This causes an overdrive rotation (even greater than that of the above-mentioned fifth speed forward), from the rotation of the input shaft 2 input to the carrier CR3 and the fixed ring gear R3, and is output to the sun gear S3 and the sun gear S2. From the rotation of the input shaft 2 input to the ring gear R2 and the increased rotation speed input to this sun gear S2, a greater speed rotation than that of the above-mentioned fifth speed forward is output, and the forward rotation for sixth speed forward is output from the counter gear 5. Now, at this time, within the planetary gear PR, the reduced rotation is output to the ring gear R3 via the sun gear S1 wherein the rotation of the input shaft 2 is input, and the fixed carrier CR1, however, the transmitting member 130 in particular does not transmit torque, because the clutch C3 is released.

At first speed reverse within an R (reverse) range, as illustrated in Fig. 22, the clutch C3 is engaged and the brake B2 is retained. Then, as illustrated in Fig. 23, the rotation of the input shaft 2 is input to the sun gear S1, and the ring gear R1 rotates at reduced rotations from the fixed carrier CR1. Further, because the clutch C3 is engaged, the reduced rotations of this ring gear R1 is input to the ring gear R2 via the above-mentioned transmitting member 130. On the other hand, because the brake B2 is retained, the rotation of the carrier CR3 and the ring gear R2 is fixed, and a reverse rotation is output to the sun gear S3 and the sun gear S3 because of the fixed carrier CR3 and the reduced rotation of the ring gear R3. Then, a reverse rotation is output to the carrier CR2 from the fixed ring gear R2 and the reverse rotation input to this sun gear S2, and the forward rotation for first speed reverse is output from the counter gear 5. Now, in this case, similar to that of the above-mentioned third speed forward or fifth speed forward, the ring gear R1 and the ring gear R3 are rotating with reduced speed rotations, and accordingly the above-mentioned transmitting member 130 performs a relatively large torque transmission.

At the P (parking) range and the N (neutral) range, the clutch C1, clutch C2, and clutch C3 are released in particular, the transmission movement between the input shaft 2 and the counter gear 5 is disconnected, and the automatic transmission device 1₁₅ as a whole is in an idle state (neutral state).

As described above, according to the automatic transmission device 1₁₅ relating to the present invention, due to the planetary gear PR and the clutch C2 being configured on one side in the axial direction of the planetary gear unit PU, and the clutch C1 being configured on the other side in the axial direction of the planetary gear unit PU, the planetary gear PR and the planetary gear unit PU can be configured closely together, compared to the case wherein for example two clutches C1 and C2 are configured in between the planetary gear PR and planetary gear unit PU, and the transmitting member 130 for transmitting reduced rotation can be relatively shortened. By doing so, the automatic transmission can be made more compact and more lightweight. Further, because the inertia (force of inertia) can be reduced, the controllability of the automatic transmission can be increased, and the occurrence of speed change shock can be reduced. Further, compared to the case wherein three clutches C1, C2, C3 are configured on one side of the planetary gear unit PU, the oil lines (for example, 2a, 2b, 91, 93, 94) that supply the oil pressure servos 11, 12, and 13 of these clutches C1, C2, C3 can be constructed easily, and the manufacturing process can be simplified and the costs brought down.

Further, since the oil pressure servos 11 and 12 are provided on the input shaft 2, one set of seal rings 81 and 82 seal the case 3 and supply oil to the oil lines 2a and 2b provided within input shaft 2, and therefore oil can be supplied to the oil chamber of oil pressure servos 11 and 12 without providing seal rings between, for example, the input shaft 2 and the oil pressure servos 11 and 12. Further, oil pressure servo 13 can supply oil from the boss unit 3b provided from the case 3, without passing through for example other units, in other words, can supply oil by providing one set of seal rings 84. Therefore, oil can be supplied simply by providing one set of seal rings 81 and 82, 84 each for the oil pressure servos 11, 12, and 13, and sliding resistance from the seal rings can be minimized, and therefore the efficiency of the automatic transmission can be improved.

Further, because the clutch C2 is configured on the inner circumference side of the clutch C3, the clutch C3, which must transmit a relatively large torque in order to transmit the reduced rotation, can be configured on the outer circumference side, and this clutch C3 and the oil pressure servo 13 thereof can have an increased diameter. Particularly the pressure area of the oil chamber of the oil pressure servo 13 can be enlarged, and the capacity capable of torque transmission of this clutch C3 can be increased. By configuring the clutch C2 on the inner circumference side, which can have a smaller capacity for torque transmission compared to the clutch C3, the automatic transmission can be made more compact.

Further, the clutch C1 is a clutch which engages at the relatively slow to medium speed levels of first speed forward, second speed forward, third speed forward, and fourth speed forward, and therefore when this clutch C1 is released at the relatively high speed levels of fifth speed forward, sixth speed forward, or first speed reverse, particularly the hub unit 122 that connects this clutch C1 and the sun gear S2 rotates at a relatively high revolution or revolves in reverse (see Fig. 3). On the other hand, at the fifth speed forward or first speed reverse the transmitting member 130 reduces rotation speed, and at a sixth speed forward the transmitting member 130 may be fixed in some cases, and difference in revolutions between the hub unit 122 and the transmitting member 130 can occur. However, because this clutch C1 is located on the opposite side of the planetary gear PR via the planetary gear unit PU, the hub unit 122 and the transmitting member 130 can be configured apart from one another. In comparison with the case wherein, for example, these members are in contact due to a multi-axial configuration, decreased efficiency of the automatic transmission resulting from friction and so forth from the relative rotation of those units can be prevented.

Further, the automatic transmission device 1₁₅ according to the present embodiment is a transmission device that is directly coupled at fourth speed forward. Therefore, at fifth speed forward and sixth speed forward, the gear ratio can be specified to a high ratio, and particularly when mounted on a vehicle, in the event that the vehicle is running at a high speed, the engine revolutions can be lowered, and this contributes to the quietness of the vehicle while running at a high speed.

Now, the linking member (in particular the transmitting member) for linking the planetary gear PR and the planetary gear unit PU requires rigidity to withstand the reduced speed torque that is input. For example, in the case of configuring a clutch that engages at a slow to medium speed or a clutch that engages and disengages reduced rotations on the inner circumference side of the linking member, the clutches must have a large capacity, therefore an appropriate diameter to correspond with this capacity becomes necessary. Therefore, in the event that the linking member is the type that passes on the outer circumference side of this type of clutch, even a larger diameter than the necessary diameter measurement of those clutches becomes necessary, and the diameter measurement of the linking member is enlarged more than necessary, and the automatic transmission as a whole becomes greater in the direction of the diameter. Therefore an object of the present embodiment is to reduce the enlargement of the diameter measurement, and provide a compact automatic transmission.

According to the present embodiment, all clutches can be configured without enlarging the diameter measurement of the linking member, by configuring a clutch C2 with a small capacity on the linking member, particularly on the inner circumference side of the transmitting member 130.

### <Sixteenth Embodiment>

Below, the sixteenth embodiment, which is a partial modification of the fifteenth embodiments will be described, with reference to Fig. 24 through Fig. 26. Fig. 24 is a schematic cross-sectional diagram illustrating the automatic transmission device of an automatic transmission relating to the sixteenth embodiment, Fig. 25 is an operational table of an automatic transmission relating to the sixteenth embodiment, and Fig. 26 is a speed line diagram of an automatic transmission relating to the sixteenth embodiment. Now, components of the sixteenth embodiment which are the same as those of the fifteenth embodiment will be denoted with the same reference numerals, and description thereof omitted, except for partial modifications.

As illustrated in Fig. 24, an automatic transmission device 1₁₆ of an automatic transmission relating to the sixteenth embodiment is a modification of the configuration of the planetary gear PR and the clutch C3, compared to that of an automatic transmission device 1₁₅ of an automatic transmission relating to the fifteenth embodiment (see Fig. 21) .

The clutch C3 is configured on the planetary gear unit PU side (left side of diagram) of the planetary gear PR within this automatic transmission device 1₁₆. The inner circumference side of the front edge of the drum-shaped member 125 of this clutch C3 is splined to the friction plate 73, and the inner circumference side of this friction plate 73 is splined to the hub unit 126. The drum-shaped member 125 is connected to the input shaft 2, and the hub unit 126 is connected to the sun gear S1. Further, the clutch C2 comprising a oil pressure servo 12, a friction plate 72, a drum-shaped member 123, and a hub unit 124 is configured on the inner circumference side of the above-mentioned clutch C3, that is to say, is enclosed within the hub unit 126.

On the other hand, on the outer circumference side of the planetary gear PR is configured a multi-disc brake B1 that comprises an oil pressure servo 14 and a friction plate 74. The side plate of the carrier CR1 of this planetary gear PR is fixed and supported by the case 3. Further, the ring gear R1 is connected to the transmitting member 130, and the friction plate 74 of the brake B1 is splined with the outer circumference side of this transmitting member 130, and this transmitting member 130 is connected to the ring gear R3.

Continuing, based on the above-mentioned construction, the operations of an automatic transmission device 1₁₆ will be described, with reference to Fig. 24, Fig. 25, and Fig. 26 below. Now, as with the above-mentioned first embodiment, the vertical axis of the speed line diagram illustrated in Fig. 26 indicates the revolutions of each rotation component, and the horizontal axis indicates the corresponding gear ratio of these rotation components. Further, regarding the planetary gear unit PU section of this speed line diagram, the vertical axis to the farthest horizontal edge (the right side of Fig. 26) corresponds to ring gear R3, and hereafter moving to the left direction within the diagram, the vertical axis corresponds to the ring gear R2 and the carrier CR3, the carrier CR2, and the sun gear S2 and the sun gear S3. Further, regarding the planetary gear PR section of this speed line diagram, the vertical axis to the farthest horizontal edge (the right side of Fig. 26) corresponds to sun gear S1, and hereafter moving to the left direction within the diagram, the vertical axis corresponds to the ring gear R1 and the carrier CR1. Further, the width between these vertical axes are proportional to the inverse of the number of teeth of each of the sun gears S1, S2, S3, and to the inverse of the number of teeth of each of the ring gears R1, R3. Also, the dotted line in the horizontal direction in the diagram illustrate that the rotation is transmitted from the transmitting member 130.

As illustrated in Fig. 24, by engaging the clutch C3, the rotation of the input shaft 2 is input to the sun gear S1. Further, the rotation of the above-mentioned carrier CR1 is fixed as to the case 3, and the above-mentioned ring gear R1 rotates at reduced rotations based on the rotation of the input shaft 2 input to this sun gear S1. In other words, by engaging the clutch C3, the reduced rotation of the ring gear R1 is input to the ring gear R3 via the transmitting member 130.

Then, as illustrated in Fig. 25 and Fig. 26, within the planetary gear PR, at third speed forward, fifth speed forward, and first speed reverse, the rotation of the input shaft 2 is input to the sun gear S1 by engaging the clutch C3, the reduced rotation is output to the ring gear R3 from the fixed carrier CR1, and the reduced rotation is input to the ring gear R3 via the transmitting member 130. At this time, the ring gear R1 and the ring gear R3 are rotating at a reduced speed, and therefore the above-mentioned transmitting member 130 performs a relatively large torque transmission. On the other hand, at first speed forward, second speed forward, fourth speed forward, and sixth speed forward, the rotation of the ring gear R3 is input to the ring gear R1 via the transmitting member 130, and further, because clutch C3 is released, as illustrated in Fig. 7, the sun gear S1 rotates based on each different speed level of this ring gear R1 and the fixed carrier CR1.

Now, the actions of the planetary gear are similar to those of the above-mentioned fifteenth embodiment (see Fig. 22 and Fig. 23), and accordingly description thereof will be omitted.

As described above, according to the automatic transmission device 1₁₆ relating to the present invention, due to the planetary gear PR and the clutch C2 being configured on one side in the axial direction of the planetary gear unit PU, and the clutch C1 being configured on the other side in the axial direction of the planetary gear unit PU, the planetary gear PR and the planetary gear unit PU can be configured closely together, compared to the case wherein for example two clutches C1 and C2 are configured in between the planetary gear PR and planetary gear unit PU, and the transmitting member 130 for transmitting reduced rotation can be relatively shortened. By doing so, the automatic transmission can be made more compact and more lightweight. Further, because the inertia (force of inertia) can be reduced, the controllability of the automatic transmission can be increased, and the occurrence of speed change shock can be reduced. Further, compared to the case wherein three clutches C1, C2, C3 are configured on one side of the planetary gear unit PU, the oil lines (for example, 2a, 2b, 91, 93, 94) that supply the oil pressure servos 11, 12, and 13 of these clutches C1, C2, C3 can be constructed easily, and the manufacturing process can be simplified and the costs brought down.

Further, since the oil pressure servos 11 and 12 are provided on the input shaft 2, one set of seal rings 81 and 82 seal the case 3 and supply oil to the oil lines 2a and 2b provided within input shaft 2, and therefore oil can be supplied to the oil chamber of oil pressure servos 11 and 12 without providing the seal rings between, for example, the input shaft 2 and the oil pressure servos 11 and 12. Further, the oil pressure servo 13 can supply oil from the boss unit 3a extended from the case 3, without passing through other parts for example, and therefore can supply oil by providing one set of seal rings 84. Therefore, oil can be supplied simply by providing one set of seal rings 81 and 82, 84 each for the oil pressure servos 11, 12, and 13, and sliding resistance from the seal rings can be minimized, and therefore the efficiency of the automatic transmission can be improved.

Further, the clutch C1 is a clutch which engages at the relatively slow to medium speed levels of first speed forward, second speed forward, third speed forward, and fourth speed forward, and therefore when this clutch C1 is released at the relatively high speed levels of fifth speed forward, sixth speed forward, or first speed reverse, particularly the hub unit 122 that connects this clutch C1 and the sun gear S2 rotates at a relatively high revolution or revolves in reverse (see Fig. 3). On the other hand, at the fifth speed forward or first speed reverse the transmitting member 130 reduces rotation speed, and at a sixth speed forward the transmitting member 130 may be fixed in some cases, and difference in revolutions between the hub unit 122 and the transmitting member 130 can occur. However, because this clutch C1 is located on the opposite side of the planetary gear PR via the planetary gear unit PU, the hub unit 122 and the transmitting member 130 can be configured apart from one another. In comparison with the case wherein, for example, these members are in contact due to a multi-axial configuration, decreased efficiency of the automatic transmission resulting from friction and so forth from the relative rotation of those units can be prevented.

Further, in the event that the clutch C3 is placed between the ring gear R1 and the sun gear S3 for example, the reduced rotation must be engaged and disengaged, and becomes relatively large, but by placing between the input shaft 2 and the sun gear S1, the engaging and disengaging of the rotation of the input shaft 2 from this clutch C3 causes the reduced rotation output from the ring gear R1 of the planetary gear PR to be engaged and disengaged, and the clutch C3 can be made more compact, and therefore the automatic transmission can be made more compact.

Further, the automatic transmission device 1₁₆ according to the present embodiment is a transmission device that is directly coupled at fourth speed forward. Therefore, at fifth speed forward and sixth speed forward, the gear ratio can be specified to a high ratio, and particularly when mounted on a vehicle, in the event that the vehicle is running at a high speed, the engine revolutions can be lowered, and this contributes to the quietness of the vehicle while running at a high speed.

Now, in the event that a clutch is configured in between the planetary gear PR and the planetary gear unit PU for example, the length of the linking member (particularly the transmitting member) that links the planetary gear PR and the planetary gear unit PU becomes longer in the axial direction, and since this linking member is for transmitting the reduced rotation, the thickness of the member must be increased so as to withstand this, and therefore the weight also increases. Therefore an object of the present invention is to provide an automatic transmission that can shorten the distance between the speed reduction planetary gear and the planetary gear unit, and reduce the increase in weight.

With the present embodiment, in particular, the clutch C2 is disposed on the opposite side in the axial direction of the planetary gear unit PU from the planetary gear PR, and therefore, providing a clutch between the planetary gear PR and the planetary gear unit PU is not necessary, and the length of the linking member, particularly the transmitting member 130 can be made that much shorter. Therefore, an increase in weight of the automatic transmission as a whole can be prevented.

### <Seventeenth Embodiment>

Now, the seventeenth embodiment, which is a partial modification of the fifteenth embodiment will be described, with reference to Fig. 27 through Fig. 29. Fig. 27 is a schematic cross-sectional diagram illustrating the automatic transmission device of an automatic transmission relating to the seventeenth embodiment, Fig. 28 is an operational table of an automatic transmission relating to the seventeenth embodiment, and Fig. 29 is a speed line diagram of an automatic transmission relating to the seventeenth embodiment. Now, components of the seventeenth embodiment which are the same as those of the fifteenth embodiment will be denoted with the same reference numerals, and description thereof omitted, except for partial modifications.

As Fig. 27 illustrates, the automatic transmission device 1₁₇ of the automatic transmission relating to the seventeenth embodiment is a modification of the configuration of the clutch C2, and further, configures a brake B3 instead of a clutch C3, and enables the carrier CR1 of the planetary gear PR to be fixed by the brake B3, compared to that of the automatic transmission device 1₁₆ of the automatic transmission of the fifteenth embodiment (see Fig. 21).

Within the automatic transmission device 1₁₇, the brake B3 is configured on the planetary gear PR, on the opposite (left side on the diagram) from the planetary gear unit PU. This brake B3 comprises an oil pressure servo 16, a friction plate 76, and a hub unit 133. Further, the clutch C2, comprising an oil pressure servo 12, a friction plate 72, a drum-shaped member 123, and a hub unit 124, is configured on the inner circumference side of above-mentioned brake B3, that is to say, is enclosed within the hub unit 133. The hub unit 133 of this brake B3 is connected to the side plate of one side of the carrier CR1, and the side plate of the other side of this carrier CR1 is supported by the input shaft 2 so as to be capable of rotating. Further, the sun gear S1 is connected to the input shaft 2 via the drum-shaped member 123 of the clutch C2. Also, the friction plate 74 of the brake B1 is splined with the outer circumference side of the ring gear R1, and this ring gear R1 is connected to the transmitting member 130, and is connected to the sun gear S3 via this transmitting member 130.

Continuing, based on the above-mentioned construction, the operations of an automatic transmission device 1₁₇ will be described, with reference to Fig. 27, Fig. 28, and Fig. 29 below. Now, as with the above-mentioned first embodiment, the vertical axis of the speed line diagram illustrated in Fig. 29 indicates the revolutions of each rotation component, and the horizontal axis indicates the corresponding gear ratio of these rotation components. Further, regarding the planetary gear unit PU section of this speed line diagram, the vertical axis to the farthest horizontal edge (the right side of Fig. 29) corresponds to ring gear R3, and hereafter moving to the left direction within the diagram, the vertical axis corresponds to the ring gear R2 and the carrier CR3, the carrier CR2, and the sun gear S2 and the sun gear S3. Further, regarding the planetary gear PR section of this speed line diagram, the vertical axis to the farthest horizontal edge (the right side of Fig. 29) corresponds to sun gear S1, and hereafter moving to the left direction within the diagram, the vertical axis corresponds to the ring gear R1 and the carrier CR1. Further, the width between these vertical axes are proportional to the inverse of the number of teeth of each of the sun gears S1, S2, S3, and to the inverse of the number of teeth of each of the ring gears R1, R3. Also, the dotted line in the horizontal direction in the diagram illustrate that the rotation is transmitted from the transmitting member 130.

As Fig. 27 illustrates, by retaining the brake B3, the above-mentioned carrier CR1 is fixed as to the case 3. Further, the rotation of the input shaft 2 is input to the sun gear S1, and the above-mentioned ring gear R1 rotates at reduced rotations based on the rotation of input shaft 2 which is input to this sun gear S1, because this carrier CR1 is fixed. In other words, by engaging the brake B3, the reduced rotation of the ring gear R3 is input to the sun gear S3 via the transmitting member 130.

By doing so, as Fig. 28 and Fig. 29 illustrate, regarding the planetary gear PR, at third speed forward, fifth speed forward, and first speed reverse, the rotation of the input shaft 2 is input to the sun gear S1 by retaining the brake B3, the carrier CR1 is fixed, and the reduced rotation is output to the ring gear R3 by the rotation of the sun gear S1 wherein the rotation of the input shaft 2 is input, and the reduced rotation is input to the sun gear S3 via the transmitting member 130. In this case, the ring gear R1 and the ring gear R3 are rotating at reduced speed, therefore the above-mentioned transmitting member 130 performs a relatively large torque transmission. On the other hand, at first speed forward, second speed forward, fourth speed forward, and sixth speed forward, the rotation of the ring gear R3 is input to the ring gear R1 via the transmitting member 130, and further, because the brake B3 is released, as Fig. 29 illustrates, the carrier CR1 rotates based on each the rotation within the speed level of this ring gear R1 and the sun gear S1 of the rotation of the input shaft 2.

Now, the actions of the above-mentioned planetary gear are similar to those of the above-described fifteenth embodiment (see Fig. 22 and Fig. 23), and accordingly description thereof will be omitted.

As described above, according to the automatic transmission device 1₁₇ relating to the present invention, due to the planetary gear PR and the clutch C2 being configured on one side in the axial direction of the planetary gear unit PU, and the clutch C1 being configured on the other side in the axial direction of the planetary gear unit PU, the planetary gear PR and the planetary gear unit PU can be configured closely together, compared to the case wherein for example two clutches C1 and C2 are configured in between the planetary gear PR and planetary gear unit PU, and the transmitting member 130 for transmitting reduced rotation can be relatively shortened. By doing so, the automatic transmission can be made more compact and more lightweight. Further, because the inertia (force of inertia) can be reduced, the controllability of the automatic transmission can be increased, and the occurrence of speed change shock can be reduced.

Further, since the oil pressure servos 11 and 12 are provided on the input shaft 2, one set of the seal rings 81 and 82 seal the case 3 and supply oil to the oil lines 2a and 2b provided within input shaft 2, and therefore oil can be supplied to the oil chamber of oil pressure servos 11 and 12 without providing the seal rings between, for example, the input shaft 2 and the oil pressure servos 11 and 12. Therefore, oil can be supplied simply by providing one set of the seal rings 81 and 82 each for the oil pressure servos 11 and 12, and sliding resistance from the seal rings can be minimized, and therefore the efficiency of the automatic transmission can be improved.

Further, the clutch C1 is a clutch which engages at the relatively slow to medium speed levels of first speed forward, second speed forward, third speed forward, and fourth speed forward, and therefore when this clutch C1 is released at the relatively high speed levels of fifth speed forward, sixth speed forward, or first speed reverse, particularly the hub unit 122 that connects this clutch C1 and the sun gear S2 rotates at a relatively high revolution or revolves in reverse (see Fig. 3). On the other hand, at the fifth speed forward or first speed reverse the transmitting member 130 reduces rotation speed, and at a sixth speed forward the transmitting member 130 may be fixed in some cases, and difference in revolutions between the hub unit 122 and the transmitting member 130 can occur. However, because this clutch C1 is located on the opposite side of the planetary gear PR via the planetary gear unit PU, the hub unit 122 and the transmitting member 130 can be configured apart from one another. In comparison with the case wherein, for example, these members are in contact due to a multi-axial configuration, decreased efficiency of the automatic transmission resulting from friction and so forth from the relative rotation of those units can be prevented.

Further, since the reduced rotation output to the planetary gear unit PU from the planetary gear PR is made to be engaged and disengaged by the brake B3, the number of parts (for example drum-shaped members and so forth) can be reduced as compared to the case wherein, for example, a clutch C3 is provided. Further, the brake B3 can configure an oil line directly from the case 3, and therefore the configuration of the oil line can be simplified as compared to the case wherein, for example, a clutch C3 is provided.

Further, the automatic transmission device 1₁₇ according to the present embodiment is a transmission device that is directly coupled at fourth speed forward. Therefore, at fifth speed forward and sixth speed forward, the gear ratio can be specified to a high ratio, and particularly when mounted on a vehicle, in the event that the vehicle is running at a high speed, the engine revolutions can be lowered, and this contributes to the quietness of the vehicle while running at a high speed.

Now, in the event that a clutch is configured in between the planetary gear PR and the planetary gear unit PU for example, the length of the linking member (particularly the transmitting member) that links the planetary gear PR and the planetary gear unit PU becomes longer in the axial direction, and since this linking member is for transmitting the reduced rotation, the thickness of the member must be increased so as to withstand this, and therefore the weight also increases. Therefore an object of the present invention is to provide an automatic transmission that can shorten the distance between the speed reduction planetary gear and the planetary gear unit, and reduce the increase in weight.

With the present embodiment, in particular, the clutch C2 is disposed on the opposite side in the axial direction of the planetary gear unit PU from the planetary gear PR, and therefore, providing a clutch between the planetary gear PR and the planetary gear unit PU is not necessary, and the length of the linking member, particularly the transmitting member 130 can be made that much shorter. Therefore, an increase in weight of the automatic transmission as a whole can be prevented.

### <Eighteenth Embodiment>

Below, the eighteenth embodiment, which is a partial modification of the first through the seventeenth embodiments will be described, with reference to Fig. 30 through Fig. 32. Fig. 30 is a schematic cross-sectional diagram illustrating the automatic transmission device of an automatic transmission relating to the eighteenth embodiment, Fig. 31 is an operational table of an automatic transmission relating to the eighteenth embodiment, and Fig. 32 is a speed line diagram of an automatic transmission relating to the eighteenth embodiment. Now, components of the eighteenth embodiment which are the same as those of the first embodiment will be denoted with the same reference numerals, and description thereof omitted, except for partial modifications.

As illustrated in Fig. 30, an automatic transmission device 1₁₈ comprises a planetary gear unit PU and a planetary PR on the input shaft 2. This planetary gear unit PU is a multiple type planetary gear, which comprises a sun gear S2, a carrier CR2, a ring gear R2, and a sun gear S3, as the four rotation components; wherein the carrier CR2 has a long pinion PL that meshes with a sun gear S3 and a ring gear R2, supported by a side plate, and a short pinion PS that meshes with a sun gear S3, which are meshed one to another. Further, the above-mentioned planetary gear PR is a double pinion planetary gear that has a carrier CR1, wherein a pinion Pb is meshed with a ring gear R1 and a pinion Pa is meshed with a sun gear S2, which are meshed one to another.

On the above-mentioned input shaft 2 is configured a multi-disc clutch (second clutch) C2 on the inner circumference side, which comprises an oil pressure servo 12, a friction plate 72, a drum-shaped member 223 that forms a clutch drum, and a hub unit 224 linked to a sun gear S2; and a multi-disc brake B2 on the outer circumference side, which comprises an oil pressure servo 15, and a friction plate 75 that is splined with the above-mentioned hub unit 224.

The oil chamber of this oil pressure servo 12 is extended from one edge of the case 3, and is connected to an oil line 91 of the boss unit 3a which is provided on the above-mentioned input shaft 2 in a sleeve form. Also, this oil line 91 is linked to an oil pressure control unit not illustrated. In other words, because the above-mentioned oil pressure servo 12 is configured on the boss unit 3a, an oil line from the oil pressure control unit, not illustrated, to the oil chamber of the oil pressure servo 12 is constructed, by one set of seal rings 81 to seal between this boss unit 3a and the drum-shaped member 223.

Further, the above-mentioned input shaft 2 is connected to the above-mentioned drum-shaped member, and on the inner circumference side of the front edge of this drum-shaped member 223 is configured the friction plate 72 of the clutch C2 which is capable of engaging by the oil pressure servo 12 for the clutch C2, splined. Further, this hub unit 224 is connected to the above-mentioned sun gear S2. Further, the brake B2 is disposed by splining on the outer circumference side of the above-mentioned drum-shaped member 224, capable of engaging by an oil pressure servo 15.

On the other hand, on the other side (the left of the diagram) of the input shaft 2 is configured a multi-disc clutch (first clutch) C3, which comprises an oil pressure servo 13, a friction plate 73, a drum-shaped member 225 that forms a clutch drum, and a hub unit 226. A friction plate 73 is splined with the inner circumference side of the front edge of the drum-shaped member 225 of this clutch C3, and this friction plate 73 is splined with the outer circumference side of the front edge of the hub unit 226, and this hub unit 226 is connected to the carrier CR2.

The oil chamber of this oil pressure servo 13 is connected to an oil line 2b which is formed on the above-mentioned input shaft 2, and this oil line 2b is provided along the edge of the case 3 that is the opposite side of that of the above-mentioned boss unit 3a, and is connected to the oil line 93 of the boss unit 3b which is provided on the input shaft 2 in a sleeve form, and this oil line 93 is linked to an oil pressure control unit not illustrated. Therefore, regarding the above-mentioned oil pressure servo 13, providing one set of seal rings 81 to seal between the boss unit 3b of the case 3 and the drum-shaped member 225 configures an oil line from the oil pressure control device, not illustrated, to the oil chamber of the oil pressure servo 13.

Further, on the boss unit 3b is configured a multi-disc clutch (third clutch) C1, comprising an oil pressure servo 11, a friction plate 71, and a drum-shaped member 221. The oil chamber of the above-mentioned oil pressure servo 11 is linked to the oil line 94 of the above-mentioned boss unit 3b, and this oil line 94 is linked to an oil pressure control unit, not illustrated. Therefore, regarding the above-mentioned oil pressure servo 11, an oil line from the oil pressure control unit, not illustrated, to the oil chamber of the oil pressure servo 11, is constructed by one set of seal rings 84 that seal between the boss unit 3b of the case 3 and the drum-shaped member 221.

Further, on the above-mentioned boss unit 3b, in the left of the diagram, the drum-shaped member 221 is supported so as to be capable of rotating, and on the front edge of the inner circumference side of this drum-shaped member 221, the friction plate 71 of the clutch C1 is splined, which can be engaged by the oil pressure servo 11 for the clutch C1. On the outer circumference side of this clutch C1 is configured a hub unit 222 on which is formed the above-mentioned ring gear R1 by splining, and this hub unit 222 is supported by the input shaft 2 so as to be capable of rotation. Further, the carrier CR1 comprises a pinion Pa and a pinion Pb, and this pinion Pb is meshed with the above-mentioned ring gear R1, and this pinion Pa meshes with the sun gear S1 which is connected to the input shaft 2. This carrier CR1 is fixed to the boss unit 3b of the case 3, via a side plate.

Also, the drum-shaped member 221, to which the above-mentioned clutch C1 is splined, is supported by the above-mentioned boss unit 3b so as to rotate, and a transmitting member 230 is connected for transmitting the rotation of the ring gear R1 when the clutch C1 is engaged, and further, on the other side of this transmitting member 230 is connected the sun gear S3 of the above-mentioned planetary gear unit PU.

On the other hand, on the outer circumference side of the planetary gear unit PU is configured a multi-disc brake B1 that comprises an oil pressure servo 14, a friction plate 74, and a hub unit 228. To the side plate of the carrier CR2 of the above-mentioned planetary gear unit PU is connected a hub unit 228 that is splined the friction plate 74 of the above-mentioned brake B1, and further, this hub unit 228 is connected to the inner race of a one-way clutch F1. The short pinion PS of this carrier CR2 meshes with the sun gear S3. Further, the above-mentioned sun gear S2 and ring gear R2 are mesh with the long pinion PL of this carrier CR2, a linking member 227 is connected to one edge of this ring gear R2, and this ring gear R3 is linked to the counter gear 5 via this linking member 227.

As described above, the planetary gear PR and the clutch C3 are configured on one side in the axial direction of the planetary gear unit PU, and also the clutch C1 is configured on one side in the axial direction, and the clutch C2 is configured on the other side in the axial direction, and the counter gear 5 is configured in the opposite direction (right side of the diagram) of the planetary gear unit PU of the planetary gear PR. Further, the clutch C3 is disposed on the inner circumferential side of the clutch C1, and particularly of the transmitting member 230 that transmits the output thereof. Further, the brake B2 is configured on the outer circumferential side of the clutch C2, and the brake B1 is configured on the outer circumferential side of the planetary gear unit PU.

Continuing, based on the above-mentioned construction, the operations of an automatic transmission device 1₁₈ will be described, with reference to Fig. 30, Fig. 31, and Fig. 32 below. Now, the vertical axis of the speed line diagram illustrated in Fig. 32 indicates the revolutions of each rotation component, and the horizontal axis indicates the corresponding gear ratio of these rotation components. Further, regarding the planetary gear unit PU section of this speed line diagram, the vertical axis to the farthest horizontal edge (the right side of Fig. 32) corresponds to sun gear S3, and hereafter moving to the left direction within the diagram, the vertical axis corresponds to the ring gear R2, the carrier CR2, and the sun gear S2. Further, regarding the planetary gear PR section of this speed line diagram, the vertical axis to the farthest horizontal edge (the right side of Fig. 32) corresponds to the sun gear S1, and hereafter moving to the left direction within the diagram, the vertical axis corresponds to the ring gear R1 and the carrier CR1. Further, the width between these vertical axes are proportional to the inverse of the number of teeth of each of the sun gears S1, S2, S3, and to the inverse of the number of teeth of each of the ring gears R1, R3. Also, the dotted line in the horizontal direction in the diagram illustrate that the rotation is transmitted from the transmitting member 230.

As illustrated in Fig. 30, the rotation of the input shaft 2 is input to the above-mentioned sun gear 2, by engaging the clutch C2, and the rotation of this sun gear S2 can be fixed by retaining the brake B2. The rotation of the input shaft 2 is input to the above-mentioned carrier CR2, by engaging the clutch C3, and the rotation can be fixed by retaining the brake B2. Further, rotation in one direction is controlled by the one-way clutch F1.

On the other hand, the above-mentioned sun gear S1 is connected to the input shaft 2, and the rotation of this input shaft 2 is input, and further, the carrier CR1 is connected to the case 3 and its rotation is fixed, and therefore the ring gear R1 rotates at reduced rotations. Further, by engaging the clutch C1, the reduced rotations of this ring gear R1 are input to the sun gear S3. Also, the rotation of the above-mentioned ring gear R2 is output to the above-mentioned counter gear 5, and is output to the drive wheel via this counter gear 5, a counter shaft unit not illustrated, and a differential unit.

At first speed forward within the D (drive) range, as illustrated in Fig. 31, the clutch C1 and the one-way clutch F1 are engaged. Then, as illustrated in Fig. 32, the reduced rotations of the ring gear R1 are input to the sun gear S3 via the clutch C1 and the transmitting member 230. Further, the rotation of the carrier CR2 is controlled in one direction (the forward rotation direction) by the one-way clutch F1, in other words the carrier CR2 is prevented from rotating in the opposite direction and is fixed. Then, the ring gear R2 rotates forward for the first speed forward, from the reduced rotations input to the sun gear S2 and the fixed carrier CR2, and that rotation is output from the counter gear 5.

Now, when downshifting (when coasting), the brake B1 is retained and the carrier CR2 is fixed, and the above-mentioned state of first speed forward is maintained while preventing the forward rotation of this carrier CR2. Further, at this first speed forward, the one-way clutch F1 prevents the carrier CR2 from rotation in the opposite direction and allows forward rotation, and therefore, switching from a non-driving range to a driving range and achieving the first speed forward can be accomplished more smoothly by the automatic engaging of the one-way clutch. In this case, because the sun gear S3 and the ring gear R1 are at a reduced rotation, the above-mentioned transmitting member 230 performs a relatively large torque transmission.

At second speed forward within the D (drive) range, as illustrated in Fig. 31, the clutch C1 is engaged and the brake B2 is retained. Then, as illustrated in Fig. 32, the reduced rotations of the ring gear R1 are input to the sun gear S3 via the clutch C1 and the transmitting member 230, and the rotation of the sun gear S2 is fixed by the brake B2. By doing so, the carrier CR2 rotates at reduced rotations slightly, and from the reduced rotations input to the sun gear S3 and this slightly reduced rotation of the carrier CR2, the ring gear R2 rotates forward for the second speed forward, and this rotation is output to the counter gear 5. Now, also in this case, because the sun gear S3 and the ring gear R1 are at a reduced rotation, the above-mentioned transmitting member 230 performs a relatively large torque transmission.

At third speed forward within the D (drive) range, as illustrated in Fig. 31, the clutch C1 and the clutch C2 are engaged. Then, as illustrated in Fig. 32, the reduced rotations of the ring gear R1 is input to the sun gear S3 via the clutch C1 and the transmitting member 230, and also the rotation of the input shaft 2 is input to the sun gear S2 by engaging the clutch C2. Further, by the rotation of the input shaft 2 input to the sun gear S2 and by the reduced rotation of the sun gear S3, the fixed carrier CR2 has slightly greater reduced rotations than the reduced rotations of this sun gear S3. Further, from the input rotation of the sun gear S2 and the reduced rotations of the sun gear S3, the ring gear R2 rotates forward for third speed forward, and this rotation is output from the counter gear 5. In this case also, because the sun gear S3 and the ring gear R1 are at a reduced rotation, the above-mentioned transmitting member 230 performs a relatively large torque transmission.

At fourth speed forward within the D (drive) range, as illustrated in Fig. 31, the clutch C1 and the clutch C3 are engaged. Then, as illustrated in Fig. 32, the reduced rotations of the ring gear R2 is input to the sun gear S3 via the clutch C1 and the transmitting member 230, and also the rotation of the input shaft 2 is input to the carrier CR2 via the clutch C3. Then, by the rotation of input shaft 2 input to the carrier CR2 and by the reduced rotations of the sung gear S3, the ring gear R2 rotates forward for fourth speed forward, and this rotation is output from the counter gear 5. In this case also, because the sun gear S3 and the ring gear R1 are at a reduced rotation, the above-mentioned transmitting member 230 performs a relatively large torque transmission.

At fifth speed forward within the D (drive) range, as illustrated in Fig. 31, the clutch C2 and the clutch C3 are engaged. Then, as illustrated in Fig. 32, the rotation of input shaft 2 is input to the carrier CR2 via the clutch C3, and also the rotation of the input shaft 2 is input to the sun gear S2 via the clutch C2. Then, from the rotation of the input shaft 2 input to the sun gear S2, and the rotation of the input shaft 2 input to the carrier CR2, the ring gear R2 is in a direct-connect rotating state, and rotates forward for the fifth speed forward which has the same rotation as the input shaft 2, and this rotation is output from the counter gear 5.

At sixth speed forward within the D (drive) range, as illustrated in Fig. 31, the clutch C3 is engaged and the brake B2 is retained. Then, as illustrated in Fig. 32, the rotation of the input shaft 2 is input to the carrier CR2 via the clutch C3, and rotation of the sun gear S2 is fixed by retaining the brake B2. Then, from the rotation of the input shaft 2 input to the carrier CR2 and from the fixed sun gear S2, the ring gear R2 rotates at overdrive rotations for sixth speed forward, and this rotation is output from the counter gear 5.

At first speed reverse within the R (reverse) range, as illustrated in Fig. 31, the clutch C2 is engaged and the brake B1 is retained. Then, as illustrated in Fig. 32, the rotation of the input shaft 2 is input to the sun gear S2 by engaging the clutch C2, and also the rotation of the carrier CR2 is fixed by retaining the brake B1. Then from the rotation of the input shaft 2 input to the sun gear S2 and from the fixed carrier CR2, the ring gear R2 rotates in the opposite direction as the first speed reverse, and this rotation is output to the counter gear 5.

At the P (parking) range and the N (neutral) range, particularly clutch C1, clutch C2, and clutch C3 are released, the transmission movement between the input shaft 2 and the counter gear 5 is disconnected, and the automatic transmission device 1₁₈ as a whole is in an idle state (neutral state).

As described above, according to the automatic transmission device 1₁₈ relating to the present invention, because the planetary gear PR and the clutch C3 is configured on one side in the axial direction of the planetary gear unit PU, and the clutch C2 is configured on the other side in the axial direction of the planetary gear unit PU, the planetary gear PR and the planetary gear unit PU can be configured closely together, as compared to the case wherein for example two clutches C2 and C3 are configured in between the planetary gear PR and planetary gear unit PU, and the transmitting member 230 for transmitting reduced rotation can be relatively shortened. By doing so, the automatic transmission can be made more compact and more lightweight. Further, because the inertia (force of inertia) can be reduced, the controllability of the automatic transmission can be increased, and the occurrence of speed change shock can be reduced. Further, compared to the case wherein three clutches C1, C2, C3 are configured on one side of the planetary gear unit PU, the oil lines (for example, 2b, 91, 93, 94) that supply the oil pressure servos 11, 12, and 13 of these clutches C1, C2, C3 can be constructed easily, and the manufacturing process can be simplified and the costs brought down.

Further, since the oil pressure servo 13 is provided on the input shaft 2, one set of seal rings 82 seal the case 3 and supply oil to the oil line 2b provided within input shaft 2, and therefore oil can be supplied to the oil chamber of oil pressure servo 13 without providing seal rings between, for example, the input shaft 2 and the oil pressure servo 13. Further, oil pressure servos 11 and 12 can supply oil from the boss units 3a, 3b provided from the case 3, without passing through other units for example, in other words, can supply oil by providing one set of seal rings 81 and 84. Therefore, oil can be supplied simply by providing one set of seal rings 81, 82, and 84 each for the oil pressure servos 11, 12, and 13, and sliding resistance from the seal rings can be minimized, and therefore the efficiency of the automatic transmission can be improved.

Further, since the clutch C3 is configured on the inner circumference side of the clutch C1, the clutch C1, which must transmit a relatively large torque in order to transmit the reduced rotation, can be configured on the outer circumference side, and this clutch C1 and the oil pressure servo 11 thereof can have an increased diameter. Particularly the pressure area of the oil chamber of the oil pressure servo 11 can be enlarged, and the capacity capable of torque transmission of this clutch C1 can be increased. By configuring the clutch C3 which can have a smaller capacity for torque transmission compared to the clutch C1, the automatic transmission can be made more compact.

Further, because clutch C2 is a clutch that engages while at first speed reverse, when this clutch 2 is engaged at first speed reverse, the hub unit 224 that connects this clutch C2 and the sun gear S2 rotates at the same rotation as the input shaft 2, by engaging this clutch C2, while the transmitting member 230 rotates in the opposite direction, and accordingly there may be cases wherein the rotation difference of the transmitting member 230 and the hub unit 224 becomes great, but due to this clutch C2 being located on the opposite side of the planetary gear PR, via the planetary gear unit PU, the transmitting member 230 and the hub hunt 224 can be configured apart from one another. Compared to the case wherein, for example, those parts come in contact due to a multiple axis construction, the decreased efficiency of the automatic transmission caused by the friction produced by the relative rotation between those parts can be prevented.

Further, the automatic transmission device 1₁₈ according to the present embodiment is a transmission device that is directly coupled at fifth speed forward. Therefore, at first speed forward and fourth speed forward, the gear ratio can be specified in a detailed manner, and particularly when mounted on a vehicle, in the event that the vehicle is running at a high speed, the engine can be utilized with better revolutions, and this contributes to increased fuel economy of the vehicle while running at a low to medium speed.

Now, the linking member (in particular the transmitting member) for linking the planetary gear PR and the planetary gear unit PU requires rigidity to withstand the reduced speed torque that is input. For example, in the case of configuring a clutch that engages at a slow to medium speed or a clutch that engages and disengages reduced rotations on the inner circumference side of the linking member, the clutches must have a large capacity, therefore an appropriate diameter to correspond with this capacity becomes necessary. Therefore, in the event that the linking member is the type that passes on the outer circumference side of this type of clutch, even a larger diameter than the necessary diameter measurement of those clutches becomes necessary, and the diameter measurement of the linking member is enlarged more than necessary, and the automatic transmission as a whole becomes greater in the direction of the diameter. Therefore an object of the present embodiment is to reduce the enlargement of the diameter measurement, and provide a compact automatic transmission.

According to the present embodiment, all clutches can be configured without enlarging the diameter measurement of the linking member, by configuring a clutch C3 with a small capacity on the linking member, particularly on the inner circumference side of the transmitting member 230.

### <Nineteenth Embodiment>

Now, the nineteenth embodiment, which is a partial modification of the eighteenth embodiment will be described, with reference to Fig. 33 through Fig. 36. Fig. 33 is a schematic cross-sectional diagram illustrating the automatic transmission device of an automatic transmission relating to the nineteenth embodiment, Fig. 34 is an operational table of an automatic transmission relating to the nineteenth embodiment, and Fig. 35 is a speed line diagram of an automatic transmission relating to the nineteenth embodiment. Now, components of the nineteenth embodiment which are the same as those of the eighteenth embodiment will be denoted with the same reference numerals, and description thereof omitted, except for partial modifications.

As Fig. 33 illustrates, the automatic transmission device 1₁₉ of the automatic transmission relating to the nineteenth embodiment is a modification of the configuration of the clutch C2, and further, changes the construction of the oil line of the oil pressure servo 12 of the clutch C2, compared to that of the automatic transmission device 1₁₈ of the automatic transmission of the eighteenth embodiment (see Fig. 30).

Within the automatic transmission device 1₁₉, the clutch C1 is configured on the planetary gear PR, on the opposite (left side on the diagram) from the planetary gear unit PU. The front edge of the inner circumference side of the drum-shaped member 221 of this clutch C1 is splined with the friction plate 71, and the inner circumference side of this friction plate 71 is splined with the hub unit 222. The drum-shaped member 221 is connected to the input shaft 2, and the hub unit 222 is connected to the sun gear S1 of the planetary gear PR. The side plate of the carrier CR1 of this planetary gear PR is fixed and supported by the case 3. Also, the ring gear R1 is connected to the transmitting member 230, and this transmitting member is connected to the sun gear S3. Further, the clutch C3 comprising an oil servo 13, a friction plate 73, a drum-shaped member 225, and a hub unit 226 is configured so as to be enclosed within this transmitting member 230.

The oil chamber of this oil pressure servo 12 is linked to an oil line 2a which is formed on the input shaft 2, and this oil line 2a is provided along one edge of the case, and is connected to the oil line 91 of the boss unit 3a which is provided on the input shaft 2 in a sleeve form, and this oil line 91 is linked to an oil pressure control unit not illustrated. Therefore, regarding the above-mentioned oil pressure servo 12, simply by providing one set of seal rings 81 to seal between the input shaft 2 and the boss unit 3a of the case 3, an oil line is constructed from the oil pressure control device, not illustrated, to the oil chamber of the oil pressure servo 12.

Continuing, based on the above-mentioned construction, the operations of the automatic transmission device 1₁₉ will be described, with reference to Fig. 33, Fig. 34, and Fig. 35 below. Now, as with the above-mentioned first embodiment, the vertical axis of the speed line diagram illustrated in Fig. 35 indicates the revolutions of each rotation component, and the horizontal axis indicates the corresponding gear ratio of these rotation components. Further, regarding the planetary gear unit PU section of this speed line diagram, the vertical axis to the farthest horizontal edge (the right side of Fig. 35) corresponds to sun gear S3, and hereafter moving to the left direction within the diagram, the vertical axis corresponds to the ring gear R2, the carrier CR2, and the sun gear S2. Further, regarding the planetary gear PR section of this speed line diagram, the vertical axis to the farthest horizontal edge (the right side of Fig. 35) corresponds to sun gear S1, and hereafter moving to the left direction within the diagram, the vertical axis corresponds to the ring gear R1 and the carrier CR1. Further, the width between these vertical axes are proportional to the inverse of the number of teeth of each of the sun gears S1, S2, S3, and to the inverse of the number of teeth of each of the ring gears R1, R3. Also, the dotted line in the horizontal direction in the diagram illustrate that the rotation is transmitted from the transmitting member 230.

As illustrated in Fig. 33, by engaging the clutch C1, the rotation of the input shaft 2 is input to the sun gear S1. Further, the rotation of the above-mentioned carrier CR1 is fixed as to the case 3, and the above-mentioned ring gear R1 rotates at reduced rotations based on the rotation of the input shaft 2 input to this sun gear S1. In other words, by engaging the clutch C1, the reduced rotation of the ring gear R1 is input to the sun gear S2 via the transmitting member 230.

Then, as illustrated in Fig. 34 and Fig. 35, within the planetary gear PR, at first speed forward, second speed forward, third speed forward, and fourth speed forward, the rotation of the input shaft 2 is input to the sun gear S1 by engaging the clutch C1, the reduced rotation is output to the ring gear R3 from the fixed carrier CR1, and the reduced rotation is input to the sun gear S3 via the transmitting member 230. At this time, the ring gear R1 and the sun gear S3 rotate at a reduced speed, and therefore the above-mentioned transmitting member 230 performs a relatively large torque transmission. On the other hand, at fifth speed forward, sixth speed forward, and first speed reverse, the rotation of the sun gear S3 is input to the ring gear R1 via the transmitting member 230, and further, because the clutch C1 is released, as illustrated in Fig. 35, the sun gear S1 rotates based on each different speed of this ring gear R1 and the fixed carrier CR1.

Now, the actions of the above-mentioned planetary gear are similar to those of the above-described eighteenth embodiment (see Fig. 31 and Fig. 32), and accordingly description thereof will be omitted.

As described above, according to the automatic transmission device 1₁₉ relating to the present invention, due to the planetary gear PR and the clutch C3 being configured on one side in the axial direction of the planetary gear unit PU, and the clutch C2 being configured on the other side in the axial direction of the planetary gear unit PU, the planetary gear PR and the planetary gear unit PU can be configured closely together, as compared to the case wherein for example two clutches C2 and C3 are configured in between the planetary gear PR and planetary gear unit PU, and the transmitting member 230 for transmitting reduced rotation can be relatively shortened. By doing so, the automatic transmission can be made more compact and more lightweight. Further, because the inertia (force of inertia) can be reduced, the controllability of the automatic transmission can be increased, and the occurrence of speed change shock can be reduced. Further, compared to the case wherein three clutches C1, C2, C3 are configured on one side of the planetary gear unit PU, the oil lines (for example, 2a, 2b, 91, 93, 94) that supply the oil pressure servos 11, 12, and 13 of these clutches C1, C2, C3 can be constructed easily, and the manufacturing process can be simplified and the costs brought down.

Further, since the oil pressure servos 12, 13 are provided on the input shaft 2, one set of seal rings 81 and 82 seal the case 3 and supply oil to the oil lines 2a and 2b provided within input shaft 2, and therefore oil can be supplied to the oil chamber of oil pressure servos 12, 13 without providing the seal rings between, for example, the input shaft 2 and the oil pressure servos 12, 13. Further, the oil pressure servo 11 can supply oil from the boss unit 3b extended from the case 3, without passing through other parts for example, and therefore can supply oil by providing one set of seal rings 84. Therefore, oil can be supplied simply by providing one set of seal rings 81 and 82, 84 each for the oil pressure servos 11, 12, and 13, and sliding resistance from the seal rings can be minimized, and therefore the efficiency of the automatic transmission can be improved.

Further, since the clutch C2 is a clutch that engages while at first speed reverse, when this clutch 2 is engaged at first speed reverse, the hub unit 224 that connects this clutch C2 and the sun gear S2 rotates at the same rotation as the input shaft 2, by engaging this clutch C2, while the transmitting member 230 rotates in the opposite direction, and there may be cases wherein the rotation difference of the transmitting member 230 and the hub unit 224 becomes great, but since this clutch C2 is located on the opposite side of the planetary gear PR, via the planetary gear unit PU, the transmitting member 230 and the hub hunt 224 can be configured apart from one another. Compared to the case wherein, for example, those parts come in contact due to a multiple axis construction, the decreased efficiency of the automatic transmission caused by the friction produced by the relative rotation between those parts can be prevented.

Further, in the event that the clutch C1 is placed between the ring gear R1 and the sun gear S3 for example, the reduced rotation must be engaged and disengaged, and becomes relatively large, but by placing between the input shaft 2 and the sun gear S1, the engaging and disengaging of the rotation of the input shaft 2 from this clutch C1 causes the reduced rotation output from the ring gear R1 of the planetary gear PR to be engaged and disengaged, and the clutch C1 can be made more compact, and therefore the automatic transmission can be made more compact.

Further, the automatic transmission device 1₁₉ according to the present embodiment is a transmission device that is directly coupled at fifth speed forward. Therefore, at first speed forward and fourth speed forward, the gear ratio can be specified in a detailed manner, and particularly when mounted on a vehicle, in the event that the vehicle is running at a high speed, the engine can be utilized with better revolutions, and this contributes to increased fuel economy of the vehicle while running at a low to medium speed.

Now, the linking member (in particular the transmitting member) for linking the planetary gear PR and the planetary gear unit PU requires rigidity to withstand the reduced speed torque that is input. For example, in the case of configuring a clutch that engages at a slow to medium speed or a clutch that engages and disengages reduced rotations on the inner circumference side of the linking member, the clutches must have a large capacity, therefore an appropriate diameter to correspond with this capacity becomes necessary. Therefore, in the event that the linking member is the type that passes on the outer circumference side of this type of clutch, even a larger diameter than the necessary diameter measurement of those clutches becomes necessary, and the diameter measurement of the linking member is enlarged more than necessary, and the automatic transmission as a whole becomes greater in the direction of the diameter. Therefore an object of the present embodiment is to reduce the enlargement of the diameter measurement, and provide a compact automatic transmission.

According to the present embodiment, all clutches can be configured without enlarging the diameter measurement of the linking member, by configuring a clutch C3 with a small capacity on the linking member, particularly on the inner circumference side of the transmitting member 230.

### <Twentieth Embodiment>

Below, the twentieth embodiment, which is a partial modification of the eighteenth embodiment will be described, with reference to Fig. 36 through Fig. 38. Fig. 36 is a schematic cross-sectional diagram illustrating the automatic transmission device of an automatic transmission relating to the twentieth embodiment, Fig. 37 is an operational table of an automatic transmission relating to the twentieth embodiment, and Fig. 38 is a speed line diagram of an automatic transmission relating to the twentieth embodiment. Now, components of the twentieth embodiment which are the same as those of the eighteenth embodiment will be denoted with the same reference numerals, and description thereof omitted, except for partial modifications.

As Fig. 36 illustrates, the automatic transmission device 1₂₀ of the automatic transmission relating to the twentieth embodiment comprises a brake B3 instead of a clutch C1, and enables the carrier CR1 of the planetary gear PR to be fixed by the brake B3, and further, changes the construction of the oil line of the oil pressure servo 12 of the planetary gear PR, compared to that of the automatic transmission device 1₁₈ of the automatic transmission of the eighteenth embodiment (see Fig. 30).

Within this automatic transmission device 1₂₀, the brake B3 is configured on the planetary gear PR, on the opposite (left side on the diagram) from the planetary gear unit PU. This brake B3 comprises an oil pressure servo 16, a friction plate 76, and a hub unit 233.

The hub unit 233 of this brake B3 is connected to the side plate of one side of the carrier CR1, and this carrier CR1 is supported by the input shaft 2 or the boss unit 3a so as to be capable of rotating. Further, the sun gear S1 is connected to the input shaft 2. Also, this ring gear R1 is connected to the transmitting member 230, and is connected to the sun gear S3 via this transmitting member 230.

The oil chamber of this oil pressure servo 12 is linked to an oil line 2a which is formed on the input shaft 2, and this oil line 2a is provided along one edge of the case, and is connected to the oil line 91 of the boss unit 3a which is provided on the input shaft 2 in a sleeve form, and this oil line 91 is linked to an oil pressure control unit not illustrated. Therefore, regarding the above-mentioned oil pressure servo 11, simply by providing one set of seal rings 81 to seal between the input shaft 2 and the boss unit 3a of the case 3, an oil line is constructed from the oil pressure control device not illustrated to the oil chamber of the oil pressure servo 12.

Continuing, based on the above-mentioned construction, the operations of an automatic transmission device 1₂₀ will be described, with reference to Fig. 36, Fig. 37, and Fig. 38 below. Now, as with the above-mentioned first embodiment, the vertical axis of the speed line diagram illustrated in Fig. 38 indicates the revolutions of each rotation component, and the horizontal axis indicates the corresponding gear ratio of these rotation components. Further, regarding the planetary gear unit PU section of this speed line diagram, the vertical axis to the farthest horizontal edge (the right side of Fig. 38) corresponds to sun gear S3, and hereafter moving to the left direction within the diagram, the vertical axis corresponds to the ring gear R2, the carrier CR2, and the sun gear S2. Further, regarding the planetary gear PR section of this speed line diagram, the vertical axis to the farthest horizontal edge (the right side of Fig. 38) corresponds to sun gear S1, and hereafter moving to the left direction within the diagram, the vertical axis corresponds to the ring gear R1 and the carrier CR1. Further, the width between these vertical axes are proportional to the inverse of the number of teeth of each of the sun gears S1, S2, S3, and to the inverse of the number of teeth of each of the ring gears R1, R3. Also, the dotted line in the horizontal direction in the diagram illustrate that the rotation is transmitted from the transmitting member 230.

As Fig. 36 illustrates, by retaining the brake B3, the above-mentioned carrier CR1 is fixed as to the case 3. Further, the rotation of the input shaft 2 is input to the sun gear S1, and the above-mentioned ring gear R1 rotates at reduced rotations based on the rotation of input shaft 2 which is input to this sun gear S1, because this carrier CR1 is fixed. In other words, by engaging the brake B3, the reduced rotation of the ring gear R1 is input to the sun gear S3 via the transmitting member 230.

By doing so, as Fig. 37 and Fig. 38 illustrate, regarding the planetary gear PR, at first speed forward, second speed forward, third speed forward, and fourth speed forward, the rotation of the input shaft 2 is input to the sun gear S1 by retaining the brake B3, the carrier CR1 is fixed, and the reduced rotation is output to the ring gear R3 by the rotation of the sun gear S1 wherein the rotation of the input shaft 2 is input, and the reduced rotation is input to the sun gear S3 via the transmitting member 230. In this case, the ring gear R1 and the sun gear S3 are rotating at reduced speed, therefore the above-mentioned transmitting member 230 performs a relatively large torque transmission. On the other hand, at fifth speed forward, forward speed level, and first speed reverse, the rotation of the sun gear S3 is input to the ring gear R1 via the transmitting member 230, and further, because the brake B3 is released, as Fig. 38 illustrates, the carrier CR1 rotates based on each the rotation within the speed level of this ring gear R1 and the sun gear S1 of the rotation of the input shaft 2.

Now, the operations other than those of the above-mentioned planetary gear are similar to those of the above-described eighteenth embodiment, and accordingly description thereof will be omitted.

As described above, according to the automatic transmission device 1₂₀ relating to the present invention, due to the planetary gear PR and the clutch C3 being configured on one side in the axial direction of the planetary gear unit PU, and the clutch C2 being configured on the other side in the axial direction of the planetary gear unit PU, the planetary gear PR and the planetary gear unit PU can be configured closely together, compared to the case wherein for example two clutches C2 and C3 are configured in between the planetary gear PR and planetary gear unit PU, and the transmitting member 230 for transmitting reduced rotation can be relatively shortened. By doing so, the automatic transmission can be made more compact and more lightweight. Further, because the inertia (force of inertia) can be reduced, the controllability of the automatic transmission can be increased, and the occurrence of speed change shock can be reduced.

Further, since the oil pressure servos 11 and 12 are provided on the input shaft 2, one set of seal rings 81 and 82 seal the case 3 and supply oil to the oil lines 2a and 2b provided within input shaft 2, and therefore oil can be supplied to the oil chamber of oil pressure servos 12, 13 without providing seal rings between, for example, the input shaft 2 and the oil pressure servos 12, 13. Therefore, oil can be supplied simply by providing one set of seal rings 81 and 82 each for the oil pressure servos 12, 13, and sliding resistance from the seal rings can be minimized, and therefore the efficiency of the automatic transmission can be improved.

Further, since the clutch C2 is a clutch that engages while at first speed reverse, when this clutch 2 is engaged at first speed reverse, the hub unit 224 that connects this clutch C2 and the sun gear S2 rotates at the same rotation as the input shaft 2, by engaging this clutch C2, while the transmitting member 230 rotates in the opposite direction, and there may be cases wherein the rotation difference of the transmitting member 230 and the hub unit 224 becomes great, but because this clutch C2 is located on the opposite side of the planetary gear PR, via the planetary gear unit PU, the transmitting member 230 and the hub hunt 224 can be configured apart from one another. Compared to the case wherein, for example, those parts come in contact due to a multiple axis construction, the decreased efficiency of the automatic transmission caused by the friction produced by the relative rotation between those parts can be prevented.

Further, since the reduced rotation output to the planetary gear unit PU from the planetary gear PR is made to be engaged and disengaged by the brake B3, the number of parts (for example drum-shaped members and so forth) can be reduced as compared to the case wherein, for example, a clutch C1 is provided. Further, the brake B3 can configure an oil line directly from the case 3, and therefore the configuration of the oil line can be simplified as compared to the case wherein, for example, a clutch C1 is provided.

Further, the automatic transmission device 1₂₀ according to the present embodiment is a transmission device that is directly coupled at fifth speed forward. Therefore, at first speed forward and fourth speed forward, the gear ratio can be specified in a detailed manner, and particularly when mounted on a vehicle, in the event that the vehicle is running at a high speed, the engine can be utilized with better revolutions, and this contributes to increased fuel economy of the vehicle while running at a low to medium speed.

Now, the linking member (in particular the transmitting member) for linking the planetary gear PR and the planetary gear unit PU requires rigidity to withstand the reduced speed torque that is input. For example, in the case of configuring a clutch that engages at a slow to medium speed or a clutch that engages and disengages reduced rotations on the inner circumference side of the linking member, the clutches must have a large capacity, therefore an appropriate diameter to correspond with this capacity becomes necessary. Therefore, in the event that the linking member is the type that passes on the outer circumference side of this type of clutch, even a larger diameter than the necessary diameter measurement of those clutches becomes necessary, and the diameter measurement of the linking member is enlarged more than necessary, and the automatic transmission as a whole becomes greater in the direction of the diameter. Therefore an object of the present embodiment is to reduce the enlargement of the diameter measurement, and provide a compact automatic transmission.

According to the present embodiment, all clutches can be configured without enlarging the diameter measurement of the linking member, by configuring a clutch C3 with a small capacity on the linking member, particularly on the inner circumference side of the transmitting member 230.

### <Twenty-first Embodiment>

Below, the twenty-first embodiment, which is a partial modification of the eighteenth embodiment will be described, with reference to Fig. 39. Fig. 39 is a schematic cross-sectional diagram illustrating the automatic transmission device of an automatic transmission relating to the twenty-first embodiment. Now, components of the twenty-first embodiment which are the same as those of the eighteenth embodiment will be denoted with the same reference numerals, and description thereof omitted, except for partial modifications.

As Fig. 39 illustrates, the automatic transmission device 1₂₁ of the automatic transmission relating to the twenty-first embodiment is a modification of the configuration of the clutch C1 and the planetary gear PR, in other words, the planetary gear PR and the clutch C1 are configured on the right side of the diagram of the planetary gear unit PU, and the counter gear 5 is configured in between this planetary gear PR and the planetary gear unit PU, compared to that of the automatic transmission device 1₁₈ of the automatic transmission of the eighteenth embodiment (see Fig. 30).

Within the automatic transmission device 1₂₁, on the inner circumference side of the input shaft 2 is configured a multi-disc clutch C1 comprising an oil pressure servo 11, a friction plate 71, a drum-shaped member 221 that forms a clutch drum, a hub unit 222 connecting to a sun gear S3, and on the outer circumference side is comprised a multi-disc clutch C2 comprising an oil pressure servo 12, a friction plate 72, a drum-shaped member 223 that forms a clutch drum, a hub unit 224. Further, on the outer circumference side of the hub unit 224 is comprised a multi-disc brake B2 comprising an oil pressure servo 15 and a friction plate 75.

The above-mentioned input shaft 2 is supported by the above-mentioned drum-shaped member 221 so as to be capable of rotating, and on the front edge of the inner circumference side of this drum-shaped member 221 is configured the friction plate 71 of the clutch C1 which is capable of engaging by the oil pressure servo 11 for the clutch C, splined, and is connected so that the inner circumference side of the friction plate 71 of this clutch C1 is splined to the hub unit 222.

Further, the sun gear S1 is fixed and supported by the above-mentioned boss unit 3a, and the carrier CR1 is connected to the input shaft 2 via the side plate. The ring gear 1 is supported by the boss unit 3a so as to be capable of rotating, and also is connected to the above-mentioned drum-shaped member 221. Further, the above-mentioned hub unit 222 is connected to the transmitting member 230, and this transmitting member 230 is connected to the above-mentioned sun gear S3.

Now, the oil chamber of the oil pressure servo 11 is linked to the oil line 2a formed on the above-mentioned input shaft 2, and this oil line 2a is linked to the oil line 91 of the boss unit 3a provided on the input shaft 2 in a sleeve form, and this oil line 91 is linked to the oil pressure control device not illustrated. This oil pressure servo 11 comprises one set of seal rings 81 that seal between the boss unit 3b of the case 3 and the input shaft 2, and one set of seal rings 85 that seal between the input shaft 2 and the drum-shaped member 221, in other words, uses two sets of seal rings and constructs an oil line from the oil pressure control device not illustrated to the oil chamber of the oil pressure servo 11.

On the other hand, on the other side of the input shaft 2 (left in diagram) is configured a multi-disc clutch C that comprises an oil pressure servo 13, a friction plate 73, a drum-shaped member 225 that forms a clutch drum, and a hub unit 226. The friction plate 73 is splined with the front edge of the inner circumference side of the drum-shaped member 225 of this clutch C3, and this friction plate 73 is splined with the front edge of the outer circumference side of the hub unit 226, and this hub unit 226 is connected to the side plate of the carrier CR2.

The oil chamber of this oil pressure servo 13 is connected to an oil line 2b which is formed on the above-mentioned input shaft 2, and this oil line 2b is provided along the edge of the case 3 that is the opposite side of that of the above-mentioned boss unit 3a, and is connected to the oil line 93 of the boss unit 3b which is provided on the input shaft 2 in a sleeve form. Therefore, an oil line from the oil pressure control unit, not illustrated, to the oil chamber of the oil pressure servo 13 is constructed on the above-mentioned oil pressure servo 13, simply by providing one set of seal rings 82 to seal between the boss unit 3a of the case 3 and the drum-shaped member 225.

On the other hand, on the outer circumference side of the planetary gear unit PU is configured a multi-disc brake B1 comprising an oil pressure servo 14, a friction plate 74, and a hub unit 228. The side plate of the carrier CR2 of the above-mentioned planetary gear unit PU is connected to the hub unit 228 that is splined with the friction plate 74 of the above-mentioned brake B1, and further, the hub unit 228 is connected to the inner race of the one-way clutch F1. The sun gear S3 is meshed with the short pinion PS of this carrier CR2. Then, the long pinion PL of this carrier CR2 meshes with the above-mentioned sun gear S2 and the ring gear 2, and to one edge of this ring gear R2 is connected the linking member 227, and this ring gear R2 is linked to the counter gear 5 via this linking member 227.

The operations of the automatic transmission device 1₂₁, based on the above-mentioned construction are as follows. Within the planetary gear PR, the carrier CR1 and the sun gear S1 have switched positions, in other words, the sun gear S1 is fixed, and the rotation of the input shaft 2 is input to the carrier CR1, but the other parts are the same as those of the eighteenth embodiment (see Fig. 31 and Fig. 32), and according description will be omitted.

As described above, according to the automatic transmission device 1₂₁ relating to the present invention, due to the planetary gear PR and the clutch C2 being configured on one side in the axial direction of the planetary gear unit PU, and the clutch C3 being configured on the other side in the axial direction of the planetary gear unit PU, the planetary gear PR and the planetary gear unit PU can be configured closely together, compared to the case wherein for example two clutches C2 and C3 are configured in between the planetary gear PR and planetary gear unit PU, and the transmitting member 230 for transmitting reduced rotation can be relatively shortened. By doing so, the automatic transmission can be made more compact and more lightweight. Further, because the inertia (force of inertia) can be reduced, the controllability of the automatic transmission can be increased, and the occurrence of speed change shock can be reduced. Further, compared to the case wherein three clutches C1, C2, C3 are configured on one side of the planetary gear unit PU, the oil lines (for example, 2a, 2b, 91, 92, 93) that supply the oil pressure servos 11, 12, and 13 of these clutches C1, C2, C3 can be constructed easily, and the manufacturing process can be simplified and the costs brought down.

Further, since the counter gear 5 is configured in the axial direction between the planetary gear unit PU and the planetary gear PR, the counter gear 5 can be configured in approximately the center in the axial direction of the automatic transmission. For example, when the automatic transmission is mounted on the vehicle, enlarging towards one direction of the axis (particularly in the rear direction when the input side from the drive source is the front direction) can be prevented because the counter gear 5 is mounted to match the drive wheel transmission device. Because of this, particularly in the case of an FF vehicle, the interference toward the front wheels is reduced, and the mountability on a vehicle can be improved, such as the steering angle being greatly increased, for example.

Further, the automatic transmission device 1₂₁ according to the present embodiment is a transmission device that is directly coupled at fifth speed forward. Therefore, at first speed forward and fourth speed forward, the gear ratio can be specified in a detailed manner, and particularly when mounted on a vehicle, in the event that the vehicle is running at a high speed, the engine can be utilized with better revolutions, and this contributes to increased fuel economy of the vehicle while running at a low to medium speed.

### <Twenty-second Embodiment>

Below, the twenty-second embodiment, which is a partial modification of the twenty-first embodiment will be described, with reference to Fig. 40. Fig. 40 is a schematic cross-sectional diagram illustrating the automatic transmission device of an automatic transmission relating to the twenty-second embodiment. Now, components of the twenty-second embodiment which are the same as those of the twenty-first embodiment will be denoted with the same reference numerals, and description thereof omitted, except for partial modifications.

As Fig. 40 illustrates, the automatic transmission device 1₂₂ of the automatic transmission relating to the twenty-second embodiment is a modification of the configuration of the planetary gear PR and the clutch C2, and further, comprised a brake B3 instead of a clutch C1, and enables the carrier CR1 of the planetary gear PR to be fixed by the brake B3, compared to that of the automatic transmission device 1₂₁ of the automatic transmission of the twenty-first embodiment (see Fig. 39).

Within this automatic transmission device 1₂₂, the brake B3 is configured on the opposite side (the right side of the diagram) of the planetary gear unit PU of the planetary gear PR. This brake B3 comprises an oil pressure servo 16, a friction plate 76, and a hub unit 233, and this hub unit 233 is connected to the sun gear S1 in the form of being supported by the boss unit 3a so as to be capable of rotating. Further, the clutch C2 comprising an oil pressure servo 12, a friction plate 72, a drum-shaped member 223, and a hub unit 224 is configured on the outer circumference side of the hub unit 233 of this brake B3. The drum-shaped member 223 of this clutch C2 is connected to one side plate of the carrier CR1, and the other side plate of this carrier CR1 is connected to the input shaft 2. Also, the ring gear R1 is connected to the transmitting member 230, and is connected to the sun gear S3 via this transmitting member 230.

Now, the oil chamber of the oil pressure servo 12 is linked to the oil line 91 of the boss unit 3a provided on the input shaft 2 in a sleeve form, via an oil hole (not illustrated) formed in the hub unit 233, and this oil line 91 is linked to the oil pressure control device not illustrated. This oil pressure servo 11 comprises one set of seal rings 80 that seal between the boss unit 3a of the case 3 and the hub unit 233, and one set of seal rings 86 that seal between the hub unit 233 and the drum-shaped member 223, in other words, uses two sets of seal rings and constructs an oil line from the oil pressure control device not illustrated to the oil chamber of the oil pressure servo 12.

The operations of the automatic transmission device 1₂₂, based on the above-mentioned construction are as follows. Within the planetary gear PR, the carrier CR1 and the sun gear S1 have switched positions, in other words, the sun gear S1 is fixed by the brake B3, and the rotation of the input shaft 2 is input to the carrier CR1, but the other components are the same as those of the twentieth embodiment (see Fig. 37 and Fig. 38), and according description will be omitted.

As described above, according to the automatic transmission device 1₂₂ relating to the present invention, due to the planetary gear PR and the clutch C2 being configured on one side in the axial direction of the planetary gear unit PU, and the clutch C3 being configured on the other side in the axial direction of the planetary gear unit PU, the planetary gear PR and the planetary gear unit PU can be configured closely together, as compared with the case wherein for example two clutches C2 and C3 are configured in between the planetary gear PR and planetary gear unit PU, and the transmitting member 230 for transmitting reduced rotation can be relatively shortened. By doing so, the automatic transmission can be made more compact and more lightweight. Further, because the inertia (force of inertia) can be reduced, the controllability of the automatic transmission can be increased, and the occurrence of speed change shock can be reduced.

Further, since the counter gear 5 is configured in the axial direction between the planetary gear unit PU and the planetary gear PR, the counter gear 5 can be configured in approximately the center in the axial direction of the automatic transmission. For example, when the automatic transmission is mounted on the vehicle, enlarging towards one direction of the axis (particularly in the rear direction when the input side from the drive source is the front direction) can be prevented because the counter gear 5 is mounted to match the drive wheel transmission device. Because of this, particularly in the case of an FF vehicle, the interference toward the front wheels is reduced, and the mountability on a vehicle can be improved, such as the steering angle being greatly increased, for example.

Further, since the reduced rotation output to the planetary gear unit PU from the planetary gear PR is made to be engaged and disengaged by the brake B3, the number of parts (for example drum-shaped members and so forth) can be reduced as compared to the case wherein, for example, a clutch C1 is provided. Further, the brake B3 can configure an oil line directly from the case 3, and therefore the configuration of the oil line can be simplified as compared to the case wherein, for example, a clutch C1 is provided.

Further, the automatic transmission device 1₂₂ according to the present embodiment is a transmission device that is directly coupled at fifth speed forward. Therefore, at first speed forward and fourth speed forward, the gear ratio can be specified in a detailed manner, and particularly when mounted on a vehicle, in the event that the vehicle is running at a high speed, the engine can be utilized with better revolutions, and this contributes to increased fuel economy of the vehicle while running at a low to medium speed.

Now, in the event that a clutch is configured in between the planetary gear PR and the planetary gear unit PU for example, the length of the linking member (particularly the transmitting member) that links the planetary gear PR and the planetary gear unit PU becomes longer in the axial direction, and since this linking member is for transmitting the reduced rotation, the thickness of the member must be increased so as to withstand this, and therefore the weight also increases. Therefore an object of the present invention is to provide an automatic transmission that can shorten the distance between the speed reduction planetary gear and the planetary gear unit, and reduce the increase in weight.

With the present embodiment, in particular, the clutch C2 is disposed on the opposite side in the axial direction of the planetary gear unit PU from the planetary gear PR, and therefore, providing a clutch between the planetary gear PR and the planetary gear unit PU is not necessary, and the length of the linking member, particularly the transmitting member 230 can be made that much shorter. Therefore, an increase in weight of the automatic transmission as a whole can be prevented.

### <Twenty-third Embodiment>

Below, the twenty-third embodiment, which is a partial modification of the eighteenth embodiment will be described, with reference to Fig. 41. Fig. 41 is a schematic cross-sectional diagram illustrating the automatic transmission device of an automatic transmission relating to the twenty-third embodiment. Now, components of the twenty-third embodiment which are the same as those of the twenty-third embodiment will be denoted with the same reference numerals, and description thereof omitted, except for partial modifications.

As Fig. 41 illustrates, the automatic transmission device 1₂₃ of the automatic transmission relating to the twenty-third embodiment is a modification of the configuration of the clutch C1 and the planetary gear PR (in other words, the planetary gear PR and the clutch C1 are configured to the right side of the diagram of the planetary gear unit PU, and the counter gear 5 is configured in between this planetary gear PR and the planetary gear unit PU), and further, the clutch C2 and the brake B2 change places with the clutch C3, compared to that of the automatic transmission device 1₁₈ of the automatic transmission of the eighteenth embodiment (see Fig. 30).

Within the automatic transmission device 1₂₃, on the inner circumference side of the input shaft 2 is configured a multi-disc clutch C3 comprising an oil pressure servo 13, a friction plate 73, a drum-shaped member 225 that forms a clutch drum, a hub unit 226 connecting to a sun gear S2, and on the outer circumference side is comprised a multi-disc clutch C3 comprising an oil pressure servo 11, a friction plate 71, a drum-shaped member 221 that forms a clutch drum, and a hub unit 224.

Now, the oil chamber of the oil pressure servo 13 is linked to the oil line 2a formed on the above-mentioned input shaft 2, and this oil line 2a is extended from one edge of the case 3, and is linked to the oil line 91 of the boss unit 3a provided on the input shaft 2 in a sleeve form, and this oil line 91 is linked to the oil pressure control device not illustrated. In other words, since the above-mentioned oil pressure servo 13 is configured on the input shaft 2, simply providing one set of seal rings 81 that seal between the boss unit 3a of the case 3 and the input shaft 2 configures an oil line from the oil pressure control device not illustrated to the oil chamber of the oil pressure servo 13.

Further, the oil chamber of the above-mentioned oil pressure servo 11 is linked to the oil line 92 of the above-mentioned boss unit 3a, and this oil line 92 is linked to the oil pressure control device not illustrated. In other words, regarding the above-mentioned oil pressure servo 11, simply providing one set of seal rings 80 that seal between the boss unit 3a of the case 3 and the drum-shaped member 221 configures an oil line from the oil pressure control device, not illustrated, to the oil chamber of the oil pressure servo 11.

The above-mentioned input shaft 2 is connected to the drum-shaped member 225 of the clutch C3, and the front edge of the inner circumference side of this drum-shaped member 225 is configured splined with the friction plate 73 that is made capable of engaging with the oil pressure servo 13 for the clutch C3. The inner circumference side of this friction plate 73 is splined to the hub unit 226, and this hub unit 226 is connected to the sun gear S2.

Further, the above-mentioned input shaft 2 is connected to the above-mentioned drum-shaped member 221 so as to be capable of rotating, and on the inner circumference side of this drum-shaped member 221 is configured the friction plate 71 of the clutch C1 which is capable of engaging by the oil pressure servo 11 for the clutch C1, splined, and the inner circumference side of the friction plate 71 of this clutch C1 is connected by splining to the hub unit 222 that is connected to the ring gear R1. This ring gear R1 is supported by the boss unit 3a so as to be capable of rotating, via this hub unit 222. Further, the sun gear S1 is connected to the above-mentioned input shaft 2, and the carrier CR1 is fixed and supported by the boss unit 3a via the side plate. Also, the above-mentioned drum-shaped member 221 is connected the transmitting member 230, and this transmitting member 230 is connected to the above-mentioned sun gear S3.

On the other hand, on the boss unit 3b of the case 3 that is provided on the input shaft 2 in a sleeve form, and is extended from the other side opposite from the above-mentioned boss unit 3a, is comprised a multi-disc clutch C1 comprising an oil pressure servo 12, a friction plate 72, a drum-shaped member 223 that forms a clutch drum, and a hub unit 224. The oil chamber of this oil pressure servo 12 is linked to the oil line 93 of the boss unit 3b, and this oil line 93 is linked to the oil pressure control device not illustrated. In other words, the above-mentioned oil pressure servo 12 is constructing an oil line from the oil pressure control device not illustrated to the oil pressure servo 12 by one set of seal rings 84 that seal between the boss unit 3b of the case 3 and the drum-shaped member 223.

Further, on the front edge of the inner circumference side of the drum-shaped member 223 of this clutch C2 is splined a friction plate 72 capable of engaging by the oil pressure servo 12 of the clutch C2, and this friction plate 72 is splined with the front edge of the outer circumference side of the hub unit 224. Further, on the outer circumference side of the clutch C2 is configured a multi-disc brake comprising an oil pressure servo 15 and a friction plate 75, and on the outer circumference side of this hub unit 224 is splined a friction plate 75 that can be retained by the oil pressure servo 15 for the brake B2, and also, this hub unit 224 is connected to the sun gear S2.

On the other hand, on the outer circumference side of the planetary gear unit PU is configured a multi-disc brake B1 comprising an oil pressure servo 14, a friction plate 74, and a hub unit 228. The side plate of the carrier CR2 of the above-mentioned planetary gear unit PU is connected to the hub unit 228 that is splined with the friction plate 74 of the above-mentioned brake B1, and further, the hub unit 228 is connected to the inner race of the one-way clutch F1. The sun gear S3 is meshed with the short pinion PS of this carrier CR2. Then, the long pinion PL of this carrier CR2 meshes with the above-mentioned sun gear S2 and the ring gear R2, and to one edge of this ring gear R2 is connected the linking member 227, and this ring gear R2 is linked to the counter gear 5 via this linking member 227.

The operations of the automatic transmission device 1₂₃, based on the above-mentioned construction, are similar to that of the eighteenth embodiment (see Fig. 31 and Fig. 32), and according description will be omitted.

As described above, according to the automatic transmission device 1₂₃ relating to the present invention, due to the planetary gear PR and the clutch C3 being configured on one side in the axial direction of the planetary gear unit PU, and the clutch C2 being configured on the other side in the axial direction of the planetary gear unit PU, the planetary gear PR and the planetary gear unit PU can be configured closely together, compared to the case wherein for example two clutches C2 and C3 are configured in between the planetary gear PR and planetary gear unit PU, and the transmitting member 230 for transmitting reduced rotation can be relatively shortened. By doing so, the automatic transmission can be made more compact and more lightweight. Further, because the inertia (force of inertia) can be reduced, the controllability of the automatic transmission can be increased, and the occurrence of speed change shock can be reduced. Further, compared to the case wherein three clutches C1, C2, C3 are configured on one side of the planetary gear unit PU, the oil lines (for example, 2a, 91, 92, 93) that supply the oil pressure servos 11, 12, and 13 of these clutches C1, C2, C3 can be constructed easily, and the manufacturing process can be simplified and the costs brought down.

Further, since the oil pressure servo 13 is provided on the input shaft 2, one set of seal rings 81 seal the case 3 and supply oil to the oil lines 2a provided within input shaft 2, and therefore oil can be supplied to the oil chamber of oil pressure servo 13 without providing the seal rings between, for example, the input shaft 2 and the oil pressure servo 12. Further, the oil pressure servos 11 and 12 can supply oil from the boss units 3a, 3b extended from the case 3, without passing through other parts for example, and therefore can supply oil by providing one set of seal rings 80, 84. Therefore, oil can be supplied simply by providing one set of seal rings 81, 80, 84 each for the oil pressure servos 11, 12, and 13, and sliding resistance from the seal rings can be minimized, and therefore the efficiency of the automatic transmission can be improved.

Further, because the clutch C3 is configured on the inner circumference side of the clutch C1, the clutch C1, which must transmit a relatively large torque in order to transmit the reduced rotation, can be configured on the outer circumference side, and this clutch C1 and the oil pressure servo 11 thereof can have an increased diameter. Particularly, the pressure area of the oil chamber of the oil pressure servo 11 can be enlarged, and the capacity capable of torque transmission of this clutch C1 can be increased. By configuring the clutch C3 which can have a smaller capacity for torque transmission compared to the clutch C1, the automatic transmission can be made more compact.

Further, because clutch C2 is a clutch that engages while at first speed reverse, when this clutch 2 is engaged at first speed reverse, the transmitting member 230 rotates in the opposite direction while the hub unit 224 that connects this clutch C2 and the sun gear S2 rotate at the same rotation as the input shaft 2 by engaging this clutch C2, which may lead to cases wherein the rotation difference of the transmitting member 230 and the hub unit 224 becomes great, but because this clutch C2 is located on the opposite side of the planetary gear PR, via the planetary gear unit PU, the transmitting member 230 and the hub hunt 224 can be configured apart from one another. Compared to the case wherein, for example, those parts come in contact due to a multiple axis construction, the decreased efficiency of the automatic transmission caused by the friction produced by the relative rotation between those parts can be prevented.

Further, because the counter gear 5 is configured in the axial direction between the planetary gear unit PU and the planetary gear PR, the counter gear 5 can be configured in approximately the center in the axial direction of the automatic transmission. For example, when the automatic transmission is mounted on the vehicle, enlarging towards one direction of the axis (particularly in the rear direction when the input side from the drive source is the front direction) can be prevented because the counter gear 5 is mounted to match the drive wheel transmission device. Because of this, particularly in the case of an FF vehicle, the interference toward the front wheels is reduced, and the mountability on a vehicle can be improved, such as the steering angle being greatly increased, for example.

Further, the automatic transmission device 1₂₃ according to the present embodiment is a transmission device that is directly coupled at fifth speed forward. Therefore, at first speed forward and fourth speed forward, the gear ratio can be specified in a detailed manner, and particularly when mounted on a vehicle, in the event that the vehicle is running at a high speed, the engine can be utilized with better revolutions, and this contributes to increased fuel economy of the vehicle while running at a low to medium speed.

Now, the linking member (in particular the transmitting member) for linking the planetary gear PR and the planetary gear unit PU requires rigidity to withstand the reduced speed torque that is input. For example, in the case of configuring a clutch that engages at a slow to medium speed or a clutch that engages and disengages reduced rotations on the inner circumference side of the linking member, the clutches must have a large capacity, therefore an appropriate diameter to correspond with this capacity becomes necessary. Therefore, in the event that the linking member is the type that passes on the outer circumference side of this type of clutch, even a larger diameter than the necessary diameter measurement of those clutches becomes necessary, and the diameter measurement of the linking member is enlarged more than necessary, and the automatic transmission as a whole becomes greater in the direction of the diameter. Therefore an object of the present embodiment is to reduce the enlargement of the diameter measurement, and provide a compact automatic transmission.

According to the present embodiment, all clutches can be configured without enlarging the diameter measurement of the linking member, by configuring a clutch C3 with a small capacity on the linking member, particularly on the inner circumference side of the transmitting member 230.

### <Twenty-fourth Embodiment>

Below, the twenty-fourth embodiment, which is a partial modification of the twenty-third embodiment will be described, with reference to Fig. 42. Fig. 42 is a schematic cross-sectional diagram illustrating the automatic transmission device of an automatic transmission relating to the forty-second embodiment. Now, components of the twenty-fourth embodiment which are the same as those of the twenty-third embodiment will be denoted with the same reference numerals, and description thereof omitted, except for partial modifications.

As Fig. 42 illustrates, the automatic transmission device 1₂₄ of the automatic transmission relating to the twenty-third embodiment is a modification of the configuration of the clutch C1, compared to that of the automatic transmission device 1₂₃ of the automatic transmission of the eighteenth embodiment (see Fig. 41).

Within the automatic transmission device 1₂₄, the clutch C1 is configured on the planetary gear PR, on the opposite (right side on the diagram) from the planetary gear unit PU. The front edge of the inner circumference side of the drum-shaped member 221 of this clutch C1 is connected to the input shaft 2. On the front edge of the inner circumference side of the drum-shaped member 221 of this clutch C1 is splined with the friction plate 71, and the inner circumference side of this friction plate 71 is splined with the hub unit 222. The hub unit 222 is connected to the sun gear S1 of the planetary gear PR.

Further, the side plate of the carrier CR1 of the planetary gear PR is fixed and supported by the case 3. Also, the ring gear R1 is connected to the transmitting member 230, and this transmitting member 230 is connected to the sun gear S3. Now, the clutch C3 comprising an oil pressure servo 13, a friction plate 73, a drum-shaped member 225, and a hub unit 226 is configured on the inner circumference side of the above-mentioned transmitting member 230, that is to say, is enclosed within this transmitting member 230.

The operations of the automatic transmission device 1₂₄, based on the above-mentioned construction are the same as that of the nineteenth embodiment (see Fig. 34 and Fig. 35), and according description will be omitted.

As described above, according to the automatic transmission device 1₂₄ relating to the present invention, because the planetary gear PR and the clutch C3 is configured on one side in the axial direction of the planetary gear unit PU, and the clutch C2 is configured on the other side in the axial direction of the planetary gear unit PU, the planetary gear PR and the planetary gear unit PU can be configured closely together, compared to the case wherein for example two clutches C2 and C3 are configured in between the planetary gear PR and planetary gear unit PU, and the transmitting member 230 for transmitting reduced rotation can be relatively shortened. By doing so, the automatic transmission can be made more compact and more lightweight. Further, because the inertia (force of inertia) can be reduced, the controllability of the automatic transmission can be increased, and the occurrence of speed change shock can be reduced. Further, compared to the case wherein three clutches C1, C2, C3 are configured on one side of the planetary gear unit PU, the oil lines (for example, 2a, 91, 92, 93) that supply the oil pressure servos 11, 12, and 13 of these clutches C1, C2, C3 can be constructed easily, and the manufacturing process can be simplified and the costs brought down.

Further, because the oil pressure servo 13 is provided on the input shaft 2, one set of seal rings 81 seal the case 3 and supply oil to the oil lines 2a provided within input shaft 2, and therefore oil can be supplied to the oil chamber of oil pressure servo 13 without providing the seal rings between, for example, the input shaft 2 and the oil pressure servo 13. Further, the oil pressure servos 11 and 12 can supply oil from the boss units 3a, 3b extended from the case 3, without passing through other parts for example, and therefore can supply oil by providing one set of seal rings 80, 84. Therefore, oil can be supplied simply by providing one set of seal rings 81, 80, 84 each for the oil pressure servos 11, 12, and 13, and sliding resistance from the seal rings can be minimized, and therefore the efficiency of the automatic transmission can be improved.

Further, since the clutch C2 is a clutch that engages while at first speed reverse, when this clutch 2 is engaged at first speed reverse, the transmitting member 230 rotates in the opposite direction while the hub unit 224 that connects this clutch C2 and the sun gear S2 rotates at the same rotation as the input shaft 2 by engaging this clutch C2. The case may occur wherein the rotation difference of the transmitting member 230 and the hub unit 224 becomes great, but because this clutch C2 is located on the opposite side of the planetary gear PR, via the planetary gear unit PU, the transmitting member 230 and the hub hunt 224 can be configured apart from one another. Compared to the case wherein, for example, those parts come in contact due to a multiple axis construction, the decreased efficiency of the automatic transmission caused by the friction produced by the relative rotation between those parts can be prevented.

Further, because the counter gear 5 is configured in the axial direction between the planetary gear unit PU and the planetary gear PR, the counter gear 5 can be configured in approximately the center in the axial direction of the automatic transmission. For example, when the automatic transmission is mounted on the vehicle, enlarging towards one direction of the axis (particularly in the rear direction when the input side from the drive source is the front direction) can be prevented because the counter gear 5 is mounted to match the drive wheel transmission device. Because of this, particularly in the case of an FF vehicle, the interference toward the front wheels is reduced, and the mountability on a vehicle can be improved, such as the steering angle being greatly increased, for example.

Further, if the clutch C1 is placed between the ring gear R1 and the sun gear S3 for example, the reduced rotation must be engaged and disengaged, and becomes relatively large, but by placing between the input shaft 2 and the sun gear S1, the engaging and disengaging of the rotation of the input shaft 2 from this clutch C1 causes the reduced rotation output from the ring gear R1 of the planetary gear PR to be engaged and disengaged, and the clutch C1 can be made more compact, and therefore the automatic transmission can be made more compact.

Further, the automatic transmission device 1₂₄ according to the present embodiment is a transmission device that is directly coupled at fifth speed forward. Therefore, at first speed forward and fourth speed forward, the gear ratio can be specified in a detailed manner, and particularly when mounted on a vehicle, in the event that the vehicle is running at a high speed, the engine can be utilized with better revolutions, and this contributes to increased fuel economy of the vehicle while running at a low to medium speed.

Now, the linking member (in particular the transmitting member) for linking the planetary gear PR and the planetary gear unit PU requires rigidity to withstand the reduced speed torque that is input. For example, in the case of configuring a clutch that engages at a slow to medium speed or a clutch that engages and disengages reduced rotations on the inner circumference side of the linking member, the clutches must have a large capacity, therefore an appropriate diameter to correspond with this capacity becomes necessary. Therefore, in the event that the linking member is the type that passes on the outer circumference side of this type of clutch, even a larger diameter than the necessary diameter measurement of those clutches becomes necessary, and the diameter measurement of the linking member is enlarged more than necessary, and the automatic transmission as a whole becomes greater in the direction of the diameter. Therefore an object of the present embodiment is to reduce the enlargement of the diameter measurement, and provide a compact automatic transmission.

According to the present embodiment, all clutches can be configured without enlarging the diameter measurement of the linking member, by configuring a clutch C3 with a small capacity on the linking member, particularly on the inner circumference side of the transmitting member 230.

### <Twenty-fifth Embodiment>

Now, the twenty-fifth embodiment, which is a partial modification of the twenty-third embodiment will be described, with reference to Fig. 43. Fig. 43 is a schematic cross-sectional diagram illustrating the automatic transmission device of an automatic transmission relating to the twenty-fifth embodiment. Now, components of the twenty-fifth embodiment which are the same as those of the twenty-third embodiment will be denoted with the same reference numerals, and description thereof omitted, except for partial modifications.

As Fig. 43 illustrates, the automatic transmission device 1₂₅ of the automatic transmission relating to the twenty-third embodiment configures a brake B3 instead of the clutch C3, and makes the carrier CR1 of the planetary gear PR capable of being fixed by the brake B3, as compared to that of the automatic transmission device 1₂₃ of the automatic transmission of the twenty-third embodiment (see Fig. 41).

Within this automatic transmission device 1₂₅, the brake B3 is configured on the opposite side (the right side of the diagram) of the planetary gear unit PU of the planetary gear PR. This brake B3 comprises an oil pressure servo 16, a friction plate 76, and a hub unit 233. The hub unit 233 of this brake B3 is connected to the carrier CR1, and this carrier CR1 is supported by the input shaft 2 so as to be capable of rotating. Further, the sun gear S1 is connected to the input shaft 2. Also, the ring gear R1 is connected to the transmitting member 230, and is connected to the sun gear S3, via this transmitting member 230. Now, the clutch C3, comprising an oil pressure servo 13, a friction plate 73, a drum-shaped member 225, and a hub unit 226 is configured on the inner circumference side of the above-mentioned transmitting member 230, that is to say, is enclosed within this transmitting member 230.

The operations of the automatic transmission device 1₂₅, based on the above-mentioned construction are the same as that of the twentieth embodiment (see Fig. 37 and Fig. 38), and according description will be omitted.

As described above, according to the automatic transmission device 1₂₅ relating to the present invention, since the planetary gear PR and the clutch C3 are configured on one side in the axial direction of the planetary gear unit PU, and the clutch C2 is configured on the other side in the axial direction of the planetary gear unit PU, the planetary gear PR and the planetary gear unit PU can be configured closely together, compared to the case wherein for example two clutches C2 and C3 are configured in between the planetary gear PR and planetary gear unit PU, and the transmitting member 230 for transmitting reduced rotation can be relatively shortened. By doing so, the automatic transmission can be made more compact and more lightweight. Further, because the inertia (force of inertia) can be reduced, the controllability of the automatic transmission can be increased, and the occurrence of speed change shock can be reduced.

Further, since the oil pressure servo 13 is provided on the input shaft 2, one set of seal rings 81 seal the case 3 and supply oil to the oil lines 2a provided within input shaft 2, and therefore oil can be supplied to the oil chamber of oil pressure servo 13 without providing the seal rings between, for example, the input shaft 2 and the oil pressure servo 12. Further, the oil pressure servo 12 can supply oil from the boss unit 3b extended from the case 3, without passing through other parts for example, and therefore can supply oil by providing one set of seal rings 84. Therefore, oil can be supplied simply by providing one set of seal rings 81, 84 each for the oil pressure servos 12, 13, and sliding resistance from the seal rings can be minimized, and therefore the efficiency of the automatic transmission can be improved.

Further, since the clutch C2 is a clutch that engages while at first speed reverse, when this clutch C2 is engaged at first speed reverse, the transmitting member 230 rotates in the opposite direction while the hub unit 224 that connects this clutch C2 and the sun gear S2 rotates at the same rotation as the input shaft 2 by engaging this clutch C2, and a case may occur wherein the rotation difference of the transmitting member 230 and the hub unit 224 becomes great, but because this clutch C2 is located on the opposite side of the planetary gear PR, via the planetary gear unit PU, the transmitting member 230 and the hub hunt 224 can be configured apart from one another. Compared to the case wherein, for example, those parts come in contact due to a multiple axis construction, the decreased efficiency of the automatic transmission caused by the friction produced by the relative rotation between those parts can be prevented.

Further, since the counter gear 5 is configured in the axial direction between the planetary gear unit PU and the planetary gear PR, the counter gear 5 can be configured in approximately the center in the axial direction of the automatic transmission. For example, when the automatic transmission is mounted on the vehicle, enlarging towards one direction of the axis (particularly in the rear direction when the input side from the drive source is the front direction) can be prevented because the counter gear 5 is mounted to match the drive wheel transmission device. Because of this, particularly in the case of an FF vehicle, the interference toward the front wheels is reduced, and the mountability on a vehicle can be improved, such as the steering angle being greatly increased, for example.

Further, since the reduced rotation output to the planetary gear unit PU from the planetary gear PR is made to be engaged and disengaged by the brake B3, the number of parts (for example drum-shaped members and so forth) can be reduced as compared to the case wherein, for example, a clutch C1 is provided. Further, the brake B3 can configure an oil line directly from the case 3, and therefore the configuration of the oil line can be simplified as compared to the case wherein, for example, a clutch C1 is provided.

Further, the automatic transmission device 1₂₅ according to the present embodiment is a transmission device that is directly coupled at fifth speed forward. Therefore, at first speed forward and fourth speed forward, the gear ratio can be specified in a detailed manner, and particularly when mounted on a vehicle, in the event that the vehicle is running at a high speed, the engine can be utilized with better revolutions, and this contributes to increased fuel economy of the vehicle while running at a low to medium speed.

Now, the linking member (in particular the transmitting member) for linking the planetary gear PR and the planetary gear unit PU requires rigidity to withstand the reduced speed torque that is input. For example, in the case of configuring a clutch that engages at a slow to medium speed or a clutch that engages and disengages reduced rotations on the inner circumference side of the linking member, the clutches must have a large capacity, therefore an appropriate diameter to correspond with this capacity becomes necessary. Therefore, in the event that the linking member is the type that passes on the outer circumference side of this type of clutch, even a larger diameter than the necessary diameter measurement of those clutches becomes necessary, and the diameter measurement of the linking member is enlarged more than necessary, and the automatic transmission as a whole becomes greater in the direction of the diameter. Therefore an object of the present embodiment is to reduce the enlargement of the diameter measurement, and provide a compact automatic transmission.

According to the present embodiment, all clutches can be configured without enlarging the diameter measurement of the linking member, by configuring a clutch C3 with a small capacity on the linking member, particularly on the inner circumference side of the transmitting member 230.

Now, the above first through twenty-fifth embodiments relating to the present invention were described as being applicable to supplying a torque converter to an automatic transmission, but should not be limited to this, and any motion-starting device may be used that would transmit the torque (rotation) at start of movement. Further, a case wherein this is mounted on a vehicle with an engine as a drive source has been described, but should not be limited to this, and any drive source may be used as a matter of course, and this may be mounted on a hybrid vehicle. Further, the above-mentioned automatic transmission is favorable for use in a FF vehicle, but should not be limited to this, and can be used in a FR vehicle, a four-wheel drive vehicle, or vehicles with other types of drive systems.

Further, the above first through twenty-fifth embodiments have been described using a double pinion planetary gear for the planetary gear PR used as a reduced rotation output means, but should not be limited to this, and a single pinion planetary gear may also be used.

Further, the above first through twentieth embodiments and the twenty-third through twenty-fifth embodiments were described as inputting the rotation of the input shaft 2 into the sun gear S1 of this planetary gear PR, and by fixing the rotation of the carrier CR1, whereby the ring gear R1 rotates at reduced rotations, however, the rotation of the sun gear S1 may be fixed, with the rotation of the input shaft 2 input to the carrier CR such that the ring gear R1 rotates at reduced rotations.

Further, the first embodiment and the second embodiment have been described with the input side and the output side of the automatic transmission interchanged, but should not be limited to this, and arrangements may be made wherein the input side and the output side are interchanged in an automatic transmission according to the other embodiments as well.

### Industrial Applicability

As described above, the automatic transmission according to the present invention is beneficial mounted on vehicles such as automobiles, trucks, busses, and so forth, and is particularly suitable for use with vehicles which require reduction in size and reduction in weight from mountability to the vehicle, and further require reduction in shock of changing speeds.

## Claims

1. An automatic transmission comprising:
an input shaft (2) that rotates based on output rotation of a drive source;
a planetary gear unit (PU) comprised of first, second, third, and fourth rotation components (S3, S2, CR2, and R3, respectively);
reduced rotation output means (PR) capable of outputting a reduced rotation to said first rotation component (S3) from said input shaft (2) wherein the rotation speed is reduced;
a first clutch (C1) that links said input shaft (2) and said second rotation component (S2) in a manner capable of disengaging;
a second clutch (C2) that links said input shaft (2) and said third rotation component (CR2) in a manner capable of disengaging; and
an output unit that outputs the rotation of said fourth rotation component (R3) to a drive wheel transmission mechanism;
wherein said reduced rotation output means (PR) and said first clutch (C1) are configured on one side in the axial direction of said planetary gear unit (PU); and
said reduced rotation output means (PR) further comprising an input rotation component for inputting rotations of said input shaft (2) at all times, a fixing component for fixing rotations at all times, a speed reduction planetary gear that has a reduced rotation component that rotates at said reduced rotation, and a third clutch (C3) that can link a linking member (30) between said reduced rotation component and said first rotation component (S3) a manner capable of disengaging;
wherein said reduced rotation is transmitted to said first rotation component (S3) by said third clutch (C3) engaging.;
wherein said second clutch (C2) is configured on the other side in the axial direction of said planetary gear unit (PU);
wherein said third cluth (C3) comprises a friction and an oil pressure servo (13), said oil pressure servo (13) being disposed adjoining said speed reduction planetary gear on the opposite side of said planetary gear unit (PU) in the axial direction; and
wherein six forward speed levels and one reverse speed level can be achieved, and in the case of the fifth forward speed level said first clutch and said second clutch are engaged.

2. An automatic transmission comprising:
an input shaft (2) that rotates based on output rotation of a drive source;
a planetary gear unit (PU) comprised of first, second, third, and fourth rotation components (S3, S2, CR2, and R3, respectively);
reduced rotation output means (PR) capable of outputting a reduced rotation to said first rotation component (S3) from said input shaft (2) wherein the rotation speed is reduced;
a first clutch (C1) that links said input shaft (2) and said second rotation component (S2) in a manner capable of disengaging;
a second clutch (C2) that links said input shaft (2) and said third rotation component (CR2) in a manner capable of disengaging; and
an output unit that outputs the rotation of said fourth rotation component (R3) to a drive wheel transmission mechanism;
wherein said reduced rotation output means (PR) and said first clutch (C1) are configured on one side in the axial direction of said planetary gear unit (PU); and;
wherein said second clutch (C2) is configured on the other side in the axial direction of said planetary gear unit (PU);
wherein said third cluth comprises a friction member and an oil pressure servo, said oil pressure servo (13) being disposed adjoining said speed reduction planetary gear on the opposite side of said planetary gear unit (PU) in the axial direction; and
wherein six forward speed levels and one reverse speed level can be achieved, and in the case of the fifth forward speed level said first clutch and said second clutch are engaged.

3. An automatic transmission according to Claim 1 or 2, wherein said linking member is adapted for linking said reduced rotation output means and said planetary gear unit,
wherein said first clutch is configured on the inner circumference side of said linking member.

4. An automatic transmission according to Claim 1, 2 or 3, wherein said first clutch is configured on the inner circumference side of said third clutch.

5. An automatic transmission according to Claim 4, said third clutch comprising a drum unit (25) and a hub unit that link with said friction member, wherein;
said hub unit links with said reduced rotation component;
said drum unit (25) forms said oil pressure servo with a piston sealed in an oil-tight manner, and links with said first rotation component; and
said first clutch is configured on the inner circumference side of said drum unit.

6. An automatic transmission according to Claim 5, wherein the friction member of said third clutch is located on the outer circumference side of said speed reduction planetary gear.

7. An automatic transmission according to Claim 6, wherein an oil pressure servo of a first brake (B1) for retaining said first rotating component of said planetary gear unit to which reduced rotation is input, is configured on the outer circumference of the oil pressure servo of said third clutch (C3).

8. An automatic transmission according to any one of Claims 1 through 7:
wherein a fixing component of said speed reduction planetary gear is fixed and configured on a first boss unit extending from one edge of a side wall of a case;
the oil pressure servo of said third clutch is configured on the outside of said first boss unit;
an oil pressure servo of said second clutch is configured on the outside of a second boss unit that extends from another edge of a side wall of said case;
said first clutch is configured adjoined to said planetary gear and also comprises a friction member and an oil pressure servo for pressurizing said friction member, and a drum unit and hub unit configured integrally with said oil pressure servo;
and said drum unit is linked with said input shaft.

9. An automatic transmission according to Claim 8,
wherein said, linking member (30) is adapted for linking said reduced rotation output means and said planetary gear unit; and
wherein said third clutch is disposed on the inner circumference side of said linking member.

10. An automatic transmission according to Claim 9, wherein said first clutch and said third clutch are configured adjacent in the axial direction, on the inner circumference side of said linking member.

11. An automatic transmission according to Claim 10, wherein the oil pressure servo (13) of the third clutch (C3) is adapted for pressurizing said friction member of the third clutch;
wherein said oil pressure servo (13) is configured on the opposite side in the axial direction of said speed reduction planetary gear as to said friction member;
and wherein said drum unit (25) that configures a cylinder of said oil pressure servo is linked with said input shaft.

12. An automatic transmission according to Claim 11, wherein the oil pressure servo of said third clutch is configured adjoining the oil pressure servo of said first clutch, between the oil pressure servo of said first clutch and the friction material of said third clutch.

13. An automatic transmission according to claim 1 or any one of Claims 3 to 12 as for as directly or indirectly dependant on claim 1, wherein, in a speed line chart illustrating the revolutions of said first, second, third, and fourth rotation components with the vertical axis, and the gear ratio of said first, second, third, and fourth rotation components with the horizontal axis in a corresponding manner;
said first rotation component to which said reduced rotation is input is positioned at the farthest edge in the horizontal direction, with said third rotation component, said fourth rotation component linked to said output member, and said second rotation component, corresponding in that order.

14. An automatic transmission according to Claim 7, wherein said planetary gear unit is a multiple type planetary gear, comprising a first sun gear, a long pinion which meshes with said first sun gear, a short pinion which meshes with said long pinion, a carrier for rotationally supporting said long pinion and said short pinion, a second sun gear meshing with said short pinion, and a ring gear meshing with said long pinion;
wherein said first rotation component is said first sun gear capable of inputting the reduced rotation of said reduced rotation output means, and which is capable of being fixed by the retaining of said first brake (B1);
and wherein said second rotation component is said second sun gear capable of inputting rotations of said input shaft by the engaging of said first clutch;
and wherein said third rotation component is said carrier capable of inputting the rotations of said input shaft by the engaging of said second clutch, and which is capable of being fixed by the retaining of a second brake;
and wherein said fourth rotation component is said ring gear linked to said output member.

15. An automatic transmission according to Claim 7, comprising a pair of said planetary gear units each comprising a first sun gear, a second sun gear linked to said first sun gear, a first carrier meshing with said first sun gear, a second carrier meshing with said second sun gear, a first ring gear linked to said second carrier, and a second ring gear meshing with said second carrier;
wherein said first rotation component is said second ring gear capable of inputting the reduced rotation of said reduced rotation output means, and which is capable of being fixed by the retaining of said first brake;
and wherein said second rotation component is said first sun gear and said second sun gear capable of inputting the rotations of said input shaft by the engaging of said first clutch;
and wherein said third rotation component is said second carrier and said first ring gear capable of inputting the rotations of said input shaft by the engaging of said second clutch, and also capable of being fixed by the retaining of a second brake;
and wherein said fourth rotation component is a first carrier linked to said output member.

16. An automatic transmission according to either Claim 14 or 15, wherein, in the first speed forward, said first clutch is engaged and said second brake is retained;
and wherein, in the second speed forward, said first clutch is engaged and said first brake is retained;
and wherein, in the third speed forward, reduced rotation is input to said first rotation component from said reduced rotation output means, and said first clutch is engaged;
and wherein, in the fourth speed forward, said first clutch and said second clutch are both engaged;
and wherein, in the fifth speed forward, reduced rotation is input to said first rotation component from said reduced rotation output means, and said second clutch is engaged;
and wherein, in the sixth speed forward, said second clutch is engaged and said first brake is retained;
and wherein, in the first speed reverse, reduced rotation is input to said first rotation component from said reduced rotation output means, and said second brake is retained;
whereby six forward speed levels and one reverse speed level can be achieved.

17. An automatic transmission according to Claim 2 or any one of claims 3 to 12 as far as directly or indirectly dependent on claim 2, wherein, in a speed line chart illustrating the revolutions of said first, second, third, and fourth rotation components with the vertical axis, and the gear ratio of said first, second, third, and fourth rotation components with the horizontal axis in a corresponding manner;
said first rotation component to which said reduced rotation is input is positioned at the farthest edge in the horizontal direction, with said fourth rotation component linked to said output member, said third rotation component, and said second rotation component, corresponding in that order.

18. An automatic transmission according to Claim 7, wherein said planetary gear unit is a multiple type planetary gear, comprising a first sun gear, a long pinion which meshes with said first sun gear, a short pinion which meshes with said long pinion, a carrier for rotationally supporting said long pinion and said short pinion, a second sun gear meshing with said short pinion, and a ring gear meshing with said long pinion;
wherein said first rotation component is said second sun gear capable of inputting the reduced rotation of said reduced rotation output means;
and wherein said rotation component is said carrier capable of inputting rotations of said input shaft by the engaging of said first clutch, and which is capable of being fixed by the retaining of said first brake;
and wherein said third rotation component is said first sun gear capable of inputting the rotations of said input shaft by the engaging of said second clutch, and which is capable of being fixed by the retaining of a second brake;
and wherein said fourth rotation component is said ring gear linked to said output member.

19. An automatic transmission according to Claim 18, wherein, in the first speed forward, reduced rotation is input to said first rotation component from said reduced, rotation output means, and said first brake is retained;
and wherein, in the second speed forward, reduced rotation is input to said first rotation component from said reduced rotation output means, and said second brake is retained;
and wherein, in the third speed forward, reduced rotation is input to said first rotation component from said reduced rotation output means, and said second clutch is engaged;
and wherein, in the fourth speed forward, reduced rotation is input to said first rotation component from said reduced rotation output means, and said first clutch is engaged;
and wherein, in the fifth speed forward, said first clutch and said second clutch are both engaged;
and wherein, in the.sixth speed forward, said first clutch is engaged and said second brake is retained;
and wherein, in the first speed reverse, said second clutch is engaged and said first brake is retained;
whereby six forward speed levels and one reverse speed level can be achieved.

20. An automatic transmission according to any one of Claims 1 through 19, wherein said first clutch is configured on the opposite side in the axial direction of said planetary gear unit as to said speed reduction planetary gear.

21. An automatic transmission according to claim 1 or any one of Claims 3 through 16 or claim 20 wherein six forward speed levels and one reverse speed level can be achieved, and in the case of the fourth forward speed level said first clutch (C1) and said second clutch (C2) are engaged, wherein said first clutch is a clutch which engages at a relatively low to medium speed level.

22. An automatic transmission according to claim 2 or any one of Claims 3 to 12 or 17 to 20 as far as directly or indirectly dependent on claim 2, wherein said second clutch is a clutch that engages at the reverse level.

23. An automatic transmission according to any one of Claims 1 through 22, wherein said first clutch comprises a friction plate of which the inner circumferential side is splined to a member linked to said second rotation component, a first drum member encompassing an oil pressure servo and which is splined to the outer circumferential side of said friction plate, a first piston member for pressing said friction plate, and a first oil pressure servo oil pressure chamber formed by sealing between the inner circumferential side of said first piston member and said first drum member so as to be liquid-tight;
and wherein said second clutch comprises a friction plate of which the inner circumferential side is splined to a member linked to said third rotation component, a second drum member encompassing an oil pressure servo and which is splined to the outer circumferential side of said friction plate, and is disposed in the inner circumference side of a member linked to said second rotation component, a second piston member for pressing said friction plate, and a second oil pressure servo oil pressure chamber formed by sealing between the inner circumferential side of said second piston member and said input shaft, and between said outer circumference side and said second drum member, so as to be liquid-tight.

24. An automatic transmission according to any one of Claims 1 through 23, wherein said output member is disposed between said planetary gear unit and said reduced rotation output means in said axial direction.

25. An automatic transmission according to any one of Claims 1 through 24, wherein said output member is disposed between said planetary gear unit and said second clutch in said axial direction.

26. An automatic transmission according to any one of Claims 1 through 25, wherein said reduced rotation output means comprise a speed reduction planetary gear formed of a double pinion planetary gear;
and wherein said speed reduction planetary gear, said planetary gear unit, and said output member, are provided coaxially with said input shaft.

27. An automatic transmission according to any one of Claims 1 through 26, further comprising a differential unit for outputting rotations to driving wheels, and a counter shaft unit for engaging said differential unit, wherein said output member is a counter gear meshing with said counter shaft unit.

## Patentansprüche

1. Automatikgetriebe mit:
einer Eingangswelle (2), die sich basierend auf einer Ausgangsdrehbewegung einer Antriebsquelle dreht;
einer Planetengetriebeeinheit (PU), die aus einer ersten, einer zweiten, einer dritten und einer vierten Drehkomponente (S3, S2, CR2 bzw. R3) besteht;
einer Einrichtung (PR) zum Ausgeben einer untersetzten Drehbewegung, die dazu geeignet ist, eine untersetzte Drehbewegung mit einer verminderten Drehzahl von der Eingangswelle (2) an die erste Drehkomponente (S3) auszugeben;
einer ersten Kupplung (C1), die die Eingangswelle (2) und die zweite Drehkomponente (S2) ausrückbar verbindet;
einer zweiten Kupplung (C2), die die Eingangswelle (2) und die dritte Drehkomponente (CR2) ausrückbar verbindet; und
einer Abtriebseinheit, die die Drehbewegung der vierten Drehkomponente (R3) an einen Antriebsrad-Kraftübertragungsmechanismus ausgibt;
wobei die Einrichtung (PR) zum Ausgeben einer untersetzten Drehbewegung und die erste Kupplung (C1) in der axialen Richtung der Planetengetriebeeinheit (PU) betrachtet auf einer Seite angeordnet sind; und
wobei die Einrichtung (PR) zum Ausgeben einer untersetzten Drehbewegung ferner eine Eingangsdrehkomponente zum permanenten Zuführen von Drehbewegungen der Eingangswelle (2), eine Fixierkomponente zum permanenten Fixieren von Drehbewegungen, ein Untersetzungsplanetengetriebe, das eine sich mit der untersetzten Drehbewegung drehende Komponente aufweist, und eine dritte Kupplung (C3) aufweist, die ein Verbindungselement (30) zwischen der sich mit der untersetzten Drehbewegung drehenden Komponente und der ersten Drehkomponente (S3) ausrückbar verbindet;
wobei die reduzierte Drehbewegung durch Einrücken der dritten Kupplung (C3) zur ersten Drehkomponente (S3) übertragen wird;
wobei die zweite Kupplung (C2) in der axialen Richtung der Planetengetriebeeinheit (PU) betrachtet auf der anderen Seite angeordnet ist;
wobei die dritte Kupplung (C3) ein Reibungselement und eine Öldruck-Servoeinrichtung (13) aufweist, wobei die Öldruck-Servoeinrichtung (13) benachbart zum Untersetzungsplanetengetriebe in der axialen Richtung der Planetengetriebeeinheit (PU) betrachtet auf der gegenüberliegenden Seite angeordnet ist; und
wobei sechs Vorwärtsgangstufen und eine Rückwärtsgangstufe eingestellt werden können und im Fall der vierten Vorwärtsgangstufe die erste Kupplung (C1) und die zweite Kupplung (C2) eingerückt sind.

2. Automatikgetriebe mit:
einer Eingangswelle (2), die sich basierend auf einer Ausgangsdrehbewegung einer Antriebsquelle dreht;
einer Planetengetriebeeinheit (PU), die aus einer ersten, einer zweiten, einer dritten und einer vierten Drehkomponente (S3, S2, CR2 bzw. R3) besteht;
einer Einrichtung (PR) zum Ausgeben einer untersetzten Drehbewegung, die dazu geeignet ist, eine untersetzte Drehbewegung mit einer verminderten Drehzahl von der Eingangswelle (2) an die erste Drehkomponente (S3) auszugeben;
einer ersten Kupplung (C1), die die Eingangswelle (2) und die zweite Drehkomponente (S2) ausrückbar verbindet;
einer zweiten Kupplung (C2), die die Eingangswelle (2) und die dritte Drehkomponente (CR2) ausrückbar verbindet; und
einer Abtriebseinheit, die die Drehbewegung der vierten Drehkomponente (R3) an einen Antriebsrad-Kraftübertragungsmechanismus ausgibt,
wobei die Einrichtung (PR) zum Ausgeben einer untersetzten Drehbewegung und die erste Kupplung (C1) in der axialen Richtung der Planetengetriebeeinheit (PU) betrachtet auf einer Seite angeordnet sind, und
wobei die Einrichtung (PR) zum Ausgeben einer untersetzten Drehbewegung ferner eine Eingangsdrehkomponente zum permanenten Zuführen von Drehbewegungen der Eingangswelle (2), eine Fixierkomponente zum permanenten Fixieren von Drehbewegungen, ein Untersetzungsplanetengetriebe, das eine sich mit der untersetzten Drehbewegung drehende Komponente aufweist, und eine dritte Kupplung (C3) aufweist, die ein Verbindungselement (30) zwischen der sich mit der untersetzten Drehbewegung drehenden Komponente und der ersten Drehkomponente (S3) ausrückbar verbindet,
wobei die untersetzte Drehbewegung durch Einrücken der dritten Kupplung (C3) zur ersten Drehkomponente (S3) übertragen wird,
wobei die zweite Kupplung (C2) in der axialen Richtung der Planetengetriebeeinheit (PU) betrachtet auf der anderen Seite angeordnet ist,
wobei die dritte Kupplung ein Reibungselement und eine Öldruck-Servoeinrichtung aufweist, wobei die Öldruck-Servoeinrichtung (13) benachbart zum Untersetzungsplanetengetriebe in der axialen Richtung der Planetengetriebeeinheit (PU) betrachtet auf der gegenüberliegenden Seite angeordnet ist, und
wobei sechs Vorwärtsgangstufen und eine Rückwärtsgangstufe eingestellt werden können und im Fall der fünften Vorwärtsgangstufe die erste Kupplung und die zweite Kupplung eingerückt sind.

3. Automatikgetriebe nach Anspruch 1 oder 2,
wobei das Verbindungselement dazu geeignet ist, die Einrichtung zum Ausgeben einer untersetzten Drehbewegung mit der Planetengetriebeeinheit zu verbinden, und
wobei die erste Kupplung auf der Innenumfangsseite des Verbindungselements angeordnet ist.

4. Automatikgetriebe nach Anspruch 1, 2 oder 3, wobei die erste Kupplung auf der Innenumfangsseite der dritten Kupplung angeordnet ist.

5. Automatikgetriebe nach Anspruch 4, wobei die dritte Kupplung eine Trommeleinheit (25) und eine Nabeneinheit aufweist, die mit dem Reibungselement verbunden sind, wobei
die Nabeneinheit mit der sich mit der untersetzten Drehbewegung drehenden Komponente verbunden ist,
die Trommeleinheit (25) die Öldruck-Servoeinrichtung mit einem öldicht abgedichteten Kolben bildet und mit der ersten Drehkomponente verbunden ist, und
wobei die erste Kupplung auf der Innenumfangsseite der Trommeleinheit angeordnet ist.

6. Automatikgetriebe nach Anspruch 5,
wobei das Reibungselement der dritten Kupplung auf der Außenumfangsseite des Untersetzungsplanetengetriebes angeordnet ist.

7. Automatikgetriebe nach Anspruch 6,
wobei eine Öldruck-Servoeinrichtung einer ersten Bremse (B1) zum Blockieren der ersten Drehkomponente der Planetengetriebeeinheit, der die untersetzte Drehbewegung zugeführt wird, auf dem Außenumfang der Öldruck-Servoeinrichtung der dritten Kupplung (C3) angeordnet ist.

8. Automatikgetriebe nach einem der Ansprüche 1 bis 7,
wobei eine Befestigungskomponente des Untersetzungsplanetengetriebes auf einer ersten Vorsprungeinheit befestigt und angeordnet ist, die sich von einem Rand einer Seitenwand eines Gehäuses erstreckt;
die Öldruck-Servoeinrichtung der dritten Kupplung auf der Außenseite der ersten Vorsprungeinheit angeordnet ist;
eine Öldruck-Servoeinrichtung der zweiten Kupplung auf der Außenseite einer zweiten Vorsprungeinheit angeordnet ist, die sich vom anderen Rand einer Seitenwand des Gehäuses erstreckt;
die erste Kupplung benachbart zum Planetengetriebe angeordnet ist und außerdem ein Reibungselement und eine Öldruck-Servoeinrichtung zum Zuführen eines Drucks zum Reibungselement und eine Trommeleinheit und eine Nabeneinheit aufweist, die mit der Öldruck-Servoeinrichtung integral konfiguriert sind;
und wobei die Trommeleinheit mit der Eingangswelle verbunden ist.

9. Automatikgetriebe nach Anspruch 8,
wobei das Verbindungselement (30) dazu geeignet ist, die Einrichtung zum Ausgeben einer untersetzten Drehbewegung und die Planetengetriebeeinheit zu verbinden; und
wobei die dritte Kupplung auf der Innenumfangsseite des Verbindungselements angeordnet ist.

10. Automatikgetriebe nach Anspruch 9,
wobei die erste Kupplung und die dritte Kupplung in der axialen Richtung betrachtet auf der Innenumfangsseite des Verbindungselements benachbart zueinander angeordnet sind.

11. Automatikgetriebe nach Anspruch 10,
wobei die Öldruck-Servoeinrichtung (13) der dritten Kupplung (C3) dazu geeignet ist, dem Reibungselement der dritten Kupplung einen Druck zuzuführen,
wobei die Öldruck-Servoeinrichtung (13) in der axialen Richtung des Untersetzungsplanetengetriebes betrachtet auf der dem Reibungselement gegenüberliegenden Seite angeordnet ist,
und wobei die Trommeleinheit (25), die einen Zylinder der Öldruck-Servoeinrichtung bildet, mit der Eingangswelle verbunden ist.

12. Automatikgetriebe nach Anspruch 11, wobei die Öldruck-Servoeinrichtung der dritten Kupplung benachbart zur Öldruck-Servoeinrichtung der ersten Kupplung zwischen der Öldruck-Servoeinrichtung der ersten Kupplung und dem Reibungsmaterial der dritten Kupplung angeordnet ist.

13. Automatikgetriebe nach Anspruch 1 oder nach einem der Ansprüche 3 bis 12, soweit direkt oder indirekt abhängig von Anspruch 1, wobei in einem Drehzahl-Übersetzung-Diagramm, das die Drehzahlen der ersten, der zweiten, der dritten und der vierten Drehkomponente auf der vertikalen Achse und das Übersetzungsverhältnis der ersten, der zweiten, der dritten und der vierten Drehkomponente auf der horizontalen Achse zugeordnet darstellt, die erste Drehkomponente, der die untersetzte Drehbewegung zugeführt wird, in der horizontalen Richtung des Diagramms am äußersten Rand angeordnet ist, während die dritte Drehkomponente, die mit dem Abtriebselement verbundene vierte Drehkomponente und die zweite Drehkomponente in dieser Folge angeordnet sind.

14. Automatikgetriebe nach Anspruch 7,
wobei die Planetengetriebeeinheit ein Mehrfach-Planetengetriebe mit einem ersten Sonnenrad, einem mit dem ersten Sonnenrad kämmenden langen Ritzel, einem mit dem langen Ritzel kämmenden kurzen Ritzel, einem Träger zum drehbaren Halten des langen Ritzels und des kurzen Ritzels, einem mit dem kurzen Ritzel kämmenden zweiten Sonnenrad und einem mit dem langen Ritzel kämmenden Hohlrad ist,
wobei die erste Drehkomponente das erste Sonnenrad ist, dem die untersetzte Drehbewegung der Einrichtung zum Ausgeben einer untersetzten Drehbewegung zugeführt werden kann, und das dazu geeignet ist, durch Blockieren der ersten Bremse (B1) fixiert zu werden,
und wobei die zweite Drehkomponente das zweite Sonnenrad ist, dem Drehbewegungen der Eingangswelle durch Einrücken der ersten Kupplung zugeführt werden können,
und wobei die dritte Drehkomponente der Träger ist, dem die Drehbewegungen der Eingangswelle durch Einrücken der zweiten Kupplung zugeführt werden können, und der dazu geeignet ist, durch Blockieren einer zweiten Bremse fixiert zu werden,
und wobei die vierte Drehkomponente das mit dem Abtriebselement verbundene Hohlrad ist.

15. Automatikgetriebe nach Anspruch 7, mit einem Paar der Planetengetriebeeinheiten, die jeweils ein erstes Sonnenrad, ein mit dem ersten Sonnenrad verbundenes zweites Sonnenrad, einen mit dem ersten Sonnenrad kämmenden ersten Träger, einen mit dem zweiten Sonnenrad kämmenden zweiten Träger, ein mit dem zweiten Träger verbundenes erstes Hohlrad und ein mit dem zweiten Träger verbundenes zweites Hohlrad aufweisen,
wobei die erste Drehkomponente das zweite Hohlrad ist, dem die untersetzte Drehbewegung der Einrichtung zum Ausgeben einer untersetzten Drehbewegung zugeführt werden kann, und das dazu geeignet ist, durch Blockieren der ersten Bremse fixiert zu werden,
wobei die zweite Drehkomponente das erste Sonnenrad ist und dem zweiten Sonnenrad die Drehbewegungen der Eingangswelle durch Einrücken der ersten Kupplung zugeführt werden können,
wobei die dritte Drehkomponente der zweite Träger ist und dem ersten Hohlrad die Drehbewegungen der Eingangswelle durch Einrücken der zweiten Kupplung zugeführt werden können und die auch durch Blockieren einer zweiten Bremse fixiert werden kann,
und wobei die vierte Drehkomponente ein mit dem Abtriebselement verbundener erster Träger ist.

16. Automatikgetriebe nach Anspruch 14 oder 15,
wobei in der ersten Vorwärtsgangstufe die erste Kupplung eingerückt und die zweite Bremse blockiert ist,
und wobei in der zweiten Vorwärtsgangstufe die erste Kupplung eingerückt und die erste Bremse blockiert ist;
und wobei in der dritten Vorwärtsgangstufe der ersten Drehkomponente eine untersetzte Drehbewegung von der Einrichtung zum Ausgeben einer untersetzten Drehbewegung zugeführt wird und die erste Kupplung eingerückt ist,
und wobei in der vierten Vorwärtsgangstufe die erste Kupplung und die zweite Kupplung eingerückt sind,
und wobei in der fünften Vorwärtsgangstufe der ersten Drehkomponente eine untersetzte Drehbewegung von der Einrichtung zum Ausgeben einer untersetzten Drehbewegung zugeführt wird und die zweite Kupplung eingerückt ist,
und wobei in der sechsten Vorwärtsgangstufe die zweite Kupplung eingerückt und die erste Bremse blockiert ist,
und wobei in der ersten Rückwärtsgangstufe der ersten Drehkomponente eine untersetzte Drehbewegung von der Einrichtung zum Ausgeben einer untersetzten Drehbewegung zugeführt wird und die zweite Bremse blockiert ist,
wodurch sechs Vorwärtsgangstufen und eine Rückwärtsgangstufe eingestellt werden können.

17. Automatikgetriebe nach Anspruch 2 oder nach einem der Ansprüche 3 bis 12, soweit direkt oder indirekt abhängig von Anspruch 2, wobei in einem Drehzahl-Übersetzung-Diagramm, das die Drehzahlen der ersten, der zweiten, der dritten und der vierten Drehkomponente auf der vertikalen Achse und das Übersetzungsverhältnis der ersten, der zweiten, der dritten und der vierten Drehkomponente auf der horizontalen Achse zugeordnet darstellt, die erste Drehkomponente, der die untersetzte Drehbewegung zugeführt wird, in der horizontalen Richtung des Diagramms am äußersten Rand angeordnet ist, während die mit dem Abtriebselement verbundene vierte Drehkomponente, die dritte Drehkomponente und die zweite Drehkomponente in dieser Folge angeordnet sind.

18. Automatikgetriebe nach Anspruch 7,
wobei die Planetengetriebeeinheit ein Mehrfach-Planetengetriebe mit einem ersten Sonnenrad, einem mit dem ersten Sonnenrad kämmenden langen Ritzel, einem mit dem langen Ritzel kämmenden kurzen Ritzel, einem Träger zum drehbaren Halten des langen Ritzels und des kurzen Ritzels, einem mit dem kurzen Ritzel kämmenden zweiten Sonnenrad und einem mit dem langen Ritzel kämmenden Hohlrad ist,
wobei die erste Drehkomponente das zweite Sonnenrad ist, dem die untersetzte Drehbewegung der Einrichtung zum Ausgeben einer untersetzten Drehbewegung zugeführt werden kann, rücken der ersten Kupplung zugeführt werden können, und der dazu geeignet ist, durch Blockieren der ersten Bremse fixiert zu werden,
wobei die dritte Drehkomponente das erste Sonnenrad ist, dem Drehbewegungen der Eingangswelle durch Einrücken der zweiten Kupplung zugeführt werden können, und das dazu geeignet ist, durch Blockieren einer zweiten Bremse fixiert zu werden,
und wobei die vierte Drehkomponente das mit dem Abtriebselement verbundene Hohlrad ist.

19. Automatikgetriebe nach Anspruch 18,
wobei in der ersten Vorwärtsgangstufe der ersten Drehkomponente eine untersetzte Drehbewegung von der Einrichtung zum Ausgeben einer untersetzten Drehbewegung zugeführt wird und die erste Bremse blockiert ist,
und wobei in der zweiten Vorwärtsgangstufe der ersten Drehkomponente eine untersetzte Drehbewegung von der Einrichtung zum Ausgeben einer untersetzten Drehbewegung zugeführt wird und die zweite Bremse blockiert ist,
und wobei in der dritten Vorwärtsgangstufe der ersten Drehkomponente eine untersetzte Drehbewegung von der Einrichtung zum Ausgeben einer untersetzten Drehbewegung zugeführt wird und die zweite Kupplung eingerückt ist,
und wobei in der vierten Vorwärtsgangstufe der ersten Drehkomponente eine untersetzte Drehbewegung von der Einrichtung zum Ausgeben einer untersetzten Drehbewegung zugeführt wird und die erste Kupplung eingerückt ist,
und wobei in der fünften Vorwärtsgangstufe die erste Kupplung und die zweite Kupplung eingerückt sind,
und wobei in der fünften Vorwärtsgangstufe die erste Kupplung und die zweite Kupplung eingerückt sind,
und wobei in der sechsten Vorwärtsgangstufe die erste Kupplung eingerückt und die zweite Bremse blockiert ist,
und wobei in der ersten Rückwärtsgangstufe die zweite Kupplung eingerückt und die erste Bremse blockiert ist,
wodurch sechs Vorwärtsgangstufen und eine Rückwärtsgangstufe eingestellt werden können.

20. Automatikgetriebe nach einem der Ansprüche 1 bis 19, wobei die erste Kupplung in der axialen Richtung der Planetengetriebeeinheit betrachtet auf der dem Untersetzungsplanetengetriebe gegenüberliegenden Seite angeordnet ist.

21. Automatikgetriebe nach Anspruch 1 oder nach einem der Ansprüche 3 bis 6 oder nach Anspruch 20, soweit direkt oder indirekt abhängig von Anspruch 1, wobei die erste Kupplung eine Kupplung ist, die bei einer relativ niedrigen bis mittleren Gangstufe einrückt.

22. Automatikgetriebe nach Anspruch 2 oder nach einem der Ansprüche 3 bis 12 oder 17 bis 20, soweit direkt oder indirekt abhängig von Anspruch 2, wobei die zweite Kupplung eine Kupplung ist, die bei einer Rückwärtsgangstufe einrückt.

23. Automatikgetriebe nach einem der Ansprüche 1 bis 22,
wobei die erste Kupplung aufweist: eine Reibungsplatte, deren Innenumfangsseite mit einem Element keilverzahnt ist, das mit der zweiten Drehkomponente verfangsseite der Reibungsplatte keilverzahnt ist, ein erstes Kolbenelement zum Drücken der Reibungsplatte und eine erste Öldruckkammer der Öldruck-Servoeinrichtung, die zwischen der Innenumfangsseite des ersten Kolbenelements und dem ersten Trommelelement flüssigkeitsdicht abgedichtet ist,
und wobei die zweite Kupplung aufweist: eine Reibungsplatte, deren Innenumfangsseite mit einem Element keilverzahnt ist, das mit der dritten Drehkomponente verbunden ist, ein zweites Trommelelement, das eine Öldruck-Servoeinrichtung umschließt und mit der Außenumfangsseite der Reibungsplatte keilverzahnt ist und an der Innenumfangsseite eines mit der zweiten Drehkomponente verbundenen Elements angeordnet ist, ein zweites Kolbenelement zum Drücken der Reibungsplatte und eine zweite Öldruckkammer der Öldruck-Servoeinrichtung, die zwischen der Innenumfangsseite des zweiten Kolbenelements und der Eingangswelle und zwischen der Außenumfangsseite und dem zweiten Trommelelement flüssigkeitsdicht abgedichtet ist.

24. Automatikgetriebe nach einem der Ansprüche 1 bis 23,
wobei das Abtriebselement in der axialen Richtung zwischen der Planetengetriebeeinheit und der Einrichtung zum Ausgeben einer untersetzten Drehzahl angeordnet ist.

25. Automatikgetriebe nach einem der Ansprüche 1 bis 24, wobei das Abtriebselement in der axialen Richtung zwischen der Planetengetriebeeinheit und der zweiten Kupplung angeordnet ist.

26. Automatikgetriebe nach einem der Ansprüche 1 bis 25,
wobei die Einrichtung zum Ausgeben einer untersetzten Drehbewegung ein aus einem Doppelritzel-Planetengetriebe gebildetes Untersetzungsplanetengetriebe aufweist,
und wobei das Untersetzungsplanetengetriebe, die Planetengetriebeeinheit und das Abtriebselement koaxial mit der Eingangswelle angeordnet sind.

27. Automatikgetriebe nach einem der Ansprüche 1 bis 26,
ferner mit einer Differentialeinheit zum Ausgeben von Drehbewegungen an Antriebsräder und mit einer Vorgelegewelleneinheit, die mit der Differentialeinheit in Eingriff bringbar ist, wobei das Abtriebselement ein mit der Vorgelegewelleneinheit kämmendes Vorgelegezahnrad ist.

## Revendications

1. Transmission automatique comprenant :
un arbre d'entrée (2) qui tourne en fonction d'une rotation de sortie d'une source d'entraînement ;
une unité d'engrenage planétaire (PU) composée de premier, deuxième, troisième et quatrième composants de rotation (S3, S2, CR2 et R3, respectivement) ;
des moyens de sortie de rotation réduite (PR) capables de transmettre une rotation réduite audit premier composant de rotation (S3) à partir dudit arbre d'entrée (2), dans laquelle la vitesse de rotation est réduite ;
un premier embrayage (C1) qui relie ledit arbre d'entrée (2) et ledit deuxième composant de rotation (S2) de façon à pouvoir se dégager ;
un deuxième embrayage (C2) qui relie ledit arbre d'entrée (2) et ledit troisième composant de rotation (CR2) de façon à pouvoir se dégager ; et
une unité de sortie qui transmet la rotation dudit quatrième composant de rotation (R3) à un mécanisme de transmission de roue menante ;
dans laquelle lesdits moyens de sortie de rotation réduite (PR) et ledit premier embrayage (C1) sont configurés d'un côté dans la direction axiale de ladite unité d'engrenage planétaire (PU) ; et lesdits moyens de sortie de rotation réduite (PR) comprenant en outre un composant de rotation d'entrée pour communiquer les rotations dudit arbre d'entrée (2) à tous moments, un composant de fixation pour fixer les rotations à tous moments, un engrenage planétaire à réduction de vitesse qui a un composant de rotation réduite qui tourne à ladite rotation réduite, et un troisième embrayage (C3) qui peut relier un élément de liaison (30) entre ledit composant de rotation réduite et ledit premier composant de rotation (S3) de façon à pouvoir se dégager ;
dans laquelle ladite rotation réduite est transmise audit premier composant de rotation (S3) par la mise en prise dudit troisième embrayage (C3) ;
dans laquelle ledit deuxième embrayage (C2) est configuré de l'autre côté dans la direction axiale de ladite unité d'engrenage planétaire (PU) ;
dans laquelle ledit troisième embrayage (C3) comprend un élément de friction et un servomécanisme de pression d'huile (13), ledit servomécanisme de pression d'huile (13) étant disposé de manière attenante audit engrenage planétaire de réduction de vitesse du côté opposé de ladite unité d'engrenage planétaire (PU) dans la direction axiale ; et
dans laquelle six niveaux de vitesse de marche avant et un niveau de vitesse de marche arrière peuvent être obtenus, et dans le cas du quatrième niveau de vitesse de marche avant, ledit premier embrayage (C1) et ledit deuxième embrayage (C2) sont mis en prise.

2. Transmission automatique comprenant :
un arbre d'entrée (2) qui tourne en fonction d'une rotation de sortie d'une source d'entraînement ;
une unité d'engrenage planétaire (PU) composée de premier, deuxième, troisième et quatrième composants de rotation (S3, S2, CR2 et R3, respectivement) ;
des moyens de sortie de rotation réduite (PR) capables de transmettre une rotation réduite audit premier composant de rotation (S3) à partir dudit arbre d'entrée (2), dans laquelle la vitesse de rotation est réduite ;
un premier embrayage (C1) qui relie ledit arbre d'entrée (2) et ledit deuxième composant de rotation (S2) de façon à pouvoir se dégager ;
un deuxième embrayage (C2) qui relie ledit arbre d'entrée (2) et ledit troisième composant de rotation (CR2) de façon à pouvoir se dégager ; et
une unité de sortie qui communique la rotation dudit quatrième composant de rotation (R3) à un mécanisme de transmission de roue menante ;
dans laquelle lesdits moyens de sortie de rotation réduite (PR) et ledit premier embrayage (C1) sont configurés d'un côté dans la direction axiale de ladite unité d'engrenage planétaire (PU) ; et lesdits moyens de sortie de rotation réduite (PR) comprenant en outre un composant de rotation d'entrée pour communiquer les rotations dudit arbre d'entrée (2) à tous moments, un composant de fixation pour fixer les rotations à tous moments, un engrenage planétaire de réduction de vitesse qui a un composant de rotation réduite qui tourne à ladite rotation réduite, et un troisième embrayage (C3) qui peut relier un élément de liaison (30) entre ledit composant de rotation réduite et ledit premier composant de rotation (S3) de façon à pouvoir se dégager ;
dans laquelle ladite rotation réduite est transmise audit premier composant de rotation (S3) par la mise en prise dudit troisième embrayage (C3) ;
dans laquelle ledit deuxième embrayage (C2) est configuré de l'autre côté dans la direction axiale de ladite unité d'engrenage planétaire (PU) ;
dans laquelle ledit troisième embrayage comprend un élément de friction et un servomécanisme de pression d'huile, ledit servomécanisme de pression d'huile (13) étant disposé de manière attenante audit engrenage planétaire de réduction de vitesse du côté opposé de ladite unité d'engrenage planétaire (PU) dans la direction axiale ; et
dans laquelle six niveaux de vitesse de marche avant et un niveau de vitesse de marche arrière peuvent être obtenus, et dans le cas du cinquième niveau de vitesse de marche avant, ledit premier embrayage et ledit deuxième embrayage sont mis en prise.

3. Transmission automatique selon la revendication 1 ou 2,
dans laquelle ledit élément de liaison est adapté pour relier lesdits moyens de sortie de rotation réduite et ladite unité d'engrenage planétaire,
dans laquelle ledit premier embrayage est configuré sur le côté circonférentiel interne dudit élément de liaison.

4. Transmission automatique selon la revendication 1, 2 ou 3, dans laquelle ledit premier embrayage est configuré sur le côté circonférentiel interne dudit troisième embrayage.

5. Transmission automatique selon la revendication 4, ledit troisième embrayage comprenant une unité de tambour (25) et une unité de moyeu qui se lient avec ledit élément de friction, dans laquelle :
ladite unité de moyeu se lie avec ledit composant de rotation réduite ;
ladite unité de tambour (25) forme ledit servomécanisme de pression d'huile avec un piston scellé d'une manière étanche à l'huile, et se lie avec ledit premier composant de rotation ; et
ledit premier embrayage est configuré sur le côté circonférentiel interne de ladite unité de tambour.

6. Transmission automatique selon la revendication 5, dans laquelle l'élément de friction dudit troisième embrayage est positionné sur le côté circonférentiel externe dudit engrenage planétaire de réduction de vitesse.

7. Transmission automatique selon la revendication 6, dans laquelle un servomécanisme de pression d'huile d'un premier frein (B1) pour retenir ledit premier composant rotatif de ladite unité d'engrenage planétaire auquel la rotation réduite est communiquée, est configuré sur la circonférence externe du servomécanisme de pression d'huile dudit troisième embrayage (C3).

8. Transmission automatique selon l'une quelconque des revendications 1 à 7 :
dans laquelle un composant de fixation dudit engrenage planétaire de réduction de vitesse est fixe et configuré sur une première unité de bossage s'étendant à partir d'un bord d'une paroi latérale d'un carter ;
le servomécanisme de pression d'huile dudit troisième embrayage est configuré sur l'extérieur de ladite première unité de bossage ;
un servomécanisme de pression d'huile dudit deuxième embrayage est configuré sur l'extérieur d'une deuxième unité de bossage qui s'étend à partir d'un autre bord d'une paroi latérale dudit carter ;
ledit premier embrayage est configuré de manière attenante audit engrenage planétaire et comprend également un élément de friction et un servomécanisme de pression d'huile pour mettre sous pression ledit élément de friction, et une unité de tambour et une unité de moyeu configurées de manière solidaire avec ledit servomécanisme de pression ;
et ladite unité de tambour est reliée avec ledit arbre d'entrée.

9. Transmission automatique selon la revendication 8,
dans laquelle ledit élément de liaison (30) est adapté pour relier lesdits moyens de sortie de rotation réduite et ladite unité d'engrenage planétaire ; et
dans laquelle ledit troisième embrayage est disposé sur le côté circonférentiel interne dudit élément de liaison.

10. Transmission automatique selon la revendication 9, dans laquelle ledit premier embrayage et ledit troisième embrayage sont configurés de manière adjacente dans la direction axiale, sur le côté circonférentiel interne dudit élément de liaison.

11. Transmission automatique selon la revendication 10, dans laquelle le servomécanisme de pression d'huile (13) du troisième embrayage (C3) est adapté pour mettre sous pression ledit élément de friction du troisième embrayage ;
dans laquelle ledit servomécanisme de pression d'huile (13) est configuré sur le côté opposé dans la direction axiale dudit engrenage planétaire de réduction de vitesse sous la forme dudit élément de friction ;
et dans laquelle ladite unité de tambour (25) qui configure un cylindre dudit servomécanisme de pression d'huile est reliée avec ledit arbre d'entrée.

12. Transmission automatique selon la revendication 11, dans laquelle le servomécanisme de pression d'huile dudit troisième embrayage est configuré de manière attenante au servomécanisme de pression d'huile dudit premier embrayage, entre le servomécanisme de pression d'huile dudit premier embrayage et le matériau de friction dudit troisième embrayage.

13. Transmission automatique selon la revendication 1 ou l'une quelconque des revendications 3 à 12, dans la mesure où elle dépend directement ou indirectement de la revendication 1,
dans laquelle, dans un graphique de ligne de vitesse illustrant les révolutions desdits premier, deuxième, troisième et quatrième composants de rotation avec l'axe vertical, et le rapport de vitesse desdits premier, deuxième, troisième et quatrième composants de rotation avec l'axe horizontal d'une manière correspondante ;
ledit premier composant de rotation auquel ladite rotation réduite est communiqué, est positionné sur le bord le plus éloigné dans la direction horizontale, avec ledit troisième composant de rotation, ledit quatrième composant de rotation reliés audit élément de sortie, et audit deuxième composant de rotation correspondant dans cet ordre.

14. Transmission automatique selon la revendication 7, dans laquelle ladite unité d'engrenage planétaire est un engrenage planétaire de type multiple, comprenant un premier planétaire, un pignon long qui s'engrène avec ledit premier planétaire, un pignon court qui s'engrène avec ledit pignon long, un porteur pour supporter en rotation ledit pignon long et ledit pignon court, un deuxième planétaire s'engrenant avec ledit pignon court, et une couronne s'engrenant avec ledit pignon long ;
dans laquelle ledit premier composant de rotation est ledit premier planétaire capable de communiquer la rotation réduite desdits moyens de sortie de rotation réduite, et qui est capable d'être fixé par la retenue dudit premier frein (B1) ;
et dans laquelle ledit deuxième composant de rotation est ledit second planétaire capable de communiquer les rotations dudit arbre d'entrée par la mise en prise dudit premier embrayage ;
et dans laquelle ledit troisième composant de rotation est ledit porteur capable de communiquer les rotations dudit arbre d'entrée par la mise en prise dudit deuxième embrayage, et qui est capable d'être fixé par la retenue d'un deuxième frein ;
et dans laquelle ledit quatrième composant de rotation est ladite couronne reliée audit élément de sortie.

15. Transmission automatique selon la revendication 7, comprenant une paire desdites unités d'engrenage planétaire comprenant chacune un premier planétaire, un deuxième planétaire relié audit premier planétaire, un premier porteur s'engrenant avec ledit premier planétaire, un deuxième porteur s'engrenant avec ledit deuxième planétaire, une première couronne reliée audit deuxième porteur, et une deuxième couronne s'engrenant avec ledit deuxième porteur ;
dans laquelle ledit premier composant de rotation est ladite deuxième couronne capable de communiquer la rotation réduite desdits moyens de sortie de rotation réduite, et qui est capable d'être fixé par la retenue dudit premier frein ;
et dans laquelle ledit deuxième composant de rotation est ledit premier planétaire et ledit deuxième planétaire est capable de communiquer les rotations dudit arbre d'entrée par la mise en prise dudit premier embrayage ;
et dans laquelle ledit troisième composant de rotation est ledit deuxième porteur et ladite première couronne est capable de communiquer les rotations dudit arbre d'entrée par la mise en prise dudit deuxième embrayage, et peut également être fixé par la retenue d'un deuxième frein ;
et dans laquelle ledit quatrième composant de rotation est un premier porteur relié audit élément de sortie.

16. Transmission automatique selon la revendication 14 ou 15, dans laquelle, à la première vitesse de marche avant, ledit premier embrayage est mis en prise et ledit deuxième frein est retenu ;
et dans laquelle, à la deuxième vitesse de marche avant, ledit premier embrayage est mis en prise et ledit premier frein est retenu ;
et dans laquelle, à la troisième vitesse de marche avant, la rotation réduite est communiquée audit premier composant de rotation à partir desdits moyens de sortie de rotation réduite, et ledit premier embrayage est mis en prise ;
et dans laquelle, à la quatrième vitesse de marche avant, ledit premier embrayage et ledit deuxième embrayage sont tous deux mis en prise ;
et dans laquelle, à la cinquième vitesse de marche avant, la rotation réduite est communiquée audit premier composant de rotation à partir desdits moyens de sortie de rotation réduite, et ledit deuxième embrayage est mis en prise ;
et dans laquelle, à la sixième vitesse de marche avant, ledit deuxième embrayage est mis en prise et ledit premier frein est retenu ;
et dans laquelle, à la première vitesse de marche arrière, la rotation réduite est communiquée audit premier composant de rotation à partir desdits moyens de sortie de rotation réduite, et ledit deuxième frein est retenu ;
moyennant quoi on peut atteindre six niveaux de vitesse de marche avant et un niveau de vitesse de marche arrière.

17. Transmission automatique selon la revendication 2 ou l'une quelconque des revendications 3 à 12 dans la mesure où elle dépend directement ou indirectement de la revendication 2, dans laquelle, sur un graphique de ligne de vitesse illustrant les révolutions des premier, deuxième, troisième et quatrième composants de rotation avec l'axe vertical, et le rapport de vitesse desdits premier, deuxième, troisième et quatrième composants de rotation avec l'axe horizontal d'une manière correspondante ;
ledit premier composant de rotation auquel ladite rotation réduite est communiquée, est positionné sur le bord le plus éloigné dans la direction horizontale, avec ledit quatrième composant de rotation relié audit élément de sortie, audit troisième composant de rotation et audit deuxième composant de rotation, correspondant dans cet ordre.

18. Transmission automatique selon la revendication 7, dans laquelle ladite unité d'engrenage planétaire est un engrenage planétaire de type multiple, comprenant un premier planétaire, un pignon long qui s'engrène avec ledit premier planétaire, un pignon court qui s'engrène avec ledit pignon long, un porteur pour supporter en rotation ledit pignon long et ledit pignon court, un deuxième planétaire s'engrenant avec ledit pignon court, et une couronne s'engrenant avec ledit pignon long ;
dans laquelle ledit premier composant de rotation est ledit deuxième planétaire capable de communiquer la rotation réduite desdits moyens de sortie de rotation réduite ;
et dans laquelle ledit deuxième composant de rotation est ledit porteur capable de communiquer les rotations dudit arbre d'entrée par la mise en prise dudit premier embrayage, et qui peut être fixé par la retenue dudit premier frein ;
et dans laquelle ledit troisième composant de rotation est le premier planétaire capable de communiquer les rotations dudit arbre d'entrée par la mise en prise dudit deuxième embrayage, et qui peut être fixé par la retenue d'un deuxième frein ;
et dans laquelle ledit quatrième composant de rotation est ladite couronne reliée audit élément de sortie.

19. Transmission automatique selon la revendication 18, dans laquelle, à la première vitesse de marche avant, la rotation réduite est communiquée audit premier composant de rotation à partir desdits moyens de sortie de rotation réduite, et ledit premier frein est retenu ;
et dans laquelle, à la deuxième vitesse de marche avant, la rotation réduite est communiquée audit premier composant de rotation à partir desdits moyens de sortie de rotation réduite, et ledit deuxième frein est retenu ;
et dans laquelle à la troisième vitesse de marche avant, la rotation réduite est communiquée audit premier composant de rotation à partir desdits moyens de sortie de rotation réduite, et ledit deuxième embrayage est mis en prise ;
et dans laquelle, à la quatrième vitesse de marche avant, la rotation réduite est communiquée audit premier composant de rotation à partir desdits moyens de sortie de rotation réduite, et ledit premier embrayage est mis en prise ;
et dans laquelle, à la cinquième vitesse de marche avant, ledit premier embrayage et ledit deuxième embrayage sont tous deux mis en prise ;
et dans laquelle, à la sixième vitesse de marche avant, ledit premier embrayage est mis en prise et ledit deuxième frein est retenu ;
et dans laquelle, à la première vitesse de marche arrière, ledit deuxième embrayage est mis en prise et ledit premier frein est retenu ;
moyennant quoi on peut obtenir six niveaux de vitesse de marche avant, et un niveau de vitesse de marche arrière.

20. Transmission automatique selon l'une quelconque des revendications 1 à 19, dans laquelle ledit premier embrayage est configuré sur le côté opposé dans la direction axiale de ladite unité d'engrenage planétaire sous la forme dudit engrenage planétaire de réduction de vitesse.

21. Transmission automatique selon la revendication 1 ou l'une quelconque des revendications 3 à 16 ou la revendication 20 dans la mesure où elle dépend directement ou indirectement de la revendication 1, dans laquelle ledit premier embrayage est un embrayage qui se met en prise à un niveau de vitesse relativement faible à moyen.

22. Transmission automatique selon la revendication 2 ou l'une quelconque des revendications 3 à 12 ou 17 à 20 dans la mesure où elle dépend directement ou indirectement de la revendication 2, dans laquelle ledit deuxième embrayage est un embrayage qui se met en prise en marche arrière.

23. Transmission automatique selon l'une quelconque des revendications 1 à 22, dans laquelle ledit premier embrayage comprend une plaque de friction dont le côté circonférentiel interne est cannelé par rapport à un élément relié audit deuxième composant de rotation, un premier élément de tambour comprenant un servomécanisme de pression d'huile et qui est cannelé par rapport au côté circonférentiel externe de ladite plaque de friction, un premier élément de piston pour comprimer ladite plaque de friction, et une chambre de pression d'huile du premier servomécanisme de pression d'huile formée en rendant étanche le côté circonférentiel interne dudit premier élément de piston et ledit premier élément de tambour afin d'être étanche au liquide ;
et dans laquelle ledit deuxième embrayage comprend une plaque de friction dont le côté circonférentiel interne est cannelé par rapport à un élément relié audit troisième composant de rotation, un deuxième élément de tambour comprenant un servomécanisme de pression d'huile et qui est cannelé par rapport au côté circonférentiel externe de ladite plaque de friction, et est disposé dans le côté circonférentiel interne d'un élément relié audit deuxième composant de rotation, un deuxième élément de piston pour comprimer ladite plaque de friction et une seconde chambre de pression d'huile du servomécanisme de pression d'huile formée en réalisant une étanchéité entre le côté circonférentiel interne dudit deuxième élément de piston et ledit arbre d'entrée, et entre ledit côté circonférentiel externe et ledit deuxième élément de tambour, afin d'être étanche au liquide.

24. Transmission automatique selon l'une quelconque des revendications 1 à 23, dans laquelle ledit élément de sortie est disposé entre ladite unité d'engrenage planétaire et lesdits moyens de sortie de rotation réduite dans ladite direction axiale.

25. Transmission automatique selon l'une quelconque des revendications 1 à 24, dans laquelle ledit élément de sortie est disposé entre ladite unité d'engrenage planétaire et ledit deuxième embrayage dans ladite direction axiale.

26. Transmission automatique selon l'une quelconque des revendications 1 à 25, dans laquelle lesdits moyens de sortie de rotation réduite comprennent un engrenage planétaire de réduction de vitesse formé avec un engrenage planétaire à double pignon ;
et dans laquelle ledit engrenage planétaire de réduction de vitesse, ladite unité d'engrenage planétaire- et ledit élément de sortie sont prévus de manière coaxiale par rapport audit arbre d'entrée.

27. Transmission automatique selon l'une quelconque des revendications 1 à 26, comprenant en outre une unité de différentiel pour transmettre les rotations aux roues menantes, et une unité d'arbre de renvoi pour mettre en prise ladite unité de différentiel, dans laquelle ledit élément de sortie est un engrenage intermédiaire s'engrenant avec ladite unité d'arbre de renvoi.
